(19) Europäisches Patentamt
European Patent Office
Office européen des brevets

(11) EP 4 026 609 A1

(12) **EUROPEAN PATENT APPLICATION**
published in accordance with Art. 153(4) EPC

(43) Date of publication:
**13.07.2022 Bulletin 2022/28**

(21) Application number: **20860913.1**

(22) Date of filing: **03.09.2020**

(51) International Patent Classification (IPC):
***B01D 69/00*** (2006.01) ***B01D 69/04*** (2006.01)
***B01D 69/06*** (2006.01) ***B01D 69/08*** (2006.01)
***B01D 69/10*** (2006.01) ***B01D 69/12*** (2006.01)
***B01D 71/02*** (2006.01) ***B01D 71/04*** (2006.01)
***B01D 71/18*** (2006.01) ***B01D 71/20*** (2006.01)
***B01D 71/26*** (2006.01) ***B01D 71/34*** (2006.01)
***B01D 71/36*** (2006.01) ***B01D 71/38*** (2006.01)
***B01D 71/40*** (2006.01) ***B01D 71/50*** (2006.01)
***B01D 71/56*** (2006.01) ***B01D 71/60*** (2006.01)
***B01D 71/64*** (2006.01) ***B01D 71/68*** (2006.01)
***B32B 5/24*** (2006.01)

(52) Cooperative Patent Classification (CPC):
**B01D 69/00; B01D 69/04; B01D 69/06; B01D 69/08; B01D 69/10; B01D 69/12; B01D 71/02; B01D 71/04; B01D 71/18; B01D 71/20; B01D 71/26; B01D 71/34; B01D 71/36; B01D 71/38; B01D 71/40;** (Cont.)

(86) International application number:
**PCT/JP2020/033455**

(87) International publication number:
**WO 2021/045156 (11.03.2021 Gazette 2021/10)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **03.09.2019 JP 2019160667**

(71) Applicant: **Kyushu University, National University Corporation**
**Nishi-ku**
**Fukuoka-shi**
**Fukuoka 819-0395 (JP)**

(72) Inventors:
- **HOSHINO, Yu**
  **Fukuoka-shi, Fukuoka 819-0395 (JP)**
- **NAKAMURA, Daisuke**
  **Fukuoka-shi, Fukuoka 819-0395 (JP)**
- **LIU, Yida**
  **Fukuoka-shi, Fukuoka 819-0395 (JP)**
- **AKI, Shoma**
  **Fukuoka-shi, Fukuoka 819-0395 (JP)**
- **MIURA, Yoshiko**
  **Fukuoka-shi, Fukuoka 819-0395 (JP)**

(74) Representative: **Hoffmann Eitle**
**Patent- und Rechtsanwälte PartmbB**
**Arabellastraße 30**
**81925 München (DE)**

(54) **POROUS MEMBRANE, PRODUCTION METHOD THEREFOR, SEPARATION MEMBRANE, LAYERED MODULE, AND GAS PERMEATION MODULE**

(57) One aspect of the present disclosure provides a production method for a porous membrane including pores, and concave portions having an average opening diameter greater than an average pore diameter of the pores on at least one of a pair of main surfaces, the method including a step of forming the concave portion on a surface to be the main surface.



Processed by Luminess, 75001 PARIS (FR)

(Cont. next page)

*Fig.1*

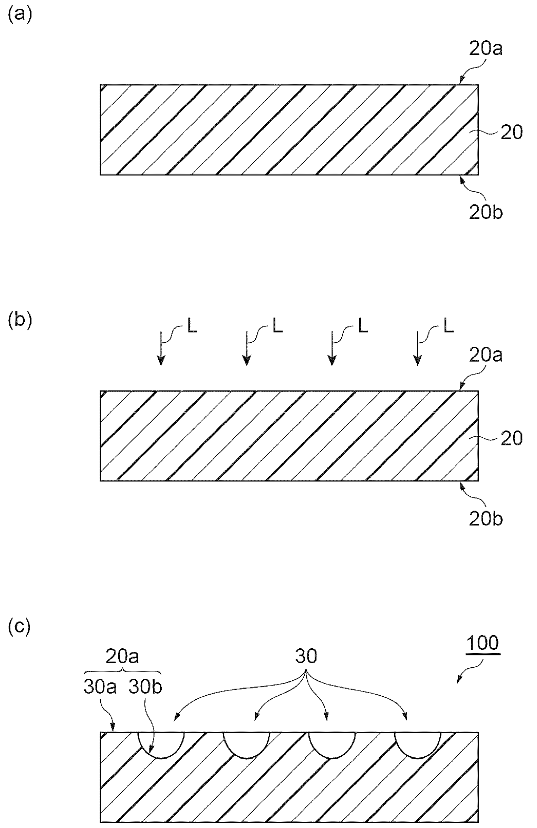


(52) Cooperative Patent Classification (CPC): (Cont.)
**B01D 71/50; B01D 71/56; B01D 71/60; B01D 71/64; B01D 71/68; B32B 5/24; C08F 220/18**

## Description

## Technical Field

The present disclosure relates to a porous membrane, a production method therefor, a separation membrane, a layered module, and a gas permeation module.

## Background Art

A porous membrane, for example, is used for a support membrane of a separation membrane, a dialysis membrane, a precision filtration membrane, an ultrafiltration membrane, and a water vapor permeation membrane, a separator of a battery, a base material of a cell culture, a support membrane of a total heat exchange membrane, a support membrane of a reverse osmosis membrane, a support membrane of a $CO_2$ permeation membrane, a thin-layer chromatography base material, a bioanalysis device material, and a microanalysis device base material, and the like. It is examined to improve the surface area of the porous membrane from the viewpoint of improving the efficiency of various treatments using the porous membrane. For example, in the $CO_2$ permeation membrane, it is required to improve the surface area of the porous membrane that is a support from the viewpoint of improving gas permeability.

A method for forming concavities and convexities on the surface of a porous membrane containing a polymeric material by surface processing of the porous membrane is considered. For example, a method for forming the concavities and convexities on the surface of the porous membrane by heating and softening the porous membrane, and then, by pressing the porous membrane against a mold is considered. However, softening or melting the polymeric material is capable of causing the reduction or the disappearance of the pores on the surface of the membrane. Since gas diffusion capability decreases due to the reduction or the disappearance of the pores, it is difficult to adopt such a method as a method for producing a support for a $CO_2$ permeation membrane.

Various processing methods for materials other than the polymeric material using short-pulse laser are examined (for example, Non Patent Literature 1). In Non Patent Literature 1, it is concluded that it is important for excellent material processing to apply short-pulse laser in a wavelength band where the material can be absorbed (single photon linear absorption). Therefore, it is also considered to process the surface of the porous membrane containing the polymeric material by using the short-pulse laser. However, the examination on the processing of the porous membrane including a plurality of pores has not been sufficiently conducted.

In addition, a method for producing a porous membrane on a mold including concavities and convexities on the surface is considered. For example, in Non Patent Literature 2, a method for forming a porous membrane by a non-solvent-induced phase separation method or a heat-induced phase separation method is described. According to such a method, phase separation occurs in a process where a polymer dissolved in a solvent is deposited due to the introduction of a poor solvent or a change in a temperature, and a porous structure can be formed. However, in such a method, since the shape and the size of the pore are controlled by an infiltration rate of the poor solvent or a transfer rate of heat from the surface of the membrane, a membrane having an asymmetric pore shape such as a difference in the distribution of pore diameters between one main surface and the other main surface of the membrane is formed. Therefore, condition control for forming holes to have a generally uniform concavo-convex structure is strict, there is a problem such as a difference in a pore structure between the upper portion and the lower portion of the mold or a blockage in the pore on the surface in contact with either the upper portion or the lower portion of the mold, and there is room for improvement.

## Citation List

### Non Patent Literature

Non Patent Literature 1: ITO Keiko and two others, "Ablation Characteristic of Macromolecular Material by Short-Pulse Laser Having Different Wavelengths", Japanese Journal of Polymer Science and Technology, November, 1991, Vol. 48, No. 11, pp. 725-735

Non Patent Literature 2: Laura Vogelaar, et al., "Phase Separation Micromolding: A New Generic Approach for Microstructuring Various Materials", small, 2005, 1, No. 6, p. 645-655

## Summary of Invention

### Technical Problem

An object of the present disclosure is to provide a production method for a porous membrane, which is capable of producing a porous membrane having a large surface area. Another object of the present disclosure is to provide a porous membrane having a large surface area. Another object of the present disclosure is to provide a separation membrane excellent in gas permeability. Another object of the present disclosure is to provide a layered module and a gas permeation module including the porous membrane described above.

### Solution to Problem

One aspect of the present disclosure provides a production method for a porous membrane including pores, and concave portions having an average opening diameter greater than an average pore diameter of the pores on at least one of a pair of main surfaces, the method including a step of forming the concave portion on a surface to be the main surface.

In the production method for a porous membrane, by including the step of forming the concave portions having an average opening diameter greater than the average pore diameter of the pores on at least one of the pair of main surfaces, it is possible to improve the surface area of at least one main surface of the porous membrane. Since the porous membrane to be obtained has a large surface area, it is possible to increase the number of pores existing on the surface and the total area of the pores existing on the surface. For example, when the porous membrane is used as a support membrane of a gas permeation membrane or a reverse osmosis membrane, it is possible to improve gas permeability of the gas permeation membrane to be obtained or water permeability of a water permeation membrane.

In addition, according to the production method for a porous membrane, since the pores of which the size and the shape are controlled can be maintained or formed on the surface of the concave portion to be formed, it is possible to increase an effective area contributing to filtration or the like, and to use the porous membrane as a separation membrane at a high flow rate over a longer period of time. In addition, by controlling a concavo-convex shape, in a membrane separation process of a solid content, it is possible to control and improve separation characteristics. Further, since a plurality of pores of which the size and the shape are controlled are capable of existing along the concavities and convexities, it is easy to form a dense separation layer along the concavities and convexities. Since the separation layer formed by such a method has a large effective membrane area compared to a case where there are no concavities and convexities, it is possible to obtain a separation membrane with high capability.

The step may include a step of irradiating a predetermined region on one main surface of a substrate including pores with pulsed laser having a pulse width of $10 \times 10^{-9}$ seconds or less and a wavelength of 200 nm or more to form concave portions having an average opening diameter greater than the average pore diameter of the pores on the main surface. By using the specific pulsed laser, it is possible to produce a porous membrane including concave portions on at least one main surface by suppressing a blockage in the pore due to the melting of a material or the like on the processed surface even in a case of the postprocessing of the substrate including the pores. By decreasing the pulse width, it is possible to form the concave portion by multiphoton absorption and/or a non-linear optical effect even in a case of laser in a wavelength band where the material is not originally absorbed.

In a surface processing technology of a polymeric material using the short-pulse laser of the related art, in order to perform excellent surface processing, it is preferable to use laser having large energy and a shorter wavelength (for example, an ultraviolet ray having a wavelength of 193 nm) (for example, Non Patent Literature 1). However, according to the examination of the present inventors, it has been found that in a case where a substrate to be a processing target includes pores, using short-wavelength laser is capable of causing partial melting of the material in the processed portion, thereby causing a blockage in the pore. In contrast, in the production method for a porous membrane, by using the laser having a long wavelength and by adjusting the pulse width, it is possible to form the concave portion on the surface of a base material while maintaining the pores on the processed surface by suppressing the melting of the material on the processed surface or the like.

The wavelength of the pulsed laser may be 500 nm or more. By setting the wavelength of the pulsed laser to 500 nm or more, it is possible to use a comparatively inexpensive light source, and to further reduce a production cost of the porous membrane. In the production method for a porous membrane, even in a case where the laser wavelength is comparatively long, it is possible to sufficiently process the substrate including the pores.

The step described above may be carried out while performing at least one type of operation selected from the group consisting of suction of gas in the vicinity of the predetermined region, introduction of air, reactive gas, or inert gas to the predetermined region, and adjustment of a temperature of the predetermined region. In other words, a suction device may be installed in the vicinity (the processed portion) of the predetermined region, the air, the reactive gas, or the inert gas may be introduced to the processed portion, or the temperature of the processed portion may be controlled

to a low temperature or a high temperature. Accordingly, it is possible to prevent the debris from being accumulated on the surface of the porous membrane and in the pores of the porous membrane by the processing of the concave portion using the pulsed laser.

The pores of the substrate may be filled with removable substances. In other words, laser processing may be performed after the pores are filled in advance with the substances that can be easily removed in the subsequent step. Accordingly, it is possible to prevent the debris and the meltage from being accumulated in the pores of the porous membrane by the processing of the concave portion using the pulsed laser.

The substrate may contain at least one type selected from the group consisting of metal fine particles and carbon particles in the one main surface and/or inside the substrate. In other words, at least one type selected from the group consisting of the metal fine particles and the carbon particles may be added to the surface of the porous membrane or inside the porous membrane. Accordingly, it is possible to more effectively form the concave portion by using the pulsed laser.

The production method for a porous membrane may further include a step of washing the concave portion after the concave portion is formed.

The substrate may contain at least one type selected from the group consisting of polyether sulfone (PES), polycarbonate (PC), nitrocellulose (NC), high-density polyethylene (HDPE), polytetrafluoroethylene (PTFE), polyvinylidene fluoride (HVDF), acetyl cellulose, polysulfone (PSU), polypropylene (PP), polyimide (PI), glass, alumina, silica, and a carbon fiber. By the substrate containing the specific materials described above, it is possible to more easily control the processed surface.

The substrate may contain at least one type selected from the group consisting of polyalkyl (meth)acrylate and polyethylene. By the substrate containing the specific materials described above, it is possible to more easily control the processed surface.

The step described above may include a step of forming a liquid membrane containing a polymerizable composition containing a polymerizable monomer and an initiator, and at least one type selected from the group consisting of ether, polyethylene glycol, water, and aliphatic alcohol having 8 or less carbon atoms on a surface of a mold including convex portions on the surface, and of causing polymerization reaction-induced phase separation in the liquid membrane by heating the liquid membrane or by irradiating the liquid membrane with light to form a substrate including pores, and to form concave portions having an average opening diameter greater than an average pore diameter of the pores on one main surface of the substrate. By allowing the polymerization reaction to proceed in the liquid membrane containing the polymerizable composition, the specific aliphatic alcohols, and the like, it is possible to cause the polymerization reaction-induced phase separation, and to form a base material including a plurality of comparatively uniform pores. In addition, in this step, by performing the polymerization reaction on the mold including the convex portions on the surface, it is possible to form the concave portions corresponding to the convex portions of the mold on the surface of the substrate containing the polymer to be obtained. According to such an action, it is possible to produce a porous membrane including pores, and a surface including specific concave portions.

In the step described above, since a polymerization reaction-induced phase separation method is used, it is possible to obtain a symmetric membrane having a generally uniform pore structure, and to reduce a difference in the pore structure between the upper portion and the lower portion of the concavities and convexities, which has been a problem in a non-solvent phase separation method and a heat-induced phase separation method.

The polymerizable monomer may include at least one type selected from the group consisting of a compound having one (meth)acryloyl group and a compound having two or more (meth)acryloyl groups. In a case where the polymerizable monomer includes the compound having a (meth)acryloyl group as described above, it is possible to improve the flexibility of the porous membrane to be obtained, and to improve handleability.

The polymerizable monomer may include a compound having one (meth)acryloyl group and a compound having two or more (meth)acryloyl groups. By the polymerizable monomer including a mixture of the compound having one (meth)acryloyl group and the compound having two or more (meth)acryloyl groups as described above, it is possible to form a cross-linked structure in the porous membrane, and to improve mechanical strength of the porous membrane to be obtained.

The compound having a (meth)acryloyl group may include at least one type selected from the group consisting of alkyl (meth)acrylic ester, a (meth)acrylic acid, glycidyl (meth)acrylate, 2-hydroxyethyl (meth)acrylate, hydroxypropyl (meth)acrylate, and polyethylene glycol (meth)acrylate. By the polymerizable monomer including the specific monomers described above, it is possible to more easily control the pores during the polymerization reaction-induced phase separation.

The aliphatic alcohol having 8 or less carbon atoms may include monohydric alcohol and dihydric alcohol. By the aliphatic alcohol having 8 or less carbon atoms including a mixture of the monohydric alcohol and the dihydric alcohol, it is possible to more easily control the pores during the polymerization reaction-induced phase separation.

One aspect of the present disclosure provides a porous membrane including pores, the porous membrane including a pair of main surfaces, and concave portions having an average opening diameter greater than an average

pore diameter of the pores on at least one of the pair of main surfaces.

Since the porous membrane includes the concave portions on at least one main surface, the porous membrane has a large surface area. Since the porous membrane has a comparatively large surface area, the number of pores existing on the surface and the total area of the pores existing on the surface, that is, an opening area increase. For example, when the porous membrane is used as a support membrane of a gas permeation membrane or a reverse osmosis membrane, it is possible to improve gas permeability of the gas permeation membrane to be obtained or water permeability of a water permeation membrane.

The average pore diameter of the pores on the one main surface may be in a range of 30 to 300% with respect to the average pore diameter of the pores in the concave portions.

A total surface pore area of the pores on the one main surface may be in a range of 20 to 500% by area with respect to a total surface pore area of the pores in the concave portions.

The average pore diameter of the pores may be 1 μm or less. By setting the average pore diameter of the porous membrane to 1 μm or less, the porous membrane is more excellent in mechanical strength.

The porous membrane may include a plurality of concave portions, and the average opening diameter of the concave portions may be 10 times or more the average pore diameter of the pores. In a case where the porous membrane includes the plurality of concave portions, and the average opening diameter of each of the concave portions is 10 times or more the average pore diameter of the pores, it is possible to further increase the surface area of the porous membrane.

The concave portion may be a groove formed on the main surface.

The thickness of the porous membrane may be 20 to 300 μm. By setting the thickness of the porous membrane to be in the range described above, the expansion of the porous membrane to various applications such as a support of a gas permeation membrane is facilitated.

The porous membrane may contain at least one type selected from the group consisting of polyether sulfone, polycarbonate, nitrocellulose, high-density polyethylene, polytetrafluoroethylene, polyvinylidene fluoride, acetyl cellulose, polysulfone, polypropylene, polyimide, glass, alumina, silica, and a carbon fiber. In a case where the porous membrane contains the components described above, since the size of the concave portion or the like is comparatively easily controlled, it is possible to reduce a production cost, and to provide the porous membrane at a comparatively low price.

The porous membrane may contain at least one type selected from the group consisting of polyalkyl (meth)acrylate and polyethylene. In a case where the porous membrane contains the components described above, since the size of the concave portion or the like is comparatively easily controlled, it is possible to reduce the production cost, and to provide the porous membrane at a comparatively low price.

The porous membrane may further include at least one type selected from the group consisting of an unwoven fabric and a mesh, or a support material. The porous membrane can be a composite membrane by including the support material or the like. In addition, in a case where other layers are provided on the porous membrane, it is possible to prevent the other layers from being impregnated in the pores to block the pore. In a case where the porous membrane includes the support material or the like, the thickness of the porous membrane including the support material may be 300 μm or more.

The porous membrane may contain at least one type selected from the group consisting of glass, alumina, and silica.

The porous membrane may be a membrane subjected to corrugation processing. In other words, the porous membrane can be a membrane of which the effective surface area is further increased by the corrugation processing.

The porous membrane may configure a flat membrane, a tubular membrane, or a hollow yarn.

The porous membrane may be used in a support of a gas permeation membrane. Since the porous membrane has a large surface area compared to a product of the related art, in a case where the porous membrane is used in a support membrane of a gas permeation membrane, it is possible to improve gas permeability of the gas permeation membrane.

One aspect of the present disclosure provides a separation membrane including the porous membrane described above, and a gas permeation layer or a water permeation layer provided on the porous membrane.

Since the separation membrane includes the porous membrane described above, the separation membrane is excellent in gas permeability.

The gas permeation layer may contain gelable polymeric particles having at least one type of functional group selected from the group consisting of a basic functional group and an acidic functional group. By the gas permeation layer containing the gelable polymeric particles, it is possible to improve gas separation selectivity of the separation membrane.

The gas permeation layer or the water permeation layer may contain at least one type selected from the group consisting of alkanol amine, polyvalent amine, piperazine, hindered amine, polyvinyl alcohol, polyethylene imine, polyvinyl amine, a molten salt, polyamide, and aromatic polyamide.

One aspect of the present disclosure provides a layered module including a unit in which two or more porous

membranes including concave portions provided on at least one main surface are layered, in which the porous membrane is the porous membrane described above.

One aspect of the present disclosure provides a layered module including a unit in which two or more porous membranes including groove portions provided on at least one main surface are layered, in which the porous membrane is the porous membrane described above.

By including the porous membrane in which the groove portions are provided on the main surface, the layered module has a large surface area, and it is possible to suppress a volume necessary for exhibiting capability equivalent to that of a layered module of the related art to be small. In addition, since the layered module includes the layered porous membranes including grooves on the surface, even in a case where the porous membranes are directly layered on each other, it is possible to allow fluid (gas, liquid, or the like) to pass through a space to be formed by the groove portions, and it is not necessary to provide a spacer layer that is provided in the layered module of the related art. Accordingly, it is possible to decrease the size of the layered module. The layered module can be used as a separation module for various membrane separations.

One aspect of the present disclosure provides a layered module including a unit in which two or more porous membranes including two or more types of concave portions provided on at least one main surface are layered, in which at least one type of the concave portions is a groove portion, and the porous membrane is the porous membrane described above.

One aspect of the present disclosure provides a layered module including a unit in which two or more porous membranes including through holes and concave portions provided on at least one main surface are layered, in which the porous membrane is the porous membrane described above.

One aspect of the present disclosure provides a gas permeation module including one or more units including two or more separation membranes in which groove portions for conveying mixed gas are provided on a first main surface and groove portions for conveying sweep gas are provided on a second main surface, in which the separation membrane includes a support including the porous membrane described above, and a gas permeation layer provided on the support, and the groove portions for conveying the mixed gas are separated from the groove portions for conveying the sweep gas by the gas permeation layer or a diffusion prevention layer.

The gas permeation module includes the separation membrane including groove portions on both main surfaces. One of the groove portions is a line for conveying the mixed gas containing separation target gas, and the other of the groove portions is a line for diffusing the separation target gas separated via the gas permeation layer to the sweep gas to be ejected out of the module along with the sweep gas. Then, in the separation membrane, since the groove portions for conveying the mixed gas and the groove portions for conveying the sweep gas are separated by the gas permeation layer or the diffusion prevention layer, it is possible to prevent the mixed gas and the sweep gas from being mixed, to prevent another gas component of the mixed gas from being mixed again with the separation target gas separated from the mixed gas, and to efficiently separate target gas. In addition, by including the porous membrane in which the groove portions are provided on the main surface, the gas permeation module has a large surface area, and it is possible to suppress a volume necessary for exhibiting capability equivalent to that of a gas permeation module of the related art to be small.

The unit may include a first separation membrane and a second separation membrane as the separation membrane, and the first separation membrane and the second separation membrane may be arranged such that a first main surface of the first separation membrane and a first main surface of the second separation membrane face each other. For example, in a case where it is not possible to ensure a large depth of the groove portion due to mechanical strength of the porous membrane, or the like, it is possible to increase the sectional surface of a flow channel of the mixed gas by arranging the first main surfaces (the surface including the groove portions for conveying the mixed gas) of the two separation membranes to face each other. In order to more reliably obtain the effect described above, it is desirable to provide the groove portions of the first separation membrane to correspond to the groove portions of the second separation membrane.

The unit may include a first separation membrane and a second separation membrane as the separation membrane, and a porous layer may be provided between a first main surface of the first separation membrane and a second main surface of the second separation membrane, and the porous layer may include a gas permeation layer or a diffusion prevention layer on at least one main surface of a main surface on the first separation membrane side and a main surface on the second separation membrane side.

The porous layer may include the gas permeation layer or the diffusion prevention layer on the main surface of the porous layer on the first separation membrane side. By the porous layer including the gas permeation layer or the like on the main surface side of the first separation membrane, it is possible to further prevent the mixed gas from being diffused via the porous layer.

One aspect of the present disclosure provides a gas permeation module including one or more units including a first separation membrane in which groove portions for conveying mixed gas are provided on at least one main surface and a second separation membrane in which groove portions for conveying sweep gas are provided on at least one

main surface, in which at least one of the first separation membrane and the second separation membrane includes a support including the porous membrane described above, and a gas permeation layer provided on the support, and the groove portions for conveying the mixed gas are separated from the groove portions for conveying the sweep gas by the gas permeation layer or a diffusion prevention layer.

The gas permeation module includes two or more separation membranes including the groove portions on at least one main surface. One of the groove portions is a line for conveying the mixed gas containing separation target gas, and the other of the groove portions is a line for diffusing the separation target gas separated via the gas permeation layer to the sweep gas to be ejected out of the module along with the sweep gas. Then, in the separation membrane, since the groove portions for conveying the mixed gas and the groove portions for conveying the sweep gas are separated by the gas permeation layer or the diffusion prevention layer, it is possible to prevent the mixed gas and the sweep gas from being mixed, to prevent another gas component of the mixed gas from being mixed again with the separation target gas separated from the mixed gas, and to efficiently separate target gas. In addition, by including the porous membrane in which the groove portions are provided on the main surface, the gas permeation module has a large surface area, and it is possible to suppress a volume necessary for exhibiting capability equivalent to that of a gas permeation module of the related art to be small.

The groove portions provided on the main surface of the second separation membrane may be arranged to face the groove portions provided on the main surface of the first separation membrane, a porous layer may be provided between the first separation membrane and the second separation membrane, and the porous layer may include a gas permeation layer or a diffusion prevention layer on at least one main surface of a main surface on the first separation membrane side and a main surface on the second separation membrane side.

The porous layer may include the gas permeation layer or the diffusion prevention layer on the main surface of the porous layer on the first separation membrane side. By the porous layer including the gas permeation layer or the like on the main surface side of the first separation membrane, it is possible to further prevent the mixed gas from being diffused via the porous layer.

## Advantageous Effects of Invention

According to the present disclosure, it is possible to provide a production method for a porous membrane, which is capable of producing a porous membrane having a large surface area. In addition, according to the present disclosure, it is possible to provide a porous membrane having a large surface area. In addition, according to the present disclosure, it is possible to provide a separation membrane excellent in gas permeability. In addition, according to the present disclosure, it is possible to provide a layered module and a gas permeation module including the porous membrane described above.

## Brief Description of Drawings

FIG. 1 is a schematic view for describing an example of a production method for a porous membrane.
FIG. 2 is a schematic view for describing an example of the production method for a porous membrane.
FIG. 3 is a schematic view illustrating an example of a porous membrane.
FIG. 4 is a sectional view taken along line IV-IV of FIG. 3.
FIG. 5 is a schematic view illustrating an example of the porous membrane.
FIG. 6 is a sectional view taken along line VI-VI of FIG. 5.
FIG. 7 is a schematic view illustrating an example of the porous membrane.
FIG. 8 is a sectional view taken along line VIII-VIII FIG. 7.
FIG. 9 is a schematic sectional view for describing an example of a gas permeation membrane.
FIG. 10 is a perspective view for describing a configuration of a gas permeation module.
FIG. 11 is a schematic perspective view illustrating an example of the gas permeation module.
FIG. 12 is a schematic view illustrating a part of a sectional surface of the gas permeation module taken along line XII-XII illustrated FIG. 11.
FIG. 13 is a schematic view illustrating a part of a sectional surface of the gas permeation module taken along line XIII-XIII illustrated in FIG. 11.
FIG. 14 is a perspective view illustrating another example of the gas permeation module.
FIG. 15 is a schematic view when seen from an upper surface of a separation membrane 540 positioned in the center of separation membranes configuring a separation layer.
FIG. 16 is a partial enlarged view of a top view of the separation membrane 540.
FIG. 17 is a partial enlarged view of a bottom view of the separation membrane 540.

FIG. 18 is a perspective view illustrating another example of the gas permeation module.
FIG. 19 is a schematic view when seen from an upper surface of a separation membrane 560.
FIG. 20 is a partial enlarged view of a top view of the separation membrane 560.
FIG. 21 is a partial enlarged view of a bottom view of the separation membrane 560.
FIG. 22 is a perspective view illustrating another example of the gas permeation module.
FIG. 23 is a schematic view illustrating a part of a sectional surface of the gas permeation module taken along line XXIII-XXIII illustrated in FIG. 22.
FIG. 24 is a perspective view illustrating another example of the gas permeation module.
FIG. 25 is a schematic view illustrating a part of a sectional surface of the gas permeation module taken along line XXV-XXV illustrated in FIG. 24.
FIG. 26 is a perspective view illustrating another example of the gas permeation module.
FIG. 27 is a schematic view illustrating a part of a sectional surface of the gas permeation module taken along line XXVII-XXVII illustrated in FIG. 26.
FIG. 28 is a schematic view illustrating a part of a sectional surface of the gas permeation module taken along line XXVIII-XXVIII illustrated in FIG. 26.
FIG. 29 is a schematic view for describing arrangement of through holes 42 and groove portions 32 of the gas permeation module illustrated in FIG. 26.
FIG. 30 is a SEM photograph illustrating a part of a porous membrane formed by pulsed laser processing in Example 1.
FIG. 31 is a SEM photograph illustrating a part of a porous membrane formed by pulsed laser processing in Example 2.
FIG. 32 is a SEM photograph illustrating a part of a porous membrane formed by pulsed laser processing in Reference Example 1.
FIG. 33 is a SEM photograph illustrating a part of a porous membrane formed by pulsed laser processing in Example 3.
FIG. 34 is a SEM photograph illustrating a part of a porous membrane formed by pulsed laser processing in Example 4.
FIG. 35 is a SEM photograph illustrating a part of a porous membrane formed by pulsed laser processing in Reference Example 2.
FIG. 36 is a SEM photograph (top view) illustrating a part of a porous membrane formed by polymerization reaction-induced phase separation in Example 5.
FIG. 37 is a SEM photograph illustrating a part of a main surface of the porous membrane formed by the polymerization reaction-induced phase separation in Example 5.
FIG. 38 is a SEM photograph illustrating a bottom surface of a concave portion of the porous membrane formed by the polymerization reaction-induced phase separation in Example 5.
FIG. 39 is a SEM photograph illustrating a partial sectional surface of the porous membrane formed by the polymerization reaction-induced phase separation in Example 5.
FIG. 40 is a SEM photograph illustrating a part of the main surface of the porous membrane formed by the polymerization reaction-induced phase separation in Example 5.
FIG. 41 is a SEM photograph illustrating a part of a lateral surface of a porous membrane formed by the polymerization reaction-induced phase separation when using a linear mold in Example 5.
FIG. 42 is a SEM photograph illustrating a partial sectional surface of the porous membrane formed by the polymerization reaction-induced phase separation when using the linear mold in Example 5.
FIG. 43 is a SEM photograph illustrating a part of a main surface of a porous membrane formed by non-solvent-induced phase separation in Reference Example 3.
FIG. 44 is a SEM photograph illustrating a partial sectional surface of the porous membrane formed by the non-solvent-induced phase separation in Reference Example 3.
FIG. 45 is a SEM photograph illustrating a part of a main surface of a porous membrane formed by non-solvent-induced phase separation in Reference Example 4.
FIG. 46 is a SEM photograph illustrating a partial sectional surface of the porous membrane formed by the non-solvent-induced phase separation in Reference Example 4.
FIG. 47 is a SEM photograph illustrating a part of the porous membrane prepared in Example 1.
FIG. 48 is a SEM photograph illustrating a part of a separation membrane using the porous membrane prepared in Example 1 as a support.
FIG. 49 is a SEM photograph illustrating a sectional surface of a separation membrane in a case of using the porous membrane prepared in Example 5 as a support.
FIG. 50 is a SEM photograph illustrating a surface of a separation membrane in a case of using the porous membrane prepared by using the linear mold in Example 5 as a support.
FIG. 51 is a SEM photograph illustrating a sectional surface of the separation membrane in a case of using the porous membrane prepared by using the linear mold in Example 5 as a support.
FIG. 52 is a schematic view illustrating a configuration of a gas permeation capability measurement device.
FIG. 53 is a graph illustrating a result of using the separation membrane prepared by using the porous membrane

obtained in Example 5.

FIG. 54 is a graph illustrating a result of using the separation membrane prepared by using the porous membrane obtained in Example 5.

FIG. 55 is a graph illustrating a result of using a gas permeation membrane prepared by using the porous membrane obtained in Example 5.

FIG. 56 is a SEM photograph (top view) of a separation membrane prepared by using a porous membrane (Pitch between Concave Portions: 45 μm) formed by pulsed laser processing.

FIG. 57 is a SEM photograph (top view) of a separation membrane prepared by using a porous membrane (Pitch between Concave Portions: 30 μm) formed by pulsed laser processing.

FIG. 58 is a graph illustrating an evaluation result of using the separation membrane illustrated in FIG. 56.

FIG. 59 is a graph illustrating an evaluation result of using the separation membrane illustrated in FIG. 43.

FIG. 60 is a schematic view illustrating a dimension of the porous membrane prepared in Example 6.

FIG. 61 is a photograph illustrating an appearance of the porous membrane prepared in Example 6.

FIG. 62 is a SEM image when a part of a plurality of groove portions formed on a main surface of a microporous membrane is seen from an upper surface.

FIG. 63 is a SEM image in which a part of the groove portions is further enlarged.

FIG. 64 is a SEM image in which the plurality of groove portions formed on the main surface of the microporous membrane are checked from a sectional direction.

FIG. 65 is a SEM image when seen from an upper surface of a separation membrane.

FIG. 66 is a SEM image when seen from a sectional direction of the separation membrane.

FIG. 67 is a SEM image illustrating a part of a sectional surface of a gas permeation module A.

FIG. 68 is a SEM image illustrating a part of the sectional surface of the gas permeation module A.

FIG. 69 is a SEM image illustrating a part of a sectional surface of a gas permeation module B.

FIG. 70 is a SEM image illustrating a part of the sectional surface of the gas permeation module B.

## Description of Embodiments

Hereinafter, embodiments of the present disclosure will be described with reference to the drawings in some cases. However, the following embodiments are an example for describing the present disclosure, and the present disclosure is not limited to the following contents. A positional relationship such as the left, the right, the top, and the bottom is based on a positional relationship illustrated in the drawings, unless otherwise noted. A dimensional ratio of each element is not limited to a ratio illustrated in the drawings.

One type of materials exemplified herein can be used alone, or two or more types thereof can be used in combination, unless otherwise noted. In a case where there are a plurality of substances corresponding to each component in a composition, the content of each of the components in the composition indicates the total amount of the plurality of substances in the composition, unless otherwise noted.

One embodiment of a production method for a porous membrane is a production method for a porous membrane including pores, and concave portions having an average opening diameter greater than an average pore diameter of the pores on at least one of a pair of main surfaces, the method including a step of forming the concave portion on a surface to be the main surface.

For example, in a case where the concave portion is in the shape of a pore, the average opening diameter of the concave portions indicates the diameter of the pore, and in a case where the concave portion is in the shape of a groove, the average opening diameter of the concave portions indicates a line width of the groove. In a case where there are a plurality of diameters corresponding to the diameter and the line width, the average opening diameter of the concave portions indicates a minor diameter. For example, in a case where the concave portion is in the shape of an ellipse when seen from an upper surface, the average opening diameter of the concave portions is an average value of opening diameters derived from short axes of the ellipses. The average opening diameter of the concave portions can be determined by a SEM photograph of the porous membrane or image analysis with a laser scanning microscope. Specifically, opening diameters of 50 concave portions in a SEM photograph are measured, and an average value thereof is set to the average opening diameter.

The production method for a porous membrane according to the present disclosure, for example, may be a method for forming a porous membrane by irradiating the surface of a substrate including pores (for example, a microporous membrane or the like) with pulsed laser to cause laser ablation, and to form concave portions on the surface. That is, in the production method for a porous membrane, the step of forming the concave portion may include a step of irradiating a predetermined region on one main surface of a substrate including pores with pulsed laser having a pulse width of $10 \times 10^{-9}$ seconds or less and a wavelength of 200 nm or more to form concave portions having an average opening diameter greater than an average pore diameter of the pores on the main surface.

FIG. 1 is a schematic view for describing an example of the production method for a porous membrane. FIG.

1(a) illustrates a sectional view of a substrate 20 including pores. The substrate 20 includes a first main surface 20a and a second main surface 20b. The substrate 20 may be a substrate including a plurality of pores (not illustrated) in which at least a part of the pores are connected to form a continuous pore. As the substrate 20, a substrate that is generally used as a porous membrane can be used.

An upper limit value of an average pore diameter of the pores in the substrate 20, for example, may be 1 μm or less, 500 nm or less, 300 nm or less, or 100 nm or less. A lower limit value of the average pore diameter of the pores in the substrate 20, for example, may be 1 nm or more, 5 nm or more, 10 nm or more, or 20 nm or more. By setting the lower limit value of the average pore diameter of the pores in the substrate 20 to be in the range described above, it is possible to further reduce a blockage in the pore on the processed surface due to the irradiation of pulsed laser. The average pore diameter of the pores in the substrate 20 may be adjusted to be in the range described above, and for example, may be 1 nm or more and 1 μm or less, 1 to 500 nm, or 5 to 100 nm.

Herein, in a case where the pore is in the shape of an ellipse when seen from an upper surface, the average pore diameter of the pores is an average value of opening diameters derived from short axes of the ellipses. The average pore diameter can be determined by a SEM photograph of the surface of the porous membrane or image analysis with a laser scanning microscope. Specifically, pore diameters of 50 pores in a SEM photograph are measured, and an average value thereof is set to the average pore diameter.

The substrate 20, for example, may contain a polymeric compound, and consist of a polymeric compound. The substrate 20, for example, may contain at least one type selected from the group consisting of polyether sulfone (PES), polycarbonate (PC), nitrocellulose (NC), high-density polyethylene (HDPE), polytetrafluoroethylene (PTFE), polyvinylidene fluoride (HVDF), acetyl cellulose, polysulfone (PSU), polypropylene (PP), polyimide (PI), glass, alumina, silica, and a carbon fiber (CF), contain at least one type selected from the group consisting of polyether sulfone, polycarbonate, nitrocellulose, high-density polyethylene, polytetrafluoroethylene, polyvinylidene fluoride, acetyl cellulose, polysulfone, polypropylene, and polyimide, contain at least one type selected from the group consisting of polyether sulfone, polycarbonate, and nitrocellulose, or consist of the materials described above. By the substrate containing the specific materials described above, it is possible to more easily control the processed surface. In a case where the substrate 20 contains at least one type selected from the group consisting of high-density polyethylene (HDPE), polytetrafluoroethylene (PTFE), and polyvinylidene fluoride (HVDF), since the absorption of the pulsed laser is small, and it is possible to suppress heat generation due to relaxation after the irradiation of the pulsed laser, it is possible to perform surface processing with a higher accuracy.

The substrate 20, for example, may contain at least one type selected from the group consisting of polyalkyl (meth)acrylate and polyethylene, contain a cellulose nanofiber, or contain at least one type selected from the group consisting of poly(meth)acrylate, polyglycidyl (meth)acrylate, poly 2-hydroxyethyl (meth)acrylate, polyhydroxypropyl (meth)acrylate, and polypolyethylene glycol (meth)acrylate.

In addition, the substrate 20, for example, may contain at least one type selected from the group consisting of glass, alumina, and silica, or consist of at least one type selected from the group consisting of alumina and silica.

As the substrate 20, a substrate in which the pores are filled with removable substances can be used. The removable substances are desirably substances that are easily removed by washing with a solvent in which the substrate 20 and a support membrane are not dissolved. Examples of the removable substances include glycerin, ethylene glycol, alcohol, a carboxylic acid, ester, paraffin, and the like. In addition, the substrate 20 may contain at least one type selected from the group consisting of metal fine particles and carbon particles in the one main surface and/or inside the substrate 20.

FIG. 1(b) illustrates a step of irradiating a predetermined region on the first main surface 20a of the substrate 20 with pulsed laser L. According to such a step, in a portion irradiated with the pulsed laser L on the first main surface 20a of the substrate 20, a part of the constituent material of the substrate 20 is removed by laser ablation to form the concave portion. The portion irradiated with the pulsed laser L can be randomly adjusted. The irradiation may be performed a plurality of times while gradually shifting an irradiation position of the pulsed laser L, and in such a case, the shape of the concave portion can be adjusted in accordance with the pitch of the irradiation position, the groove portion can be formed on the first main surface 20a of the substrate 20, and a desired shape can be depicted. In addition, by adjusting the number of times for performing the irradiation of the pulsed laser, pulse intensity during the irradiation, and the like, it is possible to form concave portions having various sizes and depths on one surface.

An upper limit value of the pulse width of the pulsed laser L is $10 \times 10^{-9}$ seconds or less, and for example, may be $1 \times 10^{-9}$ seconds or less, $100 \times 10^{-12}$ seconds or less, $50 \times 10^{-12}$ seconds or less, or $25 \times 10^{-12}$ seconds or less. By setting the upper limit value of the pulse width of the pulsed laser L to be in the range described above, it is possible to perform excellent surface processing even in a case of decreasing monopulse intensity of irradiation laser. In addition, by setting the upper limit value of the pulse width to be in the range described above, it is possible to sufficiently suppress a blockage in the pore due to the melting of the constituent material of the substrate 20, or the like. A lower limit value of the pulse width of the pulsed laser L, for example, may be $10 \times 10^{-15}$ seconds or more, or $100 \times 10^{-15}$ seconds or more. By setting the lower limit value of the pulse width of the pulsed laser L to be in the range described above, it is possible to more easily form the concave portion. The pulse width of the pulsed laser L can be adjusted in the range

described above, and for example, may be $10 \times 10^{-15}$ to $10 \times 10^{-9}$ seconds, or $100 \times 10^{-15}$ to $15 \times 10^{-12}$ seconds.

A lower limit value of the wavelength of the pulsed laser L is 200 nm or more, and for example, may be 248 nm or more, 351 nm or more, 500 nm or more, or 532 nm or more. By setting the lower limit value of the wavelength of the pulsed laser L to be in the range described above, it is possible to sufficiently suppress a blockage in the pore due to the melting of the constituent material of the substrate 20, or the like. An upper limit value of the wavelength of the pulsed laser L, for example, may be 2000 nm or less, or 1064 nm or less. By setting the upper limit value of the wavelength of the pulsed laser L to be in the range described above, it is possible to more easily perform the surface processing. The wavelength of the pulsed laser L can be adjusted in the range described above, and for example, may be 200 to 2000 nm, 248 to 2000 nm, or 532 to 1064 nm.

The pulse width and the wavelength of the pulsed laser L can be suitably selected to adjust the energy of the laser to be applied to the surface of the substrate 20, and for example, may be determined on the basis of supply energy (fluence) per unit area. The fluence can be adjusted in accordance with the constituent material of the substrate, or the like, and for example, the pulse width and the wavelength of the pulsed laser to be applied can be selected to be 0.2 to 6 $J/cm^2$, 0.5 to 6 $J/cm^2$, 0.5 to 3 $J/cm^2$, 0.5 to 2 $J/cm^2$, or 0.5 to 1 $J/cm^2$.

An irradiation time and the number of times for performing the irradiation of the pulsed laser L can be adjusted in accordance with the required size (the diameter, the depth, or the like) of the concave portion. Note that, as the irradiation time for the pulsed laser L increases and as the number of times for performing the irradiation of the pulsed laser L increases, it is possible to increase the depth of the concave portion and to increase the diameter.

As the laser, it is possible to use a light source according to the wavelength of the pulsed laser to be used. As the laser, for example, KrF excimer laser (Wavelength: 248 nm), XeF excimer laser (Wavelength: 351 nm), third-harmonic YAG laser (Wavelength: 355 nm), second-harmonic YAG laser (Wavelength: 532 nm), and the like can be used.

The step of applying the pulsed laser L may be carried out while performing at least one type of operation selected from the group consisting of the suction of gas in the vicinity of the predetermined region, the introduction of the air, reactive gas, or inert gas to the predetermined region, and the adjustment of the temperature of the predetermined region. By performing any of the operations described above, gas or the like generated by the ablation is ejected out of the system, and it is possible to more sufficiently suppress a blockage in the pore on the processed surface. Examples of the reactive gas include monosilane, disilane, oxygen, carbon dioxide, nitrogen, and the like. Examples of the inert gas include rare gas such as argon, and the like.

FIG. 1(c) illustrates a sectional view of a porous membrane 100 that is obtained by the irradiation of the pulsed laser L. The porous membrane 100 includes a plurality of concave portions 30 on the first main surface 20a. The first main surface 20a is also capable of including a first surface 30a and a second surface 30b. In FIG. 1(c), the sectional shape of the concave portion in the porous membrane 100 is a semicircular shape, but the sectional shape is not limited thereto. The sectional shape, for example, can be changed by adjusting an irradiation angle of the pulsed laser L with respect to the substrate 20, an irradiation position, the number of times for performing the irradiation, and the like.

The production method for a porous membrane according to the present disclosure may be a method for forming a porous membrane, for example, by polymerizing a polymerizable composition on a mold including convex portions on the surface, instead of the processing using the irradiation of the pulsed laser L as described above, and by causing polymerization reaction-induced phase separation in such a process. That is, in the production method for a porous membrane, the step described above may include a step of forming a liquid membrane containing a polymerizable composition containing a polymerizable monomer and an initiator, and aliphatic alcohol having 8 or less carbon atoms on the surface of a mold including convex portions on the surface, and of causing polymerization reaction-induced phase separation in the liquid membrane by heating the liquid membrane or by irradiating the liquid membrane with light to form a substrate including pores, and to form concave portions having an average opening diameter greater than an average pore diameter of the pores on one main surface of the substrate.

In the production method for a porous membrane, the phase separation is induced after a given length of time elapses from the start of the polymerization reaction by light or heat and the polymerization reaction proceeds to a certain extent. Accordingly, it is possible to produce a porous membrane having a comparatively uniform pore structure, regardless of an irradiation direction of the light or an input method of the heat. Therefore, it is possible to form many uniform pores on the entire concavo-convex surface, compared to a non-solvent phase separation method and a heat-induced phase separation method. Further, by optimizing the type and the amount of porogen and initiator to be added, the type and the amount of monomer and cross-linking agent, and the like, it is possible to delay a time zone in which the phase separation occurs to the later stage of the polymerization reaction, and to produce a porous membrane including fine continuous pores.

FIG. 2 is a schematic view for describing an example of the production method for a porous membrane. FIG. 2(a) illustrates a sectional view of a mold 50. The mold 50 includes a surface including convex portions corresponding to the concave portions on the surface of the porous membrane to be produced. The material of the mold 50, for example, may be a metal (for example, nickel or the like), an inorganic substance such as silicon, glass, and a ceramic material, an organic polymer such as polycycloolefin, an epoxy resin, and polyvinyl alcohol, and the like.

FIG. 2(b) illustrates a step of forming a liquid membrane 10 on the mold 50. The liquid membrane 10 contains a polymerizable composition and porogen (for example, aliphatic alcohol having 8 or less carbon atoms). The thickness of the liquid membrane 10 can be adjusted in accordance with the thickness of the porous membrane to be produced, and for example, may be 1 to 10 μm, 10 to 100 μm, or 100 to 1000 μm.

The polymerizable composition contains a polymerizable monomer and a polymerization initiator. The polymerizable monomer may be a compound having an ethylenically unsaturated bond, and for example, may include a compound having two or more ethylenically unsaturated bonds. As the polymerizable monomer, it is preferable to use a compound having one ethylenically unsaturated bond and a compound having two or more ethylenically unsaturated bonds by mixing, and it is more preferable to use a compound having one ethylenically unsaturated bond and a compound having two ethylenically unsaturated bonds by mixing. In a case where the polymerizable monomer is the mixture as described above, the content of the compound having two or more ethylenically unsaturated bonds, for example, may be 40 parts by mass or more, 45 parts by mass or more, or 50 parts by mass or more, on the basis of 100 parts by mass of the total amount of the polymerizable monomer. In a case where the polymerizable monomer is the mixture as described above, the content of the compound having two or more ethylenically unsaturated bonds, for example, may be 70 parts by mass or less, or 60 parts by mass or less, on the basis of 100 parts by mass of the total amount of the polymerizable monomer. The content of the compound having two or more ethylenically unsaturated bonds may be adjusted in the range described above, and for example, may be 40 to 70 parts by mass, or 45 to 60 parts by mass, on the basis of 100 parts by mass of the total amount of the polymerizable monomer.

The compound having an ethylenically unsaturated bond, for example, may be a compound having a (meth)acryloyl group, a compound having a vinyl group, and the like.

Examples of the compound having one ethylenically unsaturated bond include alkyl (meth)acrylic ester, a (meth)acrylic acid, glycidyl (meth)acrylate, 2-hydroxyethyl (meth)acrylate, hydroxypropyl (meth)acrylate, polyethylene glycol (meth)acrylate, and the like. An alkyl group moiety of alkyl (meth)acrylic ester may be linear, branched, or cyclic. Examples of the alkyl (meth)acrylic ester include methyl (meth)acrylate, ethyl (meth)acrylate, propyl (meth)acrylate, butyl (meth)acrylate, pentyl (meth)acrylate, hexyl (meth)acrylate, ethyl hexyl (meth)acrylate, octyl (meth)acrylate, octadecyl (meth)acrylate, styrene, and the like.

The compound having two ethylenically unsaturated bonds, for example, may be polyalkylene glycol di(meth)acrylate, polyalkylenediol di(meth)acrylate, and the like. Examples of the compound having two ethylenically unsaturated bonds include ethylene glycol di(meth)acrylate, diethylene glycol di(meth)acrylate, triethylene glycol di(meth)acrylate, divinyl benzene, and the like.

The polymerization initiator, for example, includes at least one type selected from the group consisting of a photopolymerization initiator and a thermal polymerization initiator.

The photopolymerization initiator, for example, may be a photopolymerization initiator having a maximum absorption wavelength in a wavelength band of 380 nm or less. The maximum absorption wavelength of the photopolymerization initiator, for example, may be 340 nm or less, 300 nm or less, 280 nm or less, 260 nm or less, or 250 nm or less. The maximum absorption wavelength of the photopolymerization initiator, for example, may be 200 nm or more, 220 nm or more, or 230 nm or more. By using the photopolymerization initiator having a maximum absorption wavelength in the range described above, it is possible to further improve a use efficiency of light and an initiation efficiency in the photopolymerization. As the photopolymerization initiator, for example, it is possible to use a photopolymerization initiator having a maximum wavelength in a wavelength band of 200 to 380 nm. Herein, in a case where the photopolymerization initiator has a plurality of maximum absorption wavelengths, the maximum absorption wavelength of the photopolymerization initiator indicates a maximum absorption wavelength on the shortest wavelength side.

Examples of the photopolymerization initiator include an alkyl phenone-based photopolymerization initiator, an acyl phosphine oxide-based photopolymerization initiator, an intramolecular hydrogen abstraction type photopolymerization initiator, and the like. Examples of the alkyl phenone-based photopolymerization initiator include 1-hydroxycyclohexyl-phenyl ketone, 2,2-dimethoxy-2-phenyl acetophenone, and the like. Examples of the acyl phosphine oxide-based photopolymerization initiator include 2,4,6-trimethyl benzoyl-diphenyl phosphine oxide, bis(2,4,6-trimethylbenzoyl) phenyl phosphine oxide, and the like. Examples of the intramolecular hydrogen abstraction type photopolymerization initiator include methyl benzoyl formate, camphorquinone (2,3-bornanedione), and the like. The camphorquinone, for example, may be used together with amine such as tertiary amine.

As the alkyl phenone-based photopolymerization initiator, for example, Omnirad 184, Omnirad 651, and the like (Product Name, all are manufactured by IGM Resins B.V.) can be used. As the acyl phosphine oxide-based photopolymerization initiator, for example, Omnirad TPO, Omnirad 819, and the like (Product Name, all are manufactured by IGM Resins B.V.) can be used. As the intramolecular hydrogen abstraction type photopolymerization initiator, for example, Omnirad 754 and the like (Product Name, manufactured by IGM Resins B.V.) can be used.

Examples of the thermal polymerization initiator include an organic peroxide, an azo-based compound, and the like. Examples of the organic peroxide include benzoyl peroxide, lauroyl peroxide, di-t-butyl peroxyhexahydroterephthalate, t-butyl peroxy-2-ethyl hexanoate, 1,1-t-butyl peroxy-3,3,5-trimethyl cyclohexane, t-butyl peroxyisopropyl carbonate, and the like. Examples of the azo-based initiator include 2,2'-azobis(isobutyronitrile) (AIBN), 2,2'-azobis(2-methylbutyronitrile) (AMBN), 2,2'-azobis(2,4-dimethylvaleronitrile) (ADVN), 1,1'-azobis(1-cyclohexanecarbonitrile) (ACHN), dimethyl-2,2'-azobisisobutyrate (MAIB), 4,4'-azobis(4-cyanovalerate) (ACVA), and the like.

The polymerizable composition may contain other components in addition to the polymerizable monomer and the polymerization initiator described above. Examples of the other components include a cross-linking agent and the like.

Examples of the porogen include alcohol, ether, polyethylene glycol, water, and aliphatic alcohol. The porogen may include at least one type selected from the group consisting of ether, polyethylene glycol, water, and aliphatic alcohol having 8 or less carbon atoms. The porogen preferably includes aliphatic alcohol. The aliphatic alcohol preferably includes aliphatic alcohol having 8 or less carbon atoms, more preferably aliphatic alcohol having 5 or less carbon atoms. The aliphatic alcohol having 8 or less carbon atoms is blended to adjust the size and the distribution of the pores to be formed in the polymerization reaction-induced phase separation. The aliphatic alcohol having 8 or less carbon atoms may have a linear structure, a branched structure, or a cyclic structure. The number of carbon atoms of the aliphatic alcohol, for example, may be 4 or less, or 3 or less. By using the aliphatic alcohol having carbon atoms in the range described above, it is possible to further decrease the average pore diameter of the porous membrane to be obtained.

The aliphatic alcohol having 8 or less carbon atoms may include at least one type selected from the group consisting of monohydric alcohol and dihydric alcohol, and preferably monohydric alcohol and dihydric alcohol. In a case where the aliphatic alcohol having 8 or less carbon atoms includes the monohydric alcohol and the dihydric alcohol, an upper limit value of the content of the dihydric alcohol, for example, may be less than 50 parts by mass, 45 parts by mass or less, 40 parts by mass or less, 35 parts by mass or less, 30 parts by mass or less, or 15 parts by mass or less, with respect to 100 parts by mass of the total of the monohydric alcohol and the dihydric alcohol. By setting the upper limit value of the content of the dihydric alcohol to be in the range described above, it is possible to further decrease the average pore diameter of the pores to be formed by the polymerization reaction-induced phase separation. A lower limit value of the content of the dihydric alcohol, for example, may be 3 parts by mass or more, or 5 parts by mass or more, with respect to 100 parts by mass of the total of the monohydric alcohol and the dihydric alcohol. By setting the lower limit value of the content of the dihydric alcohol to be in the range described above, it is possible to form the pores by the polymerization reaction organic phase separation with excellent reproducibility. The content of the dihydric alcohol can be adjusted in the range described above, and for example, may be 3 to 50 parts by mass, or 5 to 15 parts by mass, with respect to 100 parts by mass of the total of the monohydric alcohol and the dihydric alcohol.

Examples of monovalent aliphatic alcohol having 8 or less carbon atoms include methanol, ethanol, propanol, butanol, pentanol, hexanol, heptanol, and octanol. Examples of divalent aliphatic alcohol having 8 or less carbon atoms include ethylene glycol, 1,3-propanediol, 1,2-propanediol, 1,4-butanediol, 1,3-butanediol, 1,2-butanediol, 2,3-butanediol, 2-methyl-2-propanol, 1,5-pentanediol, and the like. The aliphatic alcohol having 8 or less carbon atoms preferably includes 1-propanol and 1,4-butanediol.

A lower limit value of the content of the polymerization initiator in the liquid membrane, for example, may be 0.1 parts by mass or more, 1.0 part by mass or more, 1.5 parts by mass or more, or 5.0 parts by mass or more, with respect to 100 parts by mass of the total amount of the polymerizable monomer and the aliphatic alcohol. An upper limit value of the content of the polymerization initiator in the liquid membrane, for example, may be 30 parts by mass or less, 25 parts by mass or less, 20 parts by mass or less, or 10 parts by mass or less, with respect to 100 parts by mass of the total amount of the polymerizable monomer and the aliphatic alcohol. By setting the content of the polymerization initiator to be in the range described above, it is possible to blend the polymerization initiator in the liquid membrane with higher uniformity so that it is possible to evenly generate polymerization initiation points in the liquid membrane, and to further decrease the average pore diameter of the porous membrane to be obtained. The content of the polymerization initiator in the liquid membrane can be adjusted in the range described above, and for example, may be 0.1 to 30 parts by mass, or 1.0 to 20 parts by mass, with respect to 100 parts by mass of the total amount of the polymerizable monomer and the aliphatic alcohol.

An upper limit value of the content of the aliphatic alcohol having 8 or less carbon atoms in the liquid membrane, for example, may be 60 parts by mass or less, 50 parts by mass or less, or 40 parts by mass or less, with respect to 100 parts by mass of the total amount of the polymerizable monomer and the aliphatic alcohol. A lower limit value of the content of the aliphatic alcohol having 8 or less carbon atoms in the liquid membrane, for example, may be 20 parts by mass or more, 25 parts by mass or more, or 30 parts by mass or more, with respect to 100 parts by mass of the total amount of the polymerizable monomer and the aliphatic alcohol. By setting the content of the aliphatic alcohol to be in the range described above, it is possible to more easily control the polymerization reaction-induced phase separation, and to further decrease the average pore diameter of the porous membrane to be obtained. The content of the aliphatic alcohol having 8 or less carbon atoms in the liquid membrane can be adjusted in the range described above, and for example, may be 20 to 50 parts by mass, or 30 to 50 parts by mass, with respect to 100 parts by mass of the total amount of the polymerizable monomer and the aliphatic alcohol.

The liquid membrane 10 can be formed by preparing a solution containing the polymerizable composition and the aliphatic alcohol, and for example, by filling or coating the surface of the mold 50 including the convex portions with

the solution. In a case where the liquid membrane 10 is formed by filling, for example, the mold can be surrounded by a wall having a thickness greater than that of the mold, and the inside of the wall can be filled with the solution containing the polymerizable composition and the aliphatic alcohol. In such a case, the mold is surrounded by the wall, and then, the surrounded portion may be covered with a quartz plate as a lid, from the viewpoint of reducing polymerization inhibition due to oxygen. In addition, a method for forming the liquid membrane 10 by coating, for example, may be a roll coater, a reverse coater, a gravure coater, a knife coater, a spin coater, and the like.

FIG. 2(c) illustrates a step of polymerizing the polymerizable composition in the liquid membrane 10 by heating the liquid membrane 10, or a step of polymerizing the polymerizable composition in the liquid membrane 10 by irradiating the liquid membrane 10 with light. In such a process, the polymerization reaction-induced phase separation occurs in accordance with the polymerization of the polymerizable composition, and the porous membrane is formed. In this step, since the polymerization reaction proceeds on the surface of the mold 50 including the convex portions, the porous membrane to be obtained includes pores, and concave portions having an average opening diameter greater than an average pore diameter of the pores on one of a pair of main surfaces.

In a case where the polymerizable composition is polymerized by heating the liquid membrane 10, a heating temperature or the like can be adjusted in accordance with the composition of the polymerizable composition, in particular, the type of initiator, or the like. A lower limit value of the heating temperature, for example, may be 60°C or higher, or 70°C or higher. An upper limit value of the heating temperature, for example, may be 130°C or lower, or 250°C or lower.

In a case where the polymerizable composition is polymerized by irradiating the liquid membrane 10 with light, the intensity of light to be applied can be adjusted in accordance with the composition of the polymerizable composition, in particular, the type of initiator, or the like. An exposure amount of the light, for example, may be 100 $mW/cm^2$ or more, 200 $mW/cm^2$ or more, or 500 $mW/cm^2$ or more. The exposure amount in the light irradiation, for example, may be 2000 $mW/cm^2$ or less, 1000 $mW/cm^2$ or less, or 800 $mW/cm^2$ or less. As a light source, for example, a xenon lamp, a UV irradiation device in which an electrodeless lamp bulb and magnetron are combined, a light-emitting diode (LED), a mercury lamp, and the like can be used.

FIG. 2(d) illustrates a step of peeling off a porous membrane 102 formed by polymerizing the polymerizable composition from the mold 50. According to this step, it is possible to obtain a desired porous membrane 102. In the porous membrane 102 to be obtained, the plurality of concave portions 30 are formed on the first main surface 20a that is one main surface, in positions corresponding to the convex portions on the mold 50. The first main surface 20a includes the first surface 30a and a second surface 30d (the wall surface 30b and a bottom surface 30c).

In the production method for a porous membrane, a step of reducing the content of the aliphatic alcohol contained in the porous membrane 102, or the like may be performed, as necessary, before peeling off the mold 50. The step described above, for example, may be a step of removing the aliphatic alcohol by washing the polymer with lower alcohol or the like. As the lower alcohol, for example, methanol, ethanol, and the like can be used. A step of drying the polymer after reducing the content of the aliphatic alcohol may be a step of removing the used lower alcohol or the like, in the step of reducing the content of the aliphatic alcohol. The drying may be performed by heating, depressurizing, and the like, as necessary.

According to the production method for a porous membrane, it is possible to produce a porous membrane having a large surface area on at least one main surface. One embodiment of the porous membrane is a porous membrane including pores, the porous membrane includes a pair of main surfaces, and at least one of the pair of main surfaces includes concave portions having an average opening diameter greater than an average pore diameter of the pores. In the porous membrane, the pores are also opened to the surface of the concave portion. Accordingly, the porous membrane is excellent in gas permeability. The production method for a porous membrane has been described by an example in which the concave portions are provided on one main surface of the porous membrane, and as necessary, processing of providing the concave portions on the other main surface may be performed. The above description can be applied to such a method, and in a case of the polymerization reaction-induced phase separation, the method may be means for allowing the polymerization reaction to proceed after providing the mold on both surfaces of the liquid membrane. In addition, the shapes and the intervals (a pitch width or the like) of the concave portions to be provided on both main surfaces of the porous membrane may be the same or different. For example, groove portions may be provided on one main surface, and groove portions may be provided on the other main surface to be parallel or orthogonal to the groove portions provided on the main surface.

Other concave portions may be formed by using pulsed laser after polymerizing the porous membrane including the concave portions. In addition, through holes penetrating through the porous membrane may be further formed in a part of the porous membrane by using laser, after polymerizing the porous membrane including the concave portions. Note that, the through hole may be formed by making a shadow such that a part of the polymerizable composition is not irradiated with light when irradiating the polymerizable composition with light to polymerize. According to this method, by designing a mask for making a shadow, it is possible to form a porous membrane including through holes having an arbitrary shape in an arbitrary position, and concave portions.

In a porous membrane to be formed by a non-solvent-induced phase separation method or a heat-induced

phase separation method of the related art, an average pore diameter of pores may greatly differ from one main surface of the porous membrane toward the other main surface. On the other hand, according to the production method for a porous membrane according to the present disclosure, it is possible to reduce a difference in the average pore diameter as described above (a difference in a thickness direction of the porous membrane). A difference between the average pore diameter of the pores on the one main surface and the average pore diameter of the pores in the concave portion may be small. The difference in the average pore diameter, for example, may be less than 1 μm, 0.5 μm or less, or 0.1 μm or less, or there may be no difference.

The average pore diameter of the pores on the one main surface may be in a range of 30 to 300% with respect to the average pore diameter of the pores in the concave portion. The total surface pore area of the pores on the one main surface may be in a range of 20 to 500% by area with respect to the total surface pore area of the pores in the concave portion.

A difference between the total surface pore area of the pores on the one main surface and the total surface pore area of the pores in the concave portion may be small. The difference in the total surface pore area is a difference between the total surface pore area of the pores on the first surface 30a and the total surface pore area of the pores on the second surface 30b configuring the concave portion 30 in the example of the porous membrane 100 in FIG. 1, and indicates a difference between the total surface pore area of the pores on the first surface 30a and the total surface pore area of the pores on the second surface 30d in the example of the porous membrane 102 in FIG. 2.

Similarly, a difference between the surface porosity of the pores on the one main surface and the surface porosity of the pores in the concave portion may be small. The difference in the surface porosity, for example, may be less than 10%, 5% or less, or 1% or less, or there may be no difference. The difference in the surface porosity is a difference between the surface porosity of the pores on the first surface 30a and the surface porosity of the pores on the second surface 30b configuring the concave portion 30 in the example of the porous membrane 100 in FIG. 1, and indicates a difference between the surface porosity of the pores on the first surface 30a and the surface porosity of the pores on the second surface 30d in the example of the porous membrane 102 in FIG. 2. Herein, the surface porosity indicates a surface porosity to be measured by electronic microscope observation.

The porous membrane may further include at least one type selected from the group consisting of an unwoven fabric and a mesh, or a support material. The porous membrane may further include at least one type selected from the group consisting of an unwoven fabric, a porous membrane, a fiber, a nanofiber, and a mesh, or a support material. The support material and the like may be provided on the main surface side opposite to the main surface of the porous membrane on which the concave portions are formed. In addition, in a case where the concave portions are formed on both surfaces, the support material and the like may be provided in the vicinity of the center away from the main surfaces of the porous membrane on both sides.

The shape of the porous membrane is not particularly limited, and may configure a flat membrane, a tubular membrane, or a hollow yarn. In addition, the porous membrane may be a membrane subjected to corrugation processing. In other words, the porous membrane can be a membrane in which the effective surface area is further increased by the corrugation processing.

FIG. 3 is a schematic view illustrating an example of the porous membrane. FIG. 4 is a schematic sectional view taken along line IV-IV of FIG. 3. A porous membrane 200 includes the first main surface 20a and the second main surface 20b, and the first main surface 20a includes the plurality of concave portions 30.

The porous membrane described above, for example, is the porous membrane 200 including pores (not illustrated), and it can be said that the porous membrane 200 includes a pair of main surfaces (the first main surface 20a and the second main surface 20b), one of the pair of main surfaces includes the first surface 30a and the concave portion 30 that includes the second surface 30b different from the first surface 30a, and the pores are opened to the second surface 30b.

The porous membrane 200 includes fine pores (not illustrated). An upper limit value of an average pore diameter of the pores in the porous membrane 200, for example, may be 1 μm or less, 500 nm or less, 300 nm or less, or 100 nm or less. By setting the upper limit value of the average pore diameter of the pores in the porous membrane 200 to be in the range described above, for example, it is possible to form a gas permeation layer using gelable polymeric particles described below with higher uniformity. A lower limit value of the average pore diameter of the pores in the porous membrane 200, for example, may be 1 nm or more, 5 nm or more, 10 nm or more, or 20 nm or more. By setting the lower limit value of the average pore diameter of the pores in the porous membrane 200 to be in the range described above, in a case where the porous membrane, for example, is used as a support layer of a $CO_2$ permeation membrane, it is possible to prepare a separation membrane having more excellent $CO_2$ permeability of 200 GPU or more.

A ratio of the first surface 30a and the second surface 30b on the first main surface 20a of the porous membrane 200 may be suitably adjusted in accordance with the application, the demand characteristics, and the like of the porous membrane 200. For example, in an application where a plurality of porous membranes 200 are prepared, and a gas permeation layer or the like is provided, and then, the porous membranes and the gas permeation layer or the like are layered to be used as a gas permeation module, since mixed gas containing separation target gas may not be supplied

to the first surface 30a in a case where the porous membranes 200 are directly in contact with each other, the first surface 30a may not be included in the effective surface area for gas permeation. In such a case, by decreasing the ratio of the first surface 30a on the first main surface 20a (decreasing an area ratio of the first surface 30a to the second surface 30b), it is possible to compensate a decrease in the effective surface area.

An opening diameter (B represented in FIG. 4) of the concave portion 30 is greater than the average pore diameter of the pores in the porous membrane. An average opening diameter of the concave portions 30 is greater than the average pore diameter of the pores. The average opening diameter of the concave portions 30, for example, may be 10 times or more, 15 times or more, or 20 times or more the average pore diameter of the pores. In a case where the average opening diameter of the concave portions 30 is 10 times or more the average pore diameter of the pore, it is possible to increase the surface area of the porous membrane. The average opening diameter of the concave portions 30, for example, may be 1000 times or less, 500 times or less, 300 times or less, 100 times or less, or 50 times or less the average pore diameter of the pores. The average opening diameter of the concave portions 30 may be adjusted in the range described above, and for example, may be 10 to 1000 times, 10 to 500 times, 10 to 100 times, or 15 to 50 times, on the basis of the average pore diameter of the pores. The average opening diameter of the concave portions 30 can be controlled by adjusting conditions when producing the porous membrane (for example, conditions such as the fluence, the wavelength, the pulse width, and the like of the pulsed laser, the shape of the convex portion in the mold, or the like).

The opening diameter (B represented in FIG. 4) of the concave portion 30 can be adjusted in accordance with the degree of increase in the surface area of the first main surface 20a of the porous membrane 200. In a case where a distance between the center point of one concave portion 30 and the center point of the adjacent concave portion is set to A, a ratio (B/A) of B indicating the opening diameter of the concave portion 30 to the distance A, for example, may be 0.2 to 0.7. In a case where the ratio (B/A) is in the range described above, it is possible to improve the surface area while further reducing a decrease in the strength of the porous membrane 200. In the ratio (B/A), the average opening diameter of the concave portions may be used instead of the opening diameter B, and an average distance may be used instead of the distance A.

The depth (D represented in FIG. 4) of the concave portion 30 can be adjusted in accordance with the degree of increase in the surface area of the first main surface 20a of the porous membrane 200. A lower limit value of a ratio (D/B) of D indicating the depth of the concave portion to B indicating the opening diameter of the concave portion 30, for example, may be 0.01 or more, 0.05 or more, or 1 or more. By setting the lower limit value of the ratio (D/B) to be in the range described above, it is possible to further increase the surface area of the porous membrane 200. An upper limit value of the ratio (D/B) of D indicating the depth of the concave portion to B indicating the opening diameter of the concave portion, for example, may be 10 or less, 5 or less, or 2 or less. By setting the upper limit value of the ratio (D/B) to be in the range described above, it is possible to improve the surface area while further reducing a decrease in the strength of the porous membrane 200.

A ratio (D/T) of D indicating the depth of the concave portion 30 to the thickness (T represented in FIG. 4) of the porous membrane 200, for example, may be 0.8 or less, 0.5 or less, or 0.2 or less. By setting the ratio of D indicating the depth of the concave portion 30 to T indicating the thickness of the porous membrane 200 to be in the range described above, it is possible to further increase the surface area while sufficiently suppressing a decrease in the mechanical strength of the porous membrane 200. The ratio (D/T) of the depth D of the concave portion 30 to the thickness T of the porous membrane 200, for example, may be 0.001 or more, 0.01 or more, or 0.05 or more.

A lower limit value of T indicating the thickness of the porous membrane 200, for example, may be 20 μm or more, 30 μm or more, or 40 μm or more. By setting the lower limit value of T indicating the thickness of the porous membrane 200 to be in the range described above, it is possible to improve the mechanical strength of the porous membrane itself. An upper limit value of T indicating the thickness of the porous membrane 200, for example, may be 300 μm or less, 100 μm or less, 90 μm or less, or 80 μm or less. By setting the upper limit value of T indicating the thickness of the porous membrane 200 to be in the range described above, it is possible to improve flexibility and shape followability. T indicating the thickness of the porous membrane 200 can be adjusted in the range described above, and for example, may be 20 to 300 μm, 20 to 100 μm, or 30 to 80 μm. Note that, in a case where the porous membrane 200 includes the support material or the like, the thickness including the support material may be 300 μm or more.

FIG. 3 illustrates an example in which the plurality of concave portions are provided on the main surface of the porous membrane, and the sectional shape of the concave portion is a semicircular shape, that is, an example in which a plurality of holes are provided on the main surface. The sectional shape of the concave portion is not necessarily limited to the example described above from the viewpoint of increasing the surface area of the main surface of the porous membrane. The sectional shape of the concave portion, for example, may be a triangular shape, an approximately semicircular shape, an approximately semi-elliptical shape, a rectangular shape, a tapered shape, and the like. In addition, the main surface of the porous membrane may include a plurality of concave portions, or may include grooves. In other words, the concave portion may be a groove formed on the main surface of the porous membrane.

FIG. 5 is a schematic view illustrating another example of the porous membrane. FIG. 6 is a sectional view

taken along line VI-VI of FIG. 5. In FIG. 5, as the porous membrane, an example is illustrated in which the sectional shape of the concave portion is a rectangular shape. In such a case, a porous membrane 202 includes a pair of main surfaces (the first main surface 20a and the second main surface 20b), the first main surface 20a includes the first surface 30a and the concave portion 30 that includes the second surface 30d (the wall surface 30b and the bottom surface 30c) different from the first surface 30a. Then, the pores are opened to the bottom surface 30c. In addition, FIG. 7 is a schematic view illustrating another example of the porous membrane. FIG. 8 is a sectional view taken along line VIII-VIII of FIG. 7. In FIG. 7, as the porous membrane, an example is illustrated in which the concave portion is a groove formed on the main surface. In FIG. 7, an example is illustrated in which the groove is formed into the shape of a grid, and the groove may be provided into the shape of a stripe or a wavy line.

All of the porous membranes described above have been described by an example in which regularly arranged holes or grooves are formed, but the porous membrane of the present disclosure is not limited thereto, and the arrangement of the plurality of concave portions may not particularly have regularity. In addition, the porous membrane described above may include concave portions having different shapes or concave portions having different depths. In addition, the porous membrane may include through holes penetrating through the porous membrane in addition to the concave portion. In general, in a case of molding the concave portion with a mold, since the mold is formed by photolithography, the height of the mold is constant, and it is difficult to mold the concave portions having different depths. However, for example, by further processing the concave portion with pulsed laser after forming the concave portion by pulsed laser processing or forming the concave portion by using a mold, it is possible to produce a porous membrane including a plurality of concave portions having different shapes and depths. In addition, by adjusting the number of times for performing the irradiation, the fluence, and the like of the pulsed laser, it is possible to produce a porous membrane including a plurality of concave portions having different shapes and depths by using only the pulsed laser. Further, by processing the concave portion such that the depth of the concave portion is deeper than the thickness of the porous membrane, it is also possible to provide through holes in the porous membrane including the concave portions, and to perform cutout processing.

By including the concave portions on at least one main surface, the porous membrane described above has a large surface area, compared to a porous membrane of the related art including no concave portions. Accordingly, the porous membrane described above is useful for a support membrane of a gas permeation membrane, a separator of a fuel battery, a lithium ion storage battery, and the like, a water treatment membrane, and the like. Further, the porous membrane described above can be preferably used as each separation membrane configuring a layered module, a membrane separation module, a gas permeation module, and the like.

One embodiment of the layered module includes a unit in which two or more porous membranes including groove portions provided on at least one main surface are layered. The porous membrane is the porous membrane described above.

One embodiment of the separation membrane includes the porous membrane described above, and a separation layer provided on the porous membrane. The separation membrane, for example, is classified to a precision filtration membrane, an ultrafiltration membrane, a dialysis membrane, an electrodialysis membrane, a reverse osmosis membrane, a gas permeation membrane, and the like, in accordance with a separation target. For example, one embodiment of the gas permeation membrane includes the porous membrane described above, and a gas permeation layer provided on the porous membrane. More specifically, the gas permeation membrane includes the gas permeation layer on the surface of the porous membrane on which the concave portions are provided.

FIG. 9 is a schematic sectional view for describing an example of the gas permeation membrane. A gas permeation membrane 500 includes a porous membrane 206, and a gas permeation layer 300 provided on the surface of the porous membrane 206 on which concave portions are provided. As the porous membrane 206, the porous membrane described above can be used.

The gas permeation layer is a layer of which the permeability differs in accordance with the type of gas (for example, a layer to which $CO_2$ can be selectively attached and detached, or the like). The thickness of the gas permeation layer, for example, may be 50 μm or less, 15 μm or less, 10 μm or less, 5 μm or less, or 1 μm or less. The thickness of the gas permeation layer, for example, may be greater than 0.01 μm, 0.05 μm or more, or 0.1 μm or more. The thickness of the gas permeation layer may be adjusted in the range described above, and for example, may be 0.01 to 50 μm, 0.05 to 15 μm, or 0.05 to 5 μm.

The gas permeation layer, for example, may contain gelable polymeric particles having at least one type of functional group selected from the group consisting of a basic functional group and an acidic functional group, and may consist of a gelable polymer. Herein, the gelable polymeric particles indicate polymeric particles that can be swelled in water or a polar solvent, and can be gelled fine particles. In addition, the gelable polymeric particles may have reversibility in which particles can be gelled by being swelled in water or a polar solvent, and then, can be returned to the particles before being gelled by removing water or the polar solvent and drying, and then, can be gelled fine particles by further adding water or a polar solvent. The gelable polymeric particles may have flexibility, and may be capable of forming a membrane by the particles being in contact with each other to be deformed into the shape of a porous membrane. That

is, the gas permeation layer may be a membrane in which the gelable polymeric particles described above are accumulated.

The gelable polymeric particles may be particles containing only a polymeric compound, or may be particles in which a low-molecular compound is impregnated in or attached to a polymeric compound. The gelable polymeric particles, for example, may be particles in which the amount of moisture is 40 to 99.9% by mass after dispersing the particles in water at 30°C to be sufficiently swelled. In addition, the particles, for example, may be particles of which the hydrodynamic diameter is 20 to 2000 nm after dispersing the particles in water at 30°C to be sufficiently swelled.

An average particle diameter of the gelable polymeric particles in a dry state, for example, may be 5 to 10000 nm, or 5 to 500 nm. An average particle diameter of the gelable polymeric particles in a wet state, for example, may be 100 to 2000 nm, or 100 to 1000 nm. In a case where the average particle diameter of the gelable polymeric particles in the wet state is in the range described above, it is possible to prevent the inside of the pores in the porous membrane from being filled with a gel. The average particle diameter of the gelable polymeric particles in the wet state indicates a hydrodynamic particle diameter after swelling the gelable polymeric particles in water, is a particle diameter after immersing dried polymeric compound particles in water at 30°C for 24 hours, and is an average particle diameter measured by a dynamic light scattering method.

The gelable polymeric fine particles may have a basic or acidic functional group, and a fixed charge. In the gelable polymeric particles having at least one type of functional group selected from the group consisting of a basic functional group and an acidic functional group, the basic functional group, for example, may include at least one type selected from the group consisting of an amino group, an ammonium group, and an imidazolium group. The acidic functional group, for example, may include at least one type selected from the group consisting of a carboxy group and a sulfuric acid group.

The gelable polymeric particles having a basic functional group, for example, may be particles containing a polymeric compound having an amino group, or may be particles consisting only of a polymeric compound having an amino group. The polymeric compound having an amino group is not particularly limited, and examples thereof are capable of including a (meth)acrylamide-based polymer, polyethylene imine, polyvinyl amine, polyvinyl alcohol, polyallyl amine, derivatives of the compounds described above, and the like.

The amino group of the polymeric compound having an amino group may be any of a primary amino group, a secondary amino group, and a tertiary amino group, preferably either a secondary amino group or a tertiary amino group, and more preferably a tertiary amino group. Note that, the amino group of the polymeric compound having an amino group may be a cyclic amino group. The amino group may be capable of adjusting an acid dissociation constant of a conjugated acid. In order to dissolve carbon dioxide in the gas permeation layer, for example, it is possible to select an amino group having an acid dissociation constant equivalent or more to an acid dissociation constant of a carbonic acid. The amino group, for example, may be a dialkyl amino group such as a dimethyl amino group and a diethyl amino group. The amino group of the polymeric compound may be bonded to a main chain, or bonded to a lateral chain, and it is preferable that the amino group of the polymeric compound is bonded to a lateral chain.

The polymeric compound having an amino group may further have a hydrophobic group. The hydrophobic group of the polymeric compound, for example, may be a hydrocarbon group. The hydrocarbon group, for example, may be an alkyl group and an alkylene group. The hydrocarbon group may be chained, branched, or cyclic. Examples of the alkyl group include a methyl group, an ethyl group, a propyl group, an isopropyl group, a butyl group, an isobutyl group, a tert-butyl group, a pentyl group, a cyclopentyl group, an isopentyl group, a hexyl group, a cyclohexyl group, and the like.

The gelable polymeric particles having a basic functional group (for example, polymeric compound particles having an amino group) can be prepared by using a solution containing a monomer component (hereinafter, also referred to as a "liquid for preparing particles"). A preparation method of the polymeric compound particles is not particularly limited, and known methods of the related art, such as a precipitation polymerization method, a pseudo-precipitation polymerization method, an emulsion polymerization method, a dispersion polymerization method, a suspension polymerization method, and a seed polymerization method, can be used.

The monomer component includes a monomer having an amino group, and may be a mixture of a monomer having an amino group and a monomer having no amino group. In a case of the mixture of the monomer having an amino group and the monomer having no amino group, the density of the amino group of the polymeric compound particles is more easily adjusted. In other words, by adjusting a mixing ratio of the monomer having an amino group and the monomer having no amino group, it is possible to adjust the density of the amino group of the polymeric compound particles.

Examples of the monomer having an amino group include N,N-dimethyl aminopropyl methacrylamide, N,N-diethyl aminopropyl methacrylamide, N,N-dimethyl aminoethyl methacrylamide, N,N-diethyl aminoethyl methacrylamide, N,N-dimethyl aminopropyl methacrylate, N,N-diethyl aminopropyl methacrylate, N,N-dimethyl aminoethyl methacrylate, N,N-diethyl aminoethyl methacrylate, N,N-dimethyl aminopropyl acrylamide, N,N-diethyl aminopropyl acrylamide, N,N-dimethyl aminoethyl acrylamide, N,N-diethyl aminoethyl acrylamide, N-(2,2,6,6-tetramethylpiperazin-4-yl) methacrylamide, N-(2,2,6,6-tetramethylpiperazin-4-yl) acrylamide, N-(1,2,2,6,6-pentamethylpiperazin-4-yl) methacrylamide, N-(1,2,2,6,6-pentamethylpiperazin-4-yl) acrylamide, diethyl aminopropyl acrylamide, a 3-aminopropyl methacrylamide hydrochloride, a 3-aminopropyl acrylamide hydrochloride, N,N-dimethyl aminopropyl acrylate, N,N-diethyl aminopropyl acrylate, N,N-dimethyl aminoethyl acrylate, N,N-diethyl aminoethyl acrylate, a 3-aminopropyl methacrylate hydrochloride, a 3-aminopropyl acrylate hydrochloride, and the like. The monomer having an amino group may be used as in a state of a base, and for example, may be used as a salt with a hydrochloric acid, hydrogen bromide, a carbonic acid, a bicarbonic acid, a phosphoric acid, a sulfuric acid, an amino acid, and the like. In addition, the monomer having an amino group may be used as in a state of a base during polymerization, and may be used as salt by adding a hydrochloric acid, hydrogen bromide, a carbonic acid, a bicarbonic acid, a phosphoric acid, a sulfuric acid, an amino acid, and the like before forming a separation membrane.

The monomer having no amino group, for example, may be a substituted (meth)acrylamide monomer (excluding a (meth)acrylamide monomer having an amino group) and the like.

The content of the monomer having an amino group in the monomer component, for example, may be 1 to 95% by mole, 5 to 95% by mole, or 30 to 60% by mole, with respect to the total molar number of the monomer component. In a case where the monomer component includes a monomer having a hydrophobic group, a molar ratio of the monomer having an amino group and the monomer having a hydrophobic group may be 95 : 5 to 5 : 95, or 2 : 1 to 1 : 2. Note that, a monomer having both of an amino group and a hydrophobic group is classified to the monomer having an amino group.

The liquid for preparing particles may contain other components in addition to the monomer component. Examples of the other components include a surfactant, a cross-linking agent, a polymerization initiator, a pKa adjuster, and the like. By adjusting the type and the concentration of the surfactant to be added to the liquid for preparing particles, it is possible to control a particle diameter of the polymeric compound particles to be obtained. In a case where the liquid for preparing particles contains the cross-linking agent, it is possible to control the swellability of the particles such that the particles are not excessively swelled by forming a cross-linked structure in the polymeric compound in the particles. In addition, in a case of using comparatively a large amount of cross-linking agent or in a case of setting the concentration of the monomer during polymerization to be comparatively high, it is also possible to form the cross-linked structure between the particles. It is possible to form a comparatively large continuous void structure between composite particles linked by the cross-linked structure. In addition, since the pKa adjuster easily adjusts pKa of the polymeric compound particles to be obtained to a desired value, the pKa adjuster is capable of controlling permeation flux and a selective rate with respect to other mixed gas components, in accordance with the type of gas permeating the gas permeation layer.

The gelable polymeric particles having an acidic functional group, for example, may be particles containing a polymeric compound having a carboxy group, or may be particles consisting only of a polymeric compound having a carboxy group. The polymeric compound having a carboxy group is not particularly limited, and may be a (meth)acrylate-based polymer.

In the gelable polymeric particles having an acidic functional group (for example, polymeric compound particles having a carboxy group), a monomer having an acidic functional group is used as a monomer, and the gelable polymeric particles having an acidic functional group can be prepared by known methods of the related art, such as a precipitation polymerization method, a pseudo-precipitation polymerization method, an emulsion polymerization method, a dispersion polymerization method, a suspension polymerization method, and a seed polymerization method.

The gelable polymeric particles having an acidic functional group contains a monomer having an acidic group, and may be a mixture of the monomer having an acidic group and a monomer having no acidic group. The acidic group may be a carboxylic acid, a sulfuric acid, a sulfonic acid, and a phosphoric acid. In a case of the mixture of the monomer having an acidic group and the monomer having no acidic group, the density of the acidic group of the polymeric compound particles is more easily adjusted. In other words, by adjusting a mixing ratio of the monomer having an acidic group and the monomer having no acidic group, it is possible to adjust the density of the acidic group of the polymeric compound particles.

Examples of the monomer having an acidic group include an acrylic acid, a 2-bromoacrylic acid, a 2-chloroacrylic acid, 2-(trifluoromethyl) acrylate, a methacrylic acid, 2-acrylamide-2-methyl-1-propane sulfonate, 2-carboxyethyl acrylate, vinyl sulfonate, and the like. The monomer having an acidic group may be used as in an acidic state, and may be used as a salt with an alkali metal or amine. In addition, the monomer having an acidic group may be used as in an acidic state during polymerization, and may be used as a salt by adding an alkali metal, amine, an amino acid, and the like before or after forming the separation membrane. A molar number of a basic compound finally existing in the membrane, such as an alkali metal and amine, may be greater than a molar number of the acidic group.

The gelable polymeric particles described above are swelled by water, a polar solvent, and the like. Examples of the polar solvent are capable of including methanol, ethanol, isopropanol, acetonitrile, N,N-dimethyl formamide, dimethyl sulfoxide, and the like. Water and the polar solvent can be used as a mixed solvent, and water is preferable. In other words, the gas permeation layer preferably contains hydrogel particles.

The content of water after the gelable polymeric particles are gelled, for example, may be 0.05 mL or more, or 0.5 mL or more, per 1 g of a solid content. The content of water after the gelable polymeric particles are gelled, for

example, may be 20 mL or less, or 10 mL or less, per 1 g of the solid content.

The gas permeation layer, for example, may contain at least one type selected from the group consisting of alkanol amine, polyvalent amine, piperazine, hindered amine, polyvinyl alcohol, polyethylene imine, polyvinyl amine, alkali metal ions, a molten salt, and the like. In addition, all or a part of alkanol amine, polyvalent amine, piperazine, hindered amine, polyvinyl alcohol, polyethylene imine, polyvinyl amine, and alkali metal ions to be contained, for example, may be a salt with a hydrochloric acid, a carbonic acid, a bicarbonic acid, a sulfuric acid, a phosphoric acid, a boric acid, an amino acid, and a sulfonic acid. Note that, in a case of providing a water permeation layer instead of the gas permeation layer, or in order to provide a gas permeation layer excellent in durability, a separation layer, for example, may contain at least one type selected from the group consisting of polyamide and aromatic polyamide.

Since the gas permeation membrane includes the porous membrane having a large surface area as a support, an excellent gas permeation amount can be exhibited. Examples of the gas include carbon dioxide, nitrogen, oxygen, and the like. The gas may be mixed gas.

A lower limit value of the gas permeation flux of the gas permeation membrane at 40°C, for example, can be 10 GPU or more, 100 GPU or more, 200 GPU or more, 250 GPU or more, 350 GPU or more, 400 GPU or more, 500 GPU or more, 800 GPU or more, or 1000 GPU or more. An upper limit value of carbon dioxide permeation flux of the gas permeation membrane at 40°C, a partial pressure of carbon dioxide of 10 kPa, and a partial pressure of nitrogen of 90 kPa is not particularly limited, and for example, may be 1500 GPU or less. By setting the upper limit value of the carbon dioxide permeation flux of the gas permeation membrane at 40°C to be in the range described above, it is possible to suppress a decrease in the mechanical strength of the gas permeation membrane. The carbon dioxide permeation flux of the gas permeation membrane at 40°C can be adjusted in the range described above, and for example, may be 100 to 1500 GPU, 300 to 1500 GPU, or 500 to 1500 GPU. It is possible to further increase the permeation flux described above at a lower partial pressure of carbon dioxide or at a higher temperature. The gas permeation flux of the gas permeation membrane, for example, can be controlled by adjusting the depth, the sectional shape, and the number of concave portions on the surface of the porous membrane that is a support membrane, the thickness of the gas permeation layer, and the like.

Herein, specific gas is supplied at a specific partial pressure PI from the gas permeation layer side of the gas permeation membrane, a partial pressure P2 of the gas that has permeated the porous membrane side of the gas permeation membrane is measured by a barometer and gas chromatography, and a partial pressure difference $\Delta P$ (= PI - P2) thereof is determined. The gas permeation flux can be calculated by Expression (1) described below using the obtained partial pressure difference $\Delta P$.

$$Q = (F/A) \times \Delta P \cdots \text{Expression (1)}$$

In Expression (1), Q indicates the gas permeation flux, F indicates gas permeation flux per unit time, A indicates the area of the porous membrane, and $\Delta P$ indicates the partial pressure difference between both sides of the gas permeation membrane. The gas permeation flux F per unit time is a value to be measured by gas chromatography as the amount of gas that has permeated the membrane per unit time. Note that, the unit of the gas permeation flux F per unit time is GPU (1 GPU is $1.0 \times 10^{-6}$ [$cm^3$ (STP)/($s \cdot cm^2 \cdot cmHg$)]).

The gas permeation membrane is capable of allowing the specific gas to selectively permeate by adjusting the component, the composition, the thickness, or the like of the gas permeation layer. For example, in a case where the gas permeation layer contains the gelable polymeric particles having a basic functional group, it is possible to improve a selective rate of carbon dioxide and nitrogen. In this case, the selective rate of carbon dioxide to nitrogen of the gas permeation membrane at 40°C, a partial pressure of carbon dioxide of 10 kPa, and a partial pressure of nitrogen of 90 kPa, for example, can be 10 or more, 20 or more, and 30 or more. The selective rate of the carbon dioxide to nitrogen of the gas permeation membrane at 40°C is not particularly limited, and for example, may be 500 or less. It is possible to further increase the selective rate described above when the partial pressure of carbon dioxide is low or when the temperature is high.

Herein, the selective rate indicates a ratio of the gas permeation flux Q of each gas at 40°C. For example, a selective rate of gas Y with respect to gas X is represented by a ratio ($Q_Y/Q_X$) of gas permeation flux Qy of the gas Y at 40°C to gas permeation flux $Q_X$ of the gas X at 40°C.

The capability of the gas permeation membrane, for example, is evaluated by selectivity to be evaluated by a gas permeation coefficient or the like, and gas permeability to be evaluated by the gas permeation flux or the like. In a case where the specific gas is separated and recovered by using the gas permeation membrane, and the selectivity is low, means for compensating insufficient selectivity by the specific gas permeating a plurality of gas permeation membranes is considered. However, in a case where the gas permeability is low, since it is generally difficult to improve a separation and recovery yield of the specific gas, and it takes time to separate and recover the specific gas, a production cost tends to increase. According to the gas permeation membrane using the porous membrane described above, since

the gas permeability can be improved, it is possible to reduce the production cost of gas to be obtained by using the gas permeation membrane.

The gas permeation membrane described above, for example, can also be used as a module by layering or the like. Since the gas permeation membrane according to the present disclosure has a large surface area and is excellent in gas separation capability, it is possible to greatly decrease the volume of a device necessary for obtaining capability equivalent to that of the related art, and to decrease the size of the device itself. In addition, since the shape of the main surface of the porous membrane configuring the gas permeation membrane can be adjusted by the processing using the pulsed laser, the use of the polymerization reaction-induced phase separation, and the like, as described above, and both main surfaces of the porous membrane can be similarly adjusted, the degree of freedom in the design of the device is also high.

One embodiment of the gas permeation module includes one or more units including a first separation membrane in which groove portions for conveying mixed gas are provided on at least one main surface and a second separation membrane in which groove portions for conveying sweep gas are provided on at least one main surface. The separation membrane configuring the unit may include concave portions that are not in the shape of a groove, along with the groove portions. The separation membrane configuring the unit may include through holes penetrating through the separation membrane. The number of units is not particularly limited, and can be suitably selected in accordance with the design of the device. The number of units, for example, may be 10 or more, 30 or more, 25 or more, or 50 or more. The number of units, for example, may be 6000 or less, 4500 or less, 3000 or less, or 2000 or less. Each of the units may be linked such that the units are layered.

The first separation membrane and the second separation membrane configuring the unit may be layered by being directly adhesively joined to each other, and for example, may be layered via other layers such as a mesh or a porous layer. In a case of providing the other layers such as the mesh or the porous layer, it is preferable to use the other layers having a small thickness from the viewpoint of decreasing the size of the gas permeation module. An upper limit value of the thickness of the other layers, for example, may be less than 100 μm, less than 50 μm, or less than 25 μm. A lower limit value of the thickness of the other layers, for example, may be 5 μm or more, or 10 μm or more, from the viewpoint of handleability. Examples of the other layers include a mesh, a porous layer, and the like, containing a resin. Examples of the resin configuring the mesh and the porous layer include polypropylene, polyethylene, polyester, nylon, polytetrafluoroethylene, polyvinylidene fluoride, polyether sulfone, polysulfone, polyimide, polyacetyl cellulose, polycellulose nitrate, and the like.

At least one of the first separation membrane and the second separation membrane includes a support including the porous membrane including the concave portions, and a gas permeation layer provided on the support, and preferably, both of the first separation membrane and the second separation membrane include the support including the porous membrane described above, and the gas permeation layer provided on the support. In a case where the first separation membrane and the second separation membrane are different from each other, for example, the first separation membrane may include the support including the porous membrane described above, and the gas permeation layer provided on the support, and the second separation membrane may include the porous membrane described above. Note that, the gas permeation layer is capable of functioning as an adhesive layer for adhesively joining the first separation membrane and the second separation membrane to each other.

In the gas permeation module, in order to separate specific gas from the mixed gas, it is desirable to accelerate the specific gas to permeate the gas permeation layer of the separation membrane to be diffused into the sweep gas, and to prevent other components in the mixed gas from being diffused into the sweep gas. In the gas permeation module according to this embodiment, the groove portions for conveying the mixed gas are separated from the groove portions for conveying the sweep gas by the gas permeation layer or a diffusion prevention layer. By having such a configuration, it is possible to prevent the components configuring the mixed gas from being diffused into the sweep gas without passing through the gas permeation layer or the diffusion prevention layer. From such a viewpoint, in the gas permeation module described above, it is desirable to cover both of the groove portions for conveying the mixed gas and the surface of the other member facing the groove portions with the gas permeation layer or the diffusion prevention layer, or to cover the entire surface layer of the porous membrane with the gas permeation layer.

The diffusion prevention layer is a layer for preventing the diffusion of separation target gas, and the separation target gas is prevented from being diffused over the layer. The diffusion prevention layer is a layer of which the degree of gas permeation is less than that of the porous membrane, and more specifically, is a layer in which the permeation flux of the separation target gas is higher than 1.1 times the permeation flux of the other gas (foreign gas), and the permeation flux of the foreign gas is less than the permeation flux of foreign gas in gas permeation layer. The gas permeation flux of the diffusion prevention layer at 40°C, for example, may be less than 50 GPU, less than 10 GPU, or less than 5 GPU, or may not allow the gas to permeate.

The groove portions provided on the main surface of the second separation membrane may be arranged to face the groove portions provided on the main surface of the first separation membrane. In this case, it is preferable that the gas permeation module includes a porous layer between the first separation membrane and the second separation

membrane. It is preferable that the porous layer includes a gas permeation layer or a diffusion prevention layer on at least one main surface of a main surface on the first separation membrane side and a main surface on the second separation membrane side. It is preferable that the porous layer includes the gas permeation layer or the diffusion prevention layer on the main surface of the porous layer on the first separation membrane side from the viewpoint of improving the separation capability of the separation target gas. It is preferable that the porous layer includes the gas permeation layer or the diffusion prevention layer on the main surface and the lateral surface on the second separation membrane side from the viewpoint of improving the processed amount of the gas permeation. In a case of providing the gas permeation layer or the diffusion prevention layer on the main surface and the lateral surface on the second separation membrane side, the mixed gas supplied to the groove portions for conveying the mixed gas, provided on the main surface of the first separation membrane on the porous layer side, is also capable of being diffused into the porous layer, and the main surface of the first separation membrane that is in contact with the porous membrane (the surface other than the groove portions) is also capable of contributing to the gas permeation. Accordingly, it is possible to further improve the effective surface area that contributes to the gas permeation.

Another embodiment of the gas permeation module includes one or more units including two or more separation membranes in which groove portions for conveying mixed gas are provided on a first main surface, and groove portions for conveying sweep gas are provided on a second main surface. The number of units is not particularly limited, and can be suitably selected in accordance with the design of the device. The number of units, for example, may be 10 or more, 30 or more, 25 or more, or 50 or more. The number of units, for example, may be 6000 or less, 4500 or less, 3000 or less, or 2000 or less. Each of the units may be linked such that the units are layered.

Two or more separation membranes configuring the unit may be layered by being directly adhesively joined to each other, and for example, may be layered via other layers such as a porous layer. In a case of providing the other layers such as the porous layer, it is preferable to use the other layers having a small thickness from the viewpoint of decreasing the size of the gas permeation module. An upper limit value of the thickness of the other layers, for example, may be less than 100 μm, less than 50 μm, or less than 25 μm. A lower limit value of the thickness of the other layers, for example, may be 5 μm or more, or 10 μm or more, from the viewpoint of handleability. As the porous layer, a porous layer that can be applied to the gas permeation module described above can be used.

The separation membrane includes a support including the porous membrane described above, and a gas permeation layer provided on the support. The gas permeation layer is capable of functioning as an adhesive layer for adhesively joining the separation membranes to each other.

In the gas permeation module, in order to separate specific gas from the mixed gas, it is desirable to accelerate the specific gas to pass through the gas permeation layer of the separation membrane to be diffused into the sweep gas, and to prevent other components in the mixed gas from being diffused into the sweep gas. In the gas permeation module according to this embodiment, the groove portions for conveying the mixed gas are separated from the groove portions for conveying the sweep gas by the gas permeation layer or a diffusion prevention layer. By having such a configuration, it is possible to prevent the components configuring the mixed gas from being diffused into the sweep gas without passing through the gas permeation layer or the diffusion prevention layer. From such a viewpoint, in the gas permeation module, it is desirable to cover both of the groove portions for conveying the mixed gas and the surface of the other member facing the groove portions with the gas permeation layer or the diffusion prevention layer, or to cover the entire surface layer of the porous membrane with the gas permeation layer.

The unit described above may include a plurality of separation membranes, and for example, may include a first separation membrane and a second separation membrane. The first separation membrane and the second separation membrane may be arranged such that a first main surface of the first separation membrane and a first main surface of the second separation membrane face each other.

In a case where the unit described above includes the first separation membrane and the second separation membrane as the separation membrane, a porous layer may be provided between the first main surface of the first separation membrane and a second main surface of the second separation membrane. In this case, the porous layer may include a gas permeation layer or a diffusion prevention layer on at least one main surface of a main surface on the first separation membrane side and a main surface on the second separation membrane side, or may include the gas permeation layer or the diffusion prevention layer on the main surface of the porous layer on the first separation membrane side.

Hereinafter, a more specific example of the gas permeation module will be described by using the drawings.

FIG. 10 is a perspective view for describing the configuration of the gas permeation module. In a gas permeation module 650, two units 600 including a first separation membrane 510 and a second separation membrane 520 are layered. A plurality of groove portions 31 for conveying mixed gas are provided on one main surface of the first separation membrane 510. A plurality of groove portions 32 for conveying sweep gas are provided on one main surface of the second separation membrane 520. In FIG. 10, the flow of the mixed gas is represented by MGin and MGout, and the flow of the sweep gas is represented by SGin and SGout (in the other drawings, the same notation is used). Note that, the mixed gas containing separation target gas is supplied to the gas permeation module from the direction of MGin,

and only the separation target gas can be diffused in a thickness direction of the first separation membrane 510 while passing through the first separation membrane 510, is diffused to the sweep gas that is supplied to the gas permeation module from the direction of SGin to the groove portions 32 provided on the main surface of the second separation membrane 520, and is diffused to the direction of SGout. Gas components that have not been capable of being diffused in the thickness direction of the first separation membrane 510 flow to the direction of MGout, and are discharged from the gas permeation module.

The plurality of groove portions 31 provided on one main surface of the first separation membrane 510 and the plurality of groove portions 32 provided on one main surface of the second separation membrane 520 are arranged such that extending directions of the grooves are orthogonal to each other. A relationship between the extending direction of the groove portion 31 and the extending direction of the groove portion 32 is not limited to being orthogonal to each other, may be suitably changed in accordance with the demand characteristics of the gas permeation module, the size of the gas permeation module itself, an installation site, and the like, and for example, the groove portions 31 and the groove portions 32 may be parallel to each other, or may be arranged with an angle. In addition, the groove portions may be linear, bent in the middle, curved, converged, or branched. In addition, the depth of the groove portion may be constant, or may not be constant.

FIG. 11 is a schematic perspective view illustrating an example of the gas permeation module. The gas permeation module 650 includes six units 600 including the first separation membrane 510 and the second separation membrane 520. FIG. 12 is a schematic view illustrating a part of the sectional surface of the gas permeation module 650 taken along line XII-XII illustrated in FIG. 11. FIG. 13 is a schematic view illustrating a part of the sectional surface of the gas permeation module 650 taken along line XIII-XIII illustrated in FIG. 11.

As illustrated in FIG. 12, in the groove portions 31 of the first separation membrane 510, the gas permeation layer 300 is provided on the groove portions 31. In addition, a gas permeation layer 302 is provided in a portion corresponding to the groove portions 31 of the second separation membrane 520. The gas permeation layers 300 and 302 are a layer for allowing the separation target gas to selectively permeate. The groove portions 31 are surrounded by the gas permeation layers 300 and 302, and according to such a configuration, the mixed gas passing through the groove portion 31 and the sweep gas passing through the groove portion 32 of the second separation membrane 520 are prevented from being mixed. The separation target gas passes through the gas permeation layer 300, is diffused to the porous membrane that is a support membrane configuring the first separation membrane 510 and the second separation membrane 520, and for example, is diffused into the sweep gas passing through the groove portion 32 provided on the main surface of the second separation membrane 520, and ejected from the gas permeation module along with the sweep gas. Although it is not illustrated in the gas permeation module in FIG. 11 to FIG. 13, in order to increase effectivity as the gas permeation module, it is preferable that a gas permeation layer or a diffusion prevention layer is also provided in the lateral surface portion of the first separation membrane 510 and the second separation membrane 520. As illustrated in FIG. 13, the gas permeation layer or the diffusion prevention layer is not provided on the main surface side of the second separation membrane 520 on which the groove portions 32 are provided, but it can be expected that selectivity is improved by providing the gas permeation layer or the diffusion prevention layer. In addition, since the gas permeation layer or the diffusion prevention layer is also capable of functioning as an adhesive layer when layering the separation membranes, it is possible to configure the gas permeation module without separately using an adhesive agent or the like by providing the gas permeation layer or the diffusion prevention layer, which is desirable.

What to be formed on the separation membrane is not limited to the groove portions. For example, through holes and the like can be provided. In addition, the groove portions may be formed on both surfaces of the separation membrane. In addition, both of the through holes and the groove portions can also be provided. By using the through holes and the like, it is possible to further ensure the degree of freedom in the design of the device.

FIG. 14 is a perspective view illustrating another example of the gas permeation module. Basically, a gas permeation module 652 illustrated in FIG. 14 also has a layered structure of separation membranes. For convenience of description, only the main configuration will be described. The gas permeation module 652 includes a porous membrane 530 for supplying sweep gas that is positioned in the uppermost portion, a porous membrane 550 for ejecting sweep gas containing separation target gas that is positioned in the lowermost portion, and a separation layer including a plurality of separation membranes positioned between the porous membrane 530 and the porous membrane 550. As an example of the separation membrane configuring the separation layer, a separation membrane 540 positioned in the center portion is illustrated in FIG. 14. It may be considered that a plurality of separation membranes 540 are layered in the separation layer.

The porous membrane 530 includes three through holes 42 for supplying the sweep gas into the gas permeation module 652. The separation membrane configuring the separation layer also includes through holes in a position corresponding to the through holes 42. FIG. 15 is a schematic view when seen from the upper surface of the separation membrane 540 positioned in the center of the separation membranes configuring the separation layer. The separation membrane 540 includes three through holes 42 for supplying the sweep gas, and two through holes 44 for conveying the sweep gas containing the separation target gas to be separated and recovered by the separation membrane between

the through holes 42. FIG. 16 is a partial enlarged view of the top view of the separation membrane 540. A plurality of groove portions 32 for conveying the sweep gas to be supplied from the through hole 42 to the through hole 44 are provided on one main surface 540a of the separation membrane 540. FIG. 17 is a partial enlarged view of the bottom view of the separation membrane 540. A plurality of groove portions 31 for allowing the mixed gas to pass through are provided on the other main surface 540b of the separation membrane 540.

In the mixed gas supplied to the groove portion 31 on the main surface 540b of the separation membrane 540, the separation target gas is diffused into the separation membrane 540 via a gas permeation layer (not illustrated) formed on the groove portion 31, diffused into the sweep gas passing through the groove portion 32 provided on the other main surface 540a, and ejected out of the gas permeation module.

Both of the gas permeation module 650 illustrated in FIG. 11 and the gas permeation module 652 illustrated in FIG. 14 have been described by an example in which the mixed gas and the sweep gas pass through the gas permeation module, but a supply port for supplying the gas described above and an ejection port for ejecting the gas described above may be designed to be on the same lateral surface of the gas permeation module.

FIG. 18 is a perspective view illustrating another example of the gas permeation module. Basically, a gas permeation module 654 illustrated in FIG. 18 also has a layered structure of separation membranes. For convenience of description, only the main configuration will be described. The gas permeation module 654 includes a porous membrane 562 positioned in the lowermost portion, and a separation layer including a plurality of separation membranes provided on the porous membrane 562. As an example of the separation membrane configuring the separation layer, a separation membrane 560 positioned in the center portion is illustrated in FIG. 18. It may be considered that a plurality of separation membranes 560 are layered in the separation layer.

FIG. 19 is a schematic view when seen from the upper surface of the separation membrane 560. The separation membrane 560 includes five through holes 42 for supplying sweep gas and five through holes 44 for ejecting sweep gas on one main surface 560a. FIG. 20 is a partial enlarged view of the top view of the separation membrane 560. On one main surface 560a of the separation membrane 560, groove portions 32a are formed to join the through holes 42, and groove portions 32b are formed to join the through holes 44. On a main surface 56a of the separation membrane 560, a plurality of groove portions 32 are further formed to join the groove portions 32a and the groove portions 32b. FIG. 21 is a partial enlarged view of the bottom view of the separation membrane 560. A plurality of groove portions 31 for allowing mixed gas to pass through are provided on the other main surface 560b of the separation membrane 560.

In the mixed gas supplied to the groove portion 31 on the main surface 560b of the separation membrane 560, separation target gas is diffused into the separation membrane 540 via a gas permeation layer (not illustrated) formed on the groove portion 31, diffused into the sweep gas passing through the groove portion 32 provided on the other main surface 560a, and ejected out of the gas permeation module.

As in the examples illustrated in FIG. 11 to FIG. 21, the groove portions formed on each of the separation membranes may be a conveyance path for gas, and for example, the groove portions formed on each of two separation membranes may be layered to face each other, thereby being a conveyance path including two groove portions.

FIG. 22 is a perspective view illustrating another example of the gas permeation module. A gas permeation module 656 includes six units 602 including a first separation membrane 570 and a second separation membrane 580. FIG. 23 is a schematic view illustrating a part of the sectional surface of the gas permeation module 656 taken along line XXIII-XXIII illustrated in FIG. 22.

As illustrated in FIG. 23, a plurality of groove portions 31 are provided on one main surface of the first separation membrane 570, a plurality of groove portions 31 are provided on one main surface of the second separation membrane 580, and a plurality of groove portions 32 are provided on the other main surface. The first separation membrane 570 and the second separation membrane 580 are layered such that the main surface of the first separation membrane 570 on which the groove portions 31 are provided and the main surface of the second separation membrane 520 on which the groove portions 31 are provided face each other, and a conveyance path for conveying mixed gas is formed by both of the groove portions. Then, the conveyance path is surrounded by the gas permeation layer 300, and only separation target gas in the mixed gas is diffused into the separation membrane, and ejected out of the gas permeation module 656 along with sweep gas in the groove portions 32 provided on the other main surface of the second separation membrane 520. Note that, regarding the gas permeation module 656, an input port and an ejection port for the sweep gas are not clearly notified, and for example, groove portions may be provided on the other main surface of the second separation membrane 520 in a direction orthogonal to the extending direction of the groove portion 31 to intersect with the groove portions 32, and the sweep gas may be ejected out of the gas permeation module 656.

In addition, the unit configuring the gas permeation module may include a porous layer in addition to the separation membrane (a layered body in which the gas permeation membrane is provided on the porous membrane including the concave portions).

A gas permeation module using a porous layer (a porous membrane including no concave portions) is illustrated in FIG. 24. FIG. 24 is a perspective view illustrating another example of the gas permeation module. A gas permeation module 658 includes 11 units 603 including the separation membrane 580, and a porous layer 208 provided on the main

surface of the separation membrane 580 on which a plurality of groove portions 31 for conveying mixed gas are formed. FIG. 25 is a schematic view illustrating a part of the sectional surface of the gas permeation module 658 taken along line XXV-XXV illustrated in FIG. 24. A plurality of groove portions 31 are provided on one main surface 580a of the separation membrane 580, and a plurality of groove portions 32 are provided on the other main surface 580b. Then, the gas permeation layer 300 is provided on the main surface 580a of the separation membrane 580, and the porous layer 208 is provided on the gas permeation layer 300. The gas permeation layer 302 is provided on the surface of the porous layer 208 on a side opposite to the main surface 580a side and on the lateral surface of the porous layer 208. By providing the gas permeation layer 302, it is possible to prevent the mixed gas that has flowed from the groove portion 31 from being mixed with the sweep gas flowing the groove portion 32 without passing through the gas permeation layer 300 or 302. In addition, since the gas permeation layers 300 and 302 are also capable of exhibiting a function of adhesively joining the layers to each other, the mechanical strength of the gas permeation module 658 can also be improved.

FIG. 26 is a perspective view illustrating another example of the gas permeation module. A gas permeation module 660 includes five units 604 including a separation membrane 590, and the porous layer 208 provided on the separation membrane 590. FIG. 27 is a schematic view illustrating a part of the sectional surface of the gas permeation module 660 taken along line XXVII-XXVII illustrated in FIG. 26. FIG. 28 is a schematic view illustrating a part of the sectional surface of the gas permeation module 660 taken along line XXVIII-XXVIII illustrated in FIG. 26.

A through hole 42 is provided in the separation membrane 590 and the porous layer 208. A plurality of groove portions 31 are provided on one main surface of the separation membrane 590, and a plurality of groove portions 32a and 32b are provided on the other main surface. As illustrated in FIG. 29, the groove portion 32a and the groove portion 32b are not linked to each other. In each of the separation membranes, the through hole 42 is linked to the groove portions 32b, and fluid for generating sweep gas (for example, hot water for generating water vapor) supplied from the through hole 42 is supplied in an in-plane direction of each of the separation membranes. Here, the sweep gas generated from the fluid is supplied by being infiltrated into the groove portion 32a provided on the other main surface of the separation membrane 590 via the porous membrane. The sweep gas supplied to the groove portion 32 involves separation target gas diffused from the mixed gas supplied to the groove portion 31 via the gas permeation layer 300, and is ejected out of the gas permeation module 660. As with the gas permeation module 660, by introducing the fluid into the gas permeation module such that the sweep gas is generated inside, instead of supplying the sweep gas, it is possible to more stably supply the sweep gas. In addition, by allowing hot water to pass through the gas permeation module, it can be also expected that the entire gas permeation module is warmed, and separation capability in the gas permeation layer 300 is improved.

In the gas separation module, the sweep gas is capable of more effectively separating the separation target gas by setting a partial pressure of the separation target gas in the groove portion that the sweep gas flows to be constantly lower than a partial pressure of the separation target gas in the groove portion that the mixed gas flows. For example, insofar as the partial pressure of the separation target gas can be maintained to be low by connecting a vacuum pump to a flow channel that the sweep gas has flowed, the sweep gas may not flow the flow channel that the sweep gas has flowed. In addition, insofar as the partial pressure of the separation target gas in the mixed gas can be maintained to be high by connecting a compressor to a flow channel that the mixed gas has flowed, the sweep gas may not flow the flow channel that the sweep gas has flowed.

As described above, some embodiments have been described, but the present disclosure is not limited to the embodiments described above. In addition, the contents of the description of the embodiments can be applied to each other.

## Examples

Hereinafter, the contents of the present disclosure will be described in more detail with reference to Examples and Reference Examples. Here, the present disclosure is not limited to the Examples described below.

(Example 1)

[Production of Porous Membrane Using Short-Pulse Laser Processing]

Polyether sulfone (Microporous Membrane Having Thickness: 150 μm) was prepared as a base material including pores. The surface of the base material was irradiated with second-harmonic YAG laser (Wavelength: 532 nm) at Pulse Width: $15 \times 10^{-12}$ seconds. The laser irradiation was performed once, and in this case, the irradiation was performed by condensing the laser such that the fluence was 0.2 $J/cm^2$. According to the operation described above, a porous membrane including concave portions on the surface was prepared. A SEM image of the processed surface of the porous membrane is illustrated in FIG. 30. FIG. 30 is a SEM photograph illustrating a part of the porous membrane formed by pulsed laser processing in Example 1. As illustrated in FIG. 30, it was checked that the porous membrane of

Example 1 included an excellent processed surface, and the pores of the base material were sufficiently maintained in an opened state even on the processed surface. The diameter of the concave portion formed at this time was approximately 10 $\mu$m.

(Example 2)

A porous membrane including concave portions on the surface was prepared as with Example 1, except that the wavelength of the laser was changed to 355 nm. A SEM image of the processed surface of the porous membrane is illustrated in FIG. 31. As illustrated in FIG. 31, it was checked that the porous membrane of Example 2 included an excellent processed surface, the shape of the pores of the base material was extremely slightly changed, and it seemed that the constituent material of the base material had been melted, but a level causing no practical issues was maintained.

(Reference Example 1)

A porous membrane including concave portions on the surface was prepared as with Example 1, except that the laser was changed to ArF excimer laser (Wavelength: 193 nm), and the pulse width was changed to 20 nanoseconds. A SEM image of the processed surface of the porous membrane is illustrated in FIG. 32. As illustrated in FIG. 32, it was checked that the porous membrane of Reference Example 1 included the concave portions formed on the surface, but there was a blockage in the pore due to the melting of the constituent material of the base material.

(Example 3)

A porous membrane including concave portions on the surface was prepared as with Example 1 except that the fluence was changed to 1.0 J/cm$^2$. A SEM image of the processed surface of the porous membrane is illustrated in FIG. 33. As illustrated in FIG. 33, it was checked that the porous membrane of Example 3 included an excellent processed surface, and the pores of the base material were sufficiently maintained in an opened state even on the processed surface. In spite of applying laser having the same beam diameter as that in Example 1, the diameter of the concave portion formed at this time is too large to fit in the SEM image of FIG. 33. Accordingly, it was checked that large concave portions were formed by increasing the fluence, compared to Example 1.

(Example 4)

A porous membrane including concave portions on the surface was prepared as with Example 1, except that the wavelength of the laser was changed to 355 nm, and the fluence was changed to 1.0 J/cm$^2$. A SEM image of the processed surface of the porous membrane is illustrated in FIG. 34. As illustrated in FIG. 34, it was checked that the porous membrane of Example 4 included an excellent processed surface, the shape of the pores of the base material was extremely slightly changed, and it seemed that the constituent material of the base material had been melted, but a level causing no practical issues was maintained.

(Reference Example 2)

A porous membrane including concave portions on the surface was prepared as with Example 1, except that the laser was changed to ArF excimer laser (Wavelength: 193 nm), the pulse width was changed to 10 $\times$ 10$^{-9}$ seconds, and the fluence was changed to 1.0 J/cm$^2$. A SEM image of the processed surface of the porous membrane is illustrated in FIG. 35. As illustrated in FIG. 35, it was checked that the porous membrane of Reference Example 2 included the concave portions formed on the surface, but there was a blockage in the pore due to the melting of the constituent material of the base material.

(Example 5)

[Production of Porous Membrane Using Polymerization Reaction-Induced Phase Separation]

30% by mass of ethyl hexyl acrylate, 20% by mass of ethylene glycol dimethacrylate, 30% by mass of propanol, and 20% by mass of 1,4-butanediol were measured and mixed in a vessel to prepare a solution. 1% by mass of 1-hydroxycyclohexyl-phenyl ketone (Product Name: Omnirad 184, manufactured by IGM Resins B.V.) was added to the solution to prepare a polymerization solution.
As a mold including a plurality of convex portions on the surface, a PVA sheet (Shape of Convex Portion: Square of 5 $\mu$m $\times$ 5 $\mu$m, Height of Convex Portion: 10 $\mu$m, Interval between Convex Portions: 5 $\mu$m) was prepared,

and left to stand on a quartz plate coated with PVA, a spacer having a thickness of 200 μm was arranged around the PVA sheet, and then, the inside of the spacer was filled with the polymerization solution, and covered with another quartz plate coated with PVA as a lid. After that, an ultraviolet ray of Exposure Amount: 300 mW/m$^2$ (Exposure Amount at Wavelength: 365 nm) was applied at a normal temperature for 15 minutes by using a UV lamp. After the light irradiation, a porous membrane was peeled off from the mold, and washed with acetonitrile to obtain the porous membrane.

SEM images of the surface and the sectional surface of the obtained porous membrane are illustrated in FIG. 36 to FIG. 39. FIG. 36 is a SEM photograph (top view) illustrating a part of the porous membrane formed by polymerization reaction-induced phase separation in Example 5. FIG. 37 is a SEM photograph illustrating a part of the main surface of the porous membrane formed by the polymerization reaction-induced phase separation in Example 5. FIG. 38 is SEM photograph illustrating the bottom surface of the concave portion of the porous membrane formed by the polymerization reaction-induced phase separation in Example 5. FIG. 39 is a SEM photograph illustrating the partial sectional surface of the porous membrane formed by the polymerization reaction-induced phase separation in Example 5. As illustrated in FIG. 36 to FIG. 39, in a case of forming the porous membrane by using the polymerization reaction-induced phase separation, it was checked that the pores were formed uniformly over the entire porous membrane. Such a distribution of the pores is a feature that was not found in a porous membrane to be formed by a non-solvent-induced phase separation method of the related art.

Similarly, as a mold including a plurality of linear convex portions on the surface, a silicon wafer (Shape of Convex Portion: Linear Shape having Depth of 5 μm, Width of 5 μm, and Height of 5 μm, Interval between Convex Portions: 5 μm) processed by a photolithography method was prepared, and pressed against a cycloolefin polymer film (a thickness of 0.1 mm) while heating to 200°C such that concave portions were transferred to the cycloolefin polymer film. The surface of the cycloolefin film on which the concave portions were formed was filled with an epoxy resin (ThreeBond TB2088E), and the cycloolefin film was adhesively joined onto a quartz plate, and the mold was released to prepare a quartz plate including epoxy resin convex portions. The quartz plate including the epoxy resin convex portions was subjected to an atmospheric plasma treatment, and coated with PVA as a release material by bar coating. By adjusting the concentration or the coating amount of a PVA aqueous solution when applying PVA, corners at which a flat surface and a flat surface of the bottom portion in the epoxy resin concave portion intersected with each other were thickly coated with PVA to be capable of preparing a mold in which the flat surface and the flat surface were joined by a curved surface. In such a case, a mold including a curved surface with a small curvature was obtained as the concentration or the coating amount of PVA increased. The epoxy resin mold including convex portions coated with PVA was left to stand on a quartz plate, a spacer having a thickness of 200 μm was arranged around the mold, and then, the inside of the spacer was filled with the polymerization solution, and covered with another quartz plate coated with PVA as a lid. After that, an ultraviolet ray of Exposure Amount: 300 mW/m$^2$ (Exposure Amount at Wavelength: 365 nm) was applied at a normal temperature for 15 minutes by using a UV lamp. After the light irradiation, a porous membrane was peeled off from the mold, and washed with acetonitrile to obtain the porous membrane.

SEM images of the surface and the sectional surface of the obtained porous membrane are illustrated in FIG. 40 to FIG. 42. FIG. 40 is a SEM photograph illustrating a part of the porous membrane formed by polymerization reaction-induced phase separation when using a linear mold in Example 5. FIG. 40 is a SEM photograph illustrating a part of the main surface of the porous membrane formed by the polymerization reaction-induced phase separation in Example 5. FIG. 41 is a SEM photograph illustrating a part of the lateral surface of the porous membrane formed by the polymerization reaction-induced phase separation when using the linear mold in Example 5. FIG. 42 is a SEM photograph illustrating a part of the partial sectional surface of the porous membrane formed by the polymerization reaction-induced phase separation when using the linear mold in Example 5. As illustrated in FIG. 40 to FIG. 42, in a case of forming the porous membrane by using the polymerization reaction-induced phase separation, it was checked that the pores were formed uniformly over the entire porous membrane. Such a distribution of the pores is the feature that was not found in the porous membrane to be formed by the non-solvent-induced phase separation method of the related art. In addition, unlike a mold structure of the silicon wafer processed by the photolithography method, the concave portion molded by the mold had a curved structure due to PVA applied to the surface of the mold. By having the curved structure, it was easy to form a flaw-free separation layer when forming the separation layer, compared to a porous membrane having a rectangular structure.

(Reference Example 3)

Polyether sulfone (PES) and N-methyl-2-pyrrolidone (NMP) were added to a vessel, and mixed such that a ratio of PES to NMP was 20% by mass to prepare a solution. The solution was stirred with a stirrer (250 rpm) at a temperature of 40°C for 3 hours such that PES was sufficiently dissolved to prepare a transparent solution. After that, the transparent solution was cooled to a room temperature, 2-mercaptoethanol (2ME) that is a poor solvent of PES was added such that the content of 2ME was 82.8 parts by mass with respect to 100 parts by mass of NMP, and stirred with a stirrer (250 rpm) at a room temperature all night and all day to prepare a cast solution.

Concavo-convex portions were formed on a silicon substrate by lithography, RCA washing was performed, and then, drying was performed with a nitrogen gun, and the surface of the silicon substrate was hydrophilized to form a mold. The cast solution prepared as described above was case on the surface of the concavo-convex portions of the formed mold with a blade applicator to provide a liquid membrane. In this case, a gap between the mold and the applicator was set to 120 μm, and a sweep rate was adjusted to 2 mm/seconds. After that, non-solvent-induced phase separation was induced by exposing the liquid membrane to an environment of relative humidity of 87±3% to form a porous membrane. After the liquid membrane was exposed to the environment described above for 1 minute, the silicon substrate was immersed in a water tank (a coagulation tank) for several seconds to solidify the porous membrane and to peel off the porous membrane from the mold. In 1 hour, the peeled porous membrane was put in a water tank that was separately prepared and left to stand all night and all day to completely remove a solvent such as NMP.

(Reference Example 4)

A porous membrane was prepared as with Reference Example 3, except that the content of 2ME was changed to 57.1 parts by mass with respect to 100 parts by mass of NMP.

SEM images of the surfaces and the sectional surfaces of the porous membranes obtained in Reference Example 3 and Reference Example 4 are illustrated in FIG. 43 and FIG. 44, and FIG. 45 and FIG. 46, respectively. FIG. 43 is a SEM photograph illustrating a part of the main surface of the porous membrane formed by the non-solvent-induced phase separation in Reference Example 3. FIG. 44 is a SEM photograph illustrating the partial sectional surface of the porous membrane formed by the non-solvent-induced phase separation in Reference Example 3. FIG. 45 is a SEM photograph illustrating a part of the main surface of the porous membrane formed by non-solvent-induced phase separation in Reference Example 4. FIG. 46 is a SEM photograph illustrating the partial sectional surface of the porous membrane formed by the non-solvent-induced phase separation in Reference Example 4. As illustrated in FIG. 43 to FIG. 46, in the porous membranes obtained in Reference Example 3 and Reference Example 4, it was checked that there was a variation in an average pore diameter in accordance with the position of the pores in the porous membrane. Further, the average pore diameter of the pores was obtained from each of the SEM photographs. Results are shown in Table 1. In Table 1, the total surface pore area indicates a value obtained by dividing the total area of the pores exposed to the surface of the concave portion or the convex portion by the area. From the results shown in Table 1, it was checked that there was a variation in the average pore diameter, in accordance with the position of the pores in the porous membrane.

[Table 1]

| | Reference Example 3 | | Reference Example 4 | |
|---|---|---|---|---|
| | Average pore diameter [nm] | Total surface pore area [%] | Average pore diameter [nm] | Total surface pore area [%] |
| Pores on main surface | 46 | 3.27 | 44 | 2.33 |
| Pores on wall surface of concave portion | 20.81 | 9.1 | 115 | 9.3 |
| Pores on bottom surface of concave portion | 1095 | 31.4 | 990 | 26.5 |

<Evaluation as Support for $CO_2$ Permeation Membrane of Porous Membrane>

A $CO_2$ permeation membrane was prepared by using the porous membranes prepared in Example 1 and Example 5, and capability as a gas permeation membrane (gas permeation capability, and carbon dioxide/nitrogen selectivity) was evaluated.

First, as gelable polymeric particles for forming a gas permeation layer to be provided on the porous membrane, gelable polymeric particles (Average Particle Diameter: 235 nm) having a dimethyl amino group were prepared in accordance with the following reaction formula.

[Formula 1]

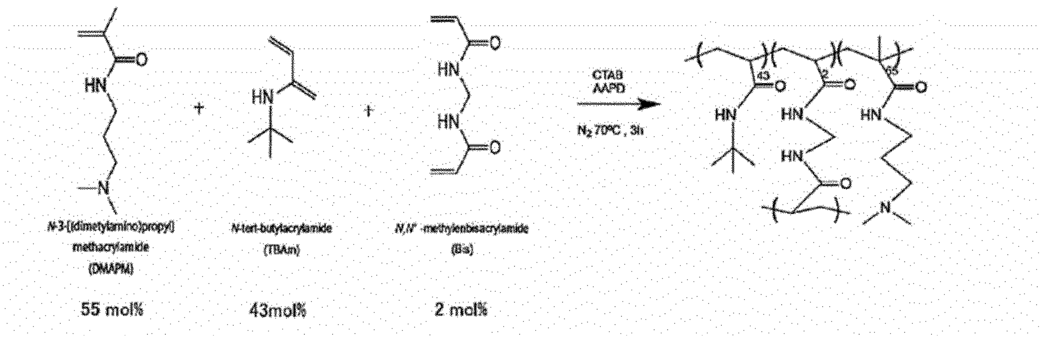


1 L of pure water was added to a three-necked flask of 2 L, and warmed to 70°C. 2 mM of cetyl trimethyl ammonium bromide as a surfactant was added thereto, and a monomer mixture was dissolved such that a monomer concentration was 312 mM to obtain a polymerization solution. Here, as the monomer mixture, a mixture of 55% by mole of N-(dimethyl aminopropyl) methacrylamide, 43% by mole of N-tert-butyl acrylamide, and 2% by mole of N,N-methylene bisacrylamide was used. Note that, N-(dimethyl aminopropyl) methacrylamide was used after removing a polymerization inhibitor with an alumina column. In addition, N-tert-butyl acrylamide was dissolved in advance in a small amount of methanol, and added as 0.68 g/mL of a solution.

The polymerization solution was stirred with a mechanical stirrer while retaining the temperature in the three-necked flask at 70°C, and nitrogen was bubbled for 1 hour to remove oxygen in the polymerization solution and the three-necked flask. Next, an initiator solution in which 700 mg of 2,2-azobis(2-methyl propionamidine) dihydrochloride was dissolved in 5 mL of pure water was added to the polymerization solution, and a polymerization reaction was performed in a nitrogen atmosphere and a condition of 70°C for 1.5 hours. After the polymerization reaction, a precipitate was filtered, and dialysis was performed for 3 days by using a dialysis membrane (manufactured by Spectrum Laboratories, Inc., Molecular Weight Cut Off (MWC): 12-14.000, Width: 75 mm, Vol/Length: 18 mL/mL) to remove the unreacted monomer and the surfactant. Counter anions were removed from the precipitate after the dialysis by using a strongly basic ion exchange resin, and freeze drying was performed to obtain gelable polymeric particles. An average particle diameter (hydrodynamic diameter) of the obtained gelable polymeric particles was 235 nm when swelled in water at 30°C, and 218 nm when swelled in water at 40°C.

The gelable polymeric particles prepared as described above were dispersed in water and swelled to prepare a dispersion liquid in which the concentration of the gelable polymeric particles was 1 mg/mL. The surface of the porous membrane described above was coated with the prepared dispersion liquid by a spray coating method. Accordingly, a gas permeation layer having Thickness: 0.52 $\mu$m was formed to prepare a $CO_2$ permeation membrane. FIG. 47 and FIG. 48 are SEM photographs illustrating the surfaces of a support and a separation membrane in a case of using the porous membrane prepared in Example 1 as a support. As illustrated in FIG. 48, it was checked that the gas permeation layer was densely formed on the porous membrane formed in Example 1.

FIG. 49 is a SEM photograph illustrating the sectional surface of the separation membrane in a case of using the porous membrane prepared in Example 5 as a support. As illustrated in FIG. 49, it was checked that the gas permeation layer was densely formed on the porous membrane formed in Example 5.

FIG. 50 and FIG. 51 are SEM photographs illustrating the surface and the sectional surface of a separation membrane in a case of using the porous membrane prepared with the linear mold in Example 5 as a support. As illustrated in FIG. 50 and FIG. 51, it was checked that the gas permeation layer was densely formed on the porous membrane formed in Example 5.

<Evaluation as Support for Higher-Capability $CO_2$ Permeation Membrane of Porous Membrane>

A higher-capability $CO_2$ permeation membrane was prepared by using the porous membranes prepared in Example 1 and Example 5, and capability as a gas permeation membrane (gas permeation capability, and carbon dioxide/nitrogen selectivity) was evaluated.

First, as gelable polymeric particles for forming a gas permeation layer to be provided on the porous membrane, gelable polymeric particles (Average Particle Diameter: 486 nm) having a carboxyl group were prepared in accordance with the following literature.

Y. Hoshino, M. Moribe, N. Gondo, T. Jibiki, M. Nakamoto, B. Guo, R. Adachi, Y. Miura, ACS Applied Polymer Materials 2020, 2, 505.

1 L of pure water was added to a three-necked flask of 0.5 L, and warmed to 70°C. 2 mM of sodium dodecyl sulfate as a surfactant was added thereto, and a monomer mixture was dissolved such that a monomer concentration was 310.5 mM to obtain a polymerization solution. Here, as the monomer mixture, a mixture of 55% by mole of a methacrylic acid, 43% by mole of N-tert-butyl acrylamide, and 2% by mole of N,N-methylene bisacrylamide was used. Note that, the methacrylic acid was used after removing a polymerization inhibitor with alumina column. In addition, N-tert-butyl acrylamide was dissolved in advance in a small amount of methanol, and added as 0.68 g/mL of a solution.

The polymerization solution was stirred with a magnetic stirrer while retaining the temperature in the three-necked flask at 70°C, and nitrogen was bubbled for 1 hour to remove oxygen in the polymerization solution and the three-necked flask. Next, an initiator solution in which azobisisobutyronitrile was dissolved in 1 mL of methanol such that the final concentration was 2.58 mM was added to the polymerization solution, and a polymerization reaction was performed in a nitrogen atmosphere and a condition of 70°C for 1 hour. After the polymerization reaction, dialysis was performed for 3 days by using a dialysis membrane (manufactured by Spectrum Laboratories, Inc., Molecular Weight Cut Off (MWC): 12-14.000, Width: 75 mm, Vol/Length: 18 mL/mL) to remove the unreacted monomer and the surfactant. Counter cations were removed from a precipitate after the dialysis by using a strongly acidic ion exchange resin, and freeze drying was performed to obtain gelable polymeric particles. An average particle diameter (hydrodynamic diameter) of the obtained gelable polymeric particles was 486 nm when swelled in water at 30°C.

The gelable polymeric particles prepared as described above were diluted with water with added 2-aminoethyl aminoethanol that is alkanol amine. A dispersion liquid was prepared in which the concentration of the gelable polymeric particles was 1 mg/mL, and the concentration of 2-aminoethyl aminoethanol was 5 mg/mL. The average particle diameter (hydrodynamic diameter) of the gelable polymeric particles in the prepared dispersion liquid was 1790 nm. The surface of the porous membrane described above was coated with this dispersion liquid by a spray coating method. Accordingly, a gas permeation layer was formed such that a dry membrane thickness of gelable polymeric fine particles was Thickness: 0.26 μm to prepare a $CO_2$ permeation membrane.

<Evaluation as Support for $CO_2$ Permeation Membrane of Porous Membrane>

As with Example 1, a $CO_2$ permeation membrane was prepared by using the porous membranes prepared in Example 5 and Reference Example 3, and capability as a gas permeation membrane (gas permeation capability, and carbon dioxide/nitrogen selectivity) was evaluated.

The evaluation of the gas permeation capability and the gas separation capability was performed by using a gas permeation capability measurement device illustrated in FIG. 52. The gas permeation capability measurement device illustrated in FIG. 52 includes a thermostatic bath 61 in which a $CO_2$ permeation membrane can be contained in a constant condition, a supply gas delivery system 62, a sweep gas delivery system 63, and a gas chromatograph 64. The supply gas delivery system 62 includes a nitrogen supply source 65, a carbon dioxide supply source 66, and a humidifier 67, and is configured such that mixed gas (supply gas) in which nitrogen supplied from the nitrogen supply source 65 and carbon dioxide supplied from the carbon dioxide supply source 66 are mixed at a predetermined ratio is humidified with the humidifier 67, and then, delivered to a $CO_2$ permeation membrane 70.

The sweep gas delivery system 63 includes a helium gas supply source 68 and a humidifier 69, and is configured such that helium gas (sweep gas) supplied from the helium gas supply source 68 is humidified with the humidifier 69, and then, delivered to the $CO_2$ permeation membrane 70. The humidifiers 67 and 69 of the supply gas delivery system 62 and the sweep gas delivery system 63 are a bubbler type humidifier in which humidification is performed by allowing gas introduced into the humidifiers 67 and 69 to pass through water, and the relative humidity of gas due to the humidification is controlled by a water temperature. The gas chromatograph 64 is configured such that the components of gas discharged from the $CO_2$ permeation membrane are separated to detect a partial pressure. On the basis of data obtained by the gas chromatograph 64, the permeation flux (the gas permeation capability) and the selective rate (the carbon dioxide/nitrogen selectivity) of each of the components of the discharged gas are calculated.

Note that, the measurement was performed by setting the flow rate of nitrogen to 90 mL/minute and the flow rate of carbon dioxide to 10 mL/minute, in the supply gas delivery system 62, by setting the flow rate of helium gas to 10 mL/minute in the sweep gas delivery system, and by maintaining the inside of the thermostatic bath at 1 atmosphere and 40°C. In addition, the flow rate of each gas was indicated as a flow rate at 1 atmosphere and 20°C (a standard state). A humidifier temperature (water temperature) is 41°C, unless otherwise stated.

Results are shown in FIG. 53 and FIG. 54. FIG. 53 is a graph illustrating a result of using the gas permeation membrane (in the graph, represented by a "hierarchic structure") prepared by using the porous membrane obtained in Example 5. In FIG. 53, for comparison, a result of using an example (in the graph, represented by a "smooth film") using a flat membrane (a porous membrane formed on a substrate including no concavities and convexities, but not on a mold) formed by the same polymerization reaction-induced phase separation method as that in Example 5 is also illustrated. FIG. 54 is a graph illustrating a result of using the gas permeation membrane (in the graph, represented by a "hierarchic structure") prepared by using the porous membrane obtained in Example 5 as with FIG. 53. Then, in FIG. 54, for

comparison, a result of using a commercially available nitrocellulose microporous membrane (in the graph, represented by a "smooth film") prepared by a non-solvent phase separation method as a support is also illustrated.

As seen from FIG. 53 and FIG. 54, in a case of using the porous membrane obtained in Example 5, it was checked that the permeation flux (GPU) was dramatically improved.

<Evaluation as Support for High-Capability $CO_2$ Permeation Membrane of Porous Membrane>

Results are shown in FIG. 55. FIG. 55 is a graph illustrating a result of using the gas permeation membrane (in the graph, represented by a "hierarchic structure") prepared by using the porous membrane obtained in Example 5. In FIG. 55, for comparison, a result of using an example (in the graph, represented by a "smooth film") using a flat membrane (a porous membrane formed on a substrate including no concavities and convexities, but not on a mold) formed by the same polymerization reaction-induced phase separation method as that in Example 5 is also illustrated. As seen from FIG. 55, in a case of using the porous membrane obtained in Example 5, it was checked that the permeation flux (GPU) was dramatically improved.

Further, a porous membrane including a plurality of concave portions was formed by pulsed laser processing, and evaluation as a support for a $CO_2$ permeation membrane was performed as with Example 5 and the like. As an evaluation sample, two porous membranes were prepared in which a pitch between a plurality of concave portions was changed. The pitch between the concave portions of the obtained porous membrane was 45 $\mu$m and 30 $\mu$m. As with a case of using the porous membrane in Example 5 as a support, a gas permeation layer was provided by using the porous membrane as a support. The top view of the obtained gas permeation membrane is illustrated in FIG. 56 and FIG. 57. FIG. 56 is a SEM photograph (top view) illustrating the surface of a separation membrane using a porous membrane in which a pitch between the concave portions is 45 $\mu$m. FIG. 57 is a SEM photograph (top view) of the surface of a separation membrane using a porous membrane in which a pitch between the concave portions is 30 $\mu$m. As illustrated in FIG. 56 and FIG. 57, according to a preparation method using the pulsed laser processing, it is possible to easily process a concave portion into the shape of a circular cone, a triangular pyramid, or a semisphere, unlike concavo-convex processing using a normal mold. Accordingly, mass transfer resistance or a pressure loss is reduced in order to improve the separation capability of the separation membrane, and the degree of freedom in the design of a membrane is improved in order to increase a separation efficiency. For example, various designs such as design for making the fluidized state of fluid turbulent, design for effectively causing convection, and design for decreasing the thickness of a fluid membrane can be performed. In addition, an effective membrane area can also be improved.

Evaluation results of capability as a gas permeation membrane (gas permeation capability, and carbon dioxide/nitrogen selectivity) with respect to a separation membrane, illustrated in FIG. 56 and FIG. 57, are illustrated in FIG. 58 and FIG. 59. It was checked that all of the results were excellent, and the porous membrane to be obtained by the pulsed laser processing was also useful as a support of a separation membrane.

(Example 6)

[Production of Gas Permeation Module]

<Design of Porous Membrane>

First, a porous membrane for a gas permeation module as illustrated in FIG. 60 was designed. In FIG. 60, two porous membranes are illustrated, and each numerical value indicates a dimension. In the porous membranes illustrated in FIGS. 60(a) and 60(b), a plurality of groove portions are formed on the surface of a shaded portion (not intending to the sectional surface).

The porous membrane illustrated in FIG. 60 includes a polyether sulfone microporous membrane (Thickness: 0.15 mm) of 25 mm square, and slit portions for aeration (in FIG. 60, a gray portion) having a width of 1 mm are provided in a position 2.5 mm away from the outer circumstance. The porous membrane has a structure in which a pair of slit portions are connected by a micrometer-scale concavo-convex structure (groove portions). In order to prevent the twisting of the porous membrane, a support structure of 1 mm was provided in the center portion of slits that are not connected by the concavo-convex structure, in the slits.

The slit portion of FIG. 60 can be formed by being cut out with laser processing to penetrate through the porous membrane. It was designed such that mixed gas or sweep gas was capable of flowing toward a layering direction of the layered porous membranes through the slit portion, being supplied to an in-plane direction along the concavo-convex structure (groove portions) provided on the main surface each of the porous membranes, flowing in a direction parallel to the layering direction of the porous membranes (either up or down) through another slit portion, and being discharged out of the gas permeation module.

<Preparation of Porous Membrane>

Next, slit portions were formed on a polyether sulfone microporous membrane (Thickness: 0.15 mm), and a concavo-convex structure (groove portions) was formed on the surface of the microporous membrane positioned between the slit portions, in accordance with the design illustrated in FIG. 60. The groove portion was formed by applying second-harmonic YAG laser (Wavelength: 532 nm) at Pulse Width: $15 \times 10^{-12}$ seconds. A laser irradiation step was repeated 9 times in total such that the entire surface of square grids with a gap of 45 $\mu$m was irradiated with the laser once, and the irradiation was performed once by moving an irradiation position in parallel by 5 $\mu$m to form continuous linear concave portions (groove portions). Regarding the slit portion, cutout processing was performed by irradiating the polyether sulfone microporous membrane with laser until the microporous membrane was penetrated in a thickness direction. The appearance of the obtained processed porous membrane is illustrated in FIG. 61. In addition, a SEM image of the processed surface of the porous membrane is illustrated in FIG. 62, FIG. 63, and FIG. 64.

FIG. 62 is a SEM image when a part of the plurality of groove portions formed on the main surface of the microporous membrane is seen from the upper surface. As illustrated in FIG. 62, it was checked that it was possible to excellently process groove portions having different depths, in accordance with the number of times for performing the irradiation and the irradiation position of the pulsed laser. This is a feature that may not be found in a processing method of a concave portion using a mold prepared by photolithography or the like. Since there are portions having different depths in one groove portion, it is possible to obtain a porous membrane having a surface area larger than that of a porous membrane including groove portions having a uniform depth. In addition, by including the groove portions having different depths, the flow of fluid effectively becomes turbulent when the fluid flows to the groove, and substance transport can be attained with a high efficiency. That is, it is possible to improve the permeation flux of the substance in a separation layer by making the fluidized state of the fluid turbulent, by effectively causing convection, or by reducing the thickness of a fluid membrane. Further, in order to increase the degree of freedom in the design of a concavo-convex portion of a membrane, design for improving separation capability while decreasing a pressure loss can be performed.

FIG. 63 is a SEM image in which a part of the groove portion is further enlarged. As illustrated in FIG. 63, it was checked that even in a case of performing the laser irradiation a plurality of times, pores were maintained on the bottom surface and the wall surface of the groove portion without being blocked. FIG. 64 is a SEM image in which the plurality of groove portions formed on the main surface of the microporous membrane are checked from a sectional direction. As illustrated in FIG. 64, it was checked that according to pulsed laser processing, it was possible to easily process a concave portion into a trapezoidal or triangular shape, unlike concavo-convex processing using a normal mold. In addition, it was checked that it was possible to excellently process concave portions having different depths, in accordance with the number of times for performing the irradiation and the irradiation position of the pulsed laser. In addition, as illustrated in FIG. 64, a depth difference of 30% or more can be observed in a deep portion and a shallow portion of the concave portion. This indicates that the concave portions having different depths can be easily molded in accordance with the number of times of the laser irradiation or the overlapping of the irradiation positions of a plurality of times of the laser irradiation. According to this method, it is indicated that a groove portion having a concavo-convex structure inside thereof, and a concave portion having a concavo-convex structure inside thereof can be molded. Accordingly, it is possible to further increase the surface area of the groove portion. Simultaneously, it is possible to design the structure of the groove such that the flow of the fluid preferably becomes turbulent by the concavo-convex structure when the fluid flows to cause a turbulent flow or convection. By making the fluid flowing to the groove portion turbulent, it is possible to reduce the fluid membrane to be formed on the surface of the membrane, and to accelerate the transport of the substance or the heat to the surface of the membrane. As a result thereof, it is possible to produce a separation membrane in which the permeation flux of the substance or the heat per unit area is extremely fast. Further, when the separation membranes are layered, it is possible to produce a separation module in which the permeation flux of the substance or the heat per unit volume is extremely fast.

<Preparation of Separation Membrane>

Gelable polymeric particles and a dispersion liquid were prepared by the same method as the method in "Evaluation as Support for $CO_2$ Permeation Membrane of Porous Membrane" described above. The surface of the porous membrane described above was coated with the prepared dispersion liquid by a spray coating method. In FIG. 65 and FIG. 66, SEM images illustrating the surface of a separation membrane (a support and a gelable polymeric particle membrane provided on the support) in a case of using the porous membrane prepared as described above as a support are illustrated. FIG. 65 is a SEM image when seen from the upper surface of the separation membrane, and FIG. 66 is a SEM image when seen from a sectional direction of the separation membrane. As illustrated in FIG. 65 and FIG. 66, it was checked that the layer of the gelable polymeric particle membrane was densely formed on the porous membrane.

<Preparation of Gas Permeation Module>

Two separation membranes prepared as described above were layered such that extending directions of groove portions were alternately at an angle of 90°, and pressure-bonded to prepare a gas permeation module A. In addition, the main surface of the separation membrane prepared as described above on a side opposite to the main surface on which the groove portions were provided was also coated with the dispersion liquid described above by spray coating to provide a gelable polymeric particle membrane, and then, two separation membranes were layered such that the extending directions of the groove portions were alternately at an angle of 90°, and pressure-bonded to prepare a gas permeation module B. FIG. 67 and FIG. 68 are SEM images illustrating a part of the sectional surface of the gas permeation module A. FIG. 69 and FIG. 70 are SEM images illustrating a part of the sectional surface of the gas permeation module B. As illustrated in FIG. 67 to FIG. 70, it was checked that the porous membranes were adhesively joined to each other by the gelable polymeric particle membrane that is a gas permeation layer. Accordingly, a flow channel having a hollow structure for conveying fluid was formed. Note that, as illustrated in FIG. 69, it was checked that by providing the gelable polymeric particle membrane on the both main surfaces of the separation membrane, the porous membranes were more densely adhesively joined to each other, and the entire outer circumstance of the flow channel having a hollow structure was capable of being covered with the gelable polymeric particle membrane. The layer of the gelable polymeric fine particles was excellently formed not only on the lateral surface of the flow channel, but also on the end surface of the porous membrane or the lateral surface of a slit structure subjected to cutout processing with laser. By forming a separation layer on the end surface or the lateral surface of the slit, as illustrated in FIG. 25 or FIG. 27, it is possible to form a diffusion prevention layer for suppressing a decrease in separation capability due to the free diffusion of mixed gas to a sweep gas side. In particular, when the mixed gas side and the sweep gas side are separated by the diffusion prevention layer in which the permeation flux of separation target gas is higher than 1.1 times the permeation flux of foreign gas other than the separation target gas, and the permeation flux of the foreign gas is smaller than the permeation flux of foreign gas in the gas permeation layer, it is possible to suppress a decrease in the separation capability. It was also possible to excellently prepare the same module even when 50 separation membranes are layered.

<Evaluation as Gas Permeation Module for $CO_2$>

The gas permeation module A and the gas permeation module B prepared as described above were subjected to capability evaluation as a gas permeation module for $CO_2$. The evaluation was performed by using the gas permeation capability measurement device illustrated in FIG. 52 as in "Evaluation as Support for $CO_2$ Permeation Membrane of Porous Membrane" described above, and by installing a gas permeation module instead of the $CO_2$ permeation membrane (in FIG. 52, represented by 70). Here, adjustment was performed such that one of two pairs of slits in the gas permeation module was a line for supplying and discharging mixed gas (supply gas), and the other was a line for supplying and discharging sweep gas.

A pressure loss when allowing gas to pass through the gas permeation module was measured by setting the flow rate of nitrogen to 90 mL/minute and the flow rate of carbon dioxide to 10 mL/minute, in the supply gas delivery system 62, by setting the flow rate of helium gas to 50 mL/minute in a sweep gas delivery system, by maintaining the inside of a thermostatic bath at 1 atmosphere and 40°C, and by using a gauge pressure meter (in FIG. 52, represented by G1). In addition, the flow rate of each gas indicated as a flow rate at 1 atmosphere and 20°C (a standard state). A humidifier temperature (water temperature) was 41°C.

As a result of the measurement, a pressure loss of the gas permeation module A was 32.2 kPa, and a pressure loss of the gas permeation module B was 20.4 kPa. Since the pressure loss was not large, even in the separation membranes layered by the gelable polymeric particle membrane, it was checked that gas had passed through the inside of a hollow structure including a linear concave portion structure (groove portion) formed on the main surface of each of the separation membranes and the main surface of the layered separation membranes. In addition, the selective rate of each component of the discharged gas (the permeation flux of carbon dioxide/the permeation flux of nitrogen) was calculated by the gas chromatograph 64, and it was checked that the selective rate in the gas permeation module A was 1.1 or more, carbon dioxide was more likely to permeate the separation membrane compared to nitrogen, and carbon dioxide was capable of being selectively separated.

Next, gas permeation capability measurement was performed by setting the flow rate of nitrogen to 10 mL/minute and the flow rate of carbon dioxide to 10 mL/minute, in the supply gas delivery system 62, by setting the flow rate of helium gas to 10 mL/minute in the sweep gas delivery system, by maintaining the inside of the thermostatic bath at 1 atmosphere and 40°C, and by installing the gas permeation module B in the device. In this case, the pressure loss of the gas permeation module B was 1 kPa. In addition, it was checked that in the gas permeation module B, the selective rate was 1.2 or more, carbon dioxide was more likely to permeate the separation membrane compared to nitrogen, and carbon dioxide was capable of being selectively separated.

## Industrial Applicability

According to the present disclosure, it is possible to provide a production method for a porous membrane, which is capable of producing a porous membrane having a large surface area. In addition, according to the present disclosure, it is possible to provide a porous membrane having a large surface area. In addition, according to the present disclosure, it is possible to provide a separation membrane excellent in gas permeability. In addition, according to the present disclosure, it is possible to provide a layered module and a gas permeation module including the porous membrane described above.

In a flat membrane of the related art, having a concavo-convex structure on the surface, since separation capability depends on the area of the membrane, a module in which separation membranes having a large area are integrated is required when using the flat membrane in a membrane separation process. As a method for integrating the flat membrane, for example, a method for folding a membrane to be integrated, such as a pleat module, or a method for layering pouched flat membranes, and then, winding the flat membranes into the shape of a roll to be integrated, such as a spiral module, is practically used. However, according to such methods, fluid may not flow to a portion in which the flat membrane and the flat membrane overlap with each other. In addition, the flow of the fluid may not be uniform due to the portion in which the flat membranes overlap with each other. In addition, in the spiral module, since a distance that the fluid flows increases, a high pressure loss may occur. Therefore, a method for ensuring a space such that the fluid flows on the membrane with a low pressure loss without the flat membranes being in close contact with each other, by providing a mesh-shaped spacer that is comparatively thick between the flat membranes, is used. However, by providing the spacer, the thickness of the layered membranes to be obtained by integrating increases, and an effective treatment area per unit volume tends to decrease. In contrast, in the layered module and the gas permeation module including the porous membrane according to the present disclosure, since the degree of freedom in design is high, it is easy to decrease the length of a flow channel, it is not necessary to provide the thick spacer described above, and even in a case of providing the spacer, the spacer can be substituted with a thin mesh or a porous membrane, a decrease in the size of the module and an increase in the effective treatment area per unit area can be expected.

## Reference Signs List

20: substrate, 20a: first main surface, 20b: second main surface, 30: concave portion, 30a: first surface, 30b: second surface (wall surface), 30c: second surface (bottom surface), 30d: second surface, 31, 32: groove portion, 42, 44: through hole, 100, 102, 200, 202, 206, 530, 562: porous membrane, 300, 302: gas permeation layer, 500: gas permeation membrane, 510, 570: first separation membrane, 520, 580: second separation membrane, 540, 560, 580, 590: separation membrane, 600, 602, 603, 604: unit, 650, 652, 654, 656, 658, 660: gas permeation module.

## Claims

1. A production method for a porous membrane including pores, and concave portions having an average opening diameter greater than an average pore diameter of the pores on at least one of a pair of main surfaces, the method comprising:
   a step of forming the concave portion on a surface to be the main surface.

2. The production method according to claim 1,
   wherein the step includes a step of irradiating a predetermined region on one main surface of a substrate including pores with pulsed laser having a pulse width of $10 \times 10^{-9}$ seconds or less and a wavelength of 200 nm or more to form concave portions having an average opening diameter greater than an average pore diameter of the pores on the main surface.

3. The production method according to claim 2,
   wherein the wavelength of the pulsed laser is 500 nm or more.

4. The production method according to claim 2 or 3,
   wherein the step is carried out while performing at least one type of operation selected from the group consisting of suction of gas in the vicinity of the predetermined region, introduction of air, reactive gas, or inert gas to the predetermined region, and adjustment of a temperature of the predetermined region.

5. The production method according to any one of claims 2 to 4,
   wherein the pores of the substrate are filled with removable substances.

6. The production method according to any one of claims 2 to 5,
wherein the substrate contains at least one type selected from the group consisting of metal fine particles and carbon particles in the one main surface and/or inside the substrate.

7. The production method according to any one of claims 2 to 6, further comprising:
a step of washing the concave portion after the concave portion is formed.

8. The production method according to any one of claims 2 to 7,
wherein the substrate contains at least one type selected from the group consisting of polyether sulfone, polycarbonate, nitrocellulose, high-density polyethylene, polytetrafluoroethylene, polyvinylidene fluoride, acetyl cellulose, polysulfone, polypropylene, polyimide, glass, alumina, silica, and a carbon fiber.

9. The production method according to any one of claims 2 to 7,
wherein the substrate contains at least one type selected from the group consisting of polyalkyl (meth)acrylate and polyethylene.

10. The production method according to claim 1,
wherein the step includes a step of forming a liquid membrane containing a polymerizable composition containing a polymerizable monomer and an initiator, and at least one type selected from the group consisting of ether, polyethylene glycol, water, and aliphatic alcohol having 8 or less carbon atoms on a surface of a mold including convex portions on the surface, and of causing polymerization reaction-induced phase separation in the liquid membrane by heating the liquid membrane or by irradiating the liquid membrane with light to form a substrate including pores, and to form concave portions having an average opening diameter greater than an average pore diameter of the pores on one main surface of the substrate.

11. The production method according to claim 10,
wherein the polymerizable monomer includes at least one type selected from the group consisting of a compound having one (meth)acryloyl group and a compound having two or more (meth)acryloyl groups.

12. The production method according to claim 10 or 11,
wherein the polymerizable monomer includes a compound having one (meth)acryloyl group and a compound having two or more (meth)acryloyl groups.

13. The production method according to claim 11 or 12,
wherein the compound having a (meth)acryloyl group includes at least one type selected from the group consisting of alkyl (meth)acrylic ester, a (meth)acrylic acid, glycidyl (meth)acrylate, 2-hydroxyethyl (meth)acrylate, hydroxypropyl (meth)acrylate, and polyethylene glycol (meth)acrylate .

14. The production method according to any one of claims 10 to 13,
wherein the aliphatic alcohol having 8 or less carbon atoms includes monohydric alcohol and dihydric alcohol.

15. A porous membrane including pores, the membrane comprising:

a pair of main surfaces; and
concave portions having an average opening diameter greater than an average pore diameter of the pores on at least one of the pair of main surfaces.

16. The porous membrane according to claim 15,
wherein the average pore diameter of the pores on the one main surface is in a range of 30 to 300% with respect to the average pore diameter of the pores in the concave portions.

17. The porous membrane according to claim 15 or 16,
wherein a total surface pore area of the pores on the one main surface is in a range of 20 to 500% by area with respect to a total surface pore area of the pores in the concave portions.

18. The porous membrane according to any one of claims 15 to 17,
wherein the average pore diameter of the pores is 1 μm or less.

**19.** The porous membrane according to any one of claims 15 to 18, wherein the porous membrane includes a plurality of concave portions, and the average opening diameter of the concave portions is 10 times or more the average pore diameter of the pores.

**20.** The porous membrane according to any one of claims 15 to 19, wherein the concave portion is a groove formed on the main surface.

**21.** The porous membrane according to any one of claims 15 to 20, wherein the porous membrane has a thickness of 20 to 300 μm.

**22.** The porous membrane according to any one of claims 15 to 21, wherein the porous membrane contains at least one type selected from the group consisting of polyether sulfone, polycarbonate, nitrocellulose, high-density polyethylene, polytetrafluoroethylene, polyvinylidene fluoride, acetyl cellulose, polysulfone, polypropylene, polyimide, glass, alumina, silica, and a carbon fiber.

**23.** The porous membrane according to any one of claims 15 to 21, wherein the porous membrane contains at least one type selected from the group consisting of polyalkyl (meth)acrylate and polyethylene.

**24.** The porous membrane according to any one of claims 15 to 23, further comprising: at least one type selected from the group consisting of an unwoven fabric and a mesh, or a support material.

**25.** The porous membrane according to any one of claims 15 to 24, wherein the porous membrane contains at least one type selected from the group consisting of glass, alumina, and silica.

**26.** The porous membrane according to any one of claims 15 to 25, wherein the porous membrane is a membrane subjected to corrugation processing.

**27.** The porous membrane according to any one of claims 15 to 26, wherein the porous membrane configures a flat membrane, a tubular membrane, or a hollow yarn.

**28.** The porous membrane according to any one of claims 15 to 27, wherein the porous membrane is used in a support of a gas permeation membrane.

**29.** A separation membrane, comprising:

the porous membrane according to claim 28; and
a gas permeation layer or a water permeation layer provided on the porous membrane.

**30.** The separation membrane according to claim 29, wherein the gas permeation layer contains gelable polymeric particles having at least one type of functional group selected from the group consisting of a basic functional group and an acidic functional group.

**31.** The separation membrane according to claim 29 or 30, wherein the gas permeation layer or the water permeation layer contains at least one type selected from the group consisting of alkanol amine, polyvalent amine, piperazine, hindered amine, polyvinyl alcohol, polyethylene imine, polyvinyl amine, a molten salt, polyamide, and aromatic polyamide.

**32.** A layered module, comprising:

a unit in which two or more porous membranes including concave portions provided on at least one main surface are layered,
wherein the porous membrane is the porous membrane according to any one of claims 15 to 27.

**33.** A layered module, comprising:

a unit in which two or more porous membranes including groove portions provided on at least one main surface

are layered,
wherein the porous membrane is the porous membrane according to any one of claims 15 to 27.

**34.** A layered module, comprising:

a unit in which two or more porous membranes including two or more types of concave portions provided on at least one main surface are layered,
wherein at least one type of the concave portions is a groove portion, and
the porous membrane is the porous membrane according to any one of claims 15 to 27.

**35.** A layered module, comprising:

a unit in which two or more porous membranes including through holes and concave portions provided on at least one main surface are layered,
wherein the porous membrane is the porous membrane according to any one of claims 15 to 27.

**36.** A gas permeation module, comprising:

one or more units including two or more separation membranes in which groove portions for conveying mixed gas are provided on a first main surface and groove portions for conveying sweep gas are provided on a second main surface,
wherein the separation membrane includes a support including the porous membrane according to any one of claims 15 to 27, and a gas permeation layer provided on the support, and
the groove portions for conveying the mixed gas are separated from the groove portions for conveying the sweep gas by the gas permeation layer or a diffusion prevention layer.

**37.** The gas permeation module according to claim 36,

wherein the unit includes a first separation membrane and a second separation membrane as the separation membrane, and
the first separation membrane and the second separation membrane are arranged such that a first main surface of the first separation membrane and a first main surface of the second separation membrane face each other.

**38.** The gas permeation module according to claim 36,

wherein the unit includes a first separation membrane and a second separation membrane as the separation membrane,
a porous layer is provided between a first main surface of the first separation membrane and a second main surface of the second separation membrane, and
the porous layer includes a gas permeation layer or a diffusion prevention layer on at least one main surface of a main surface on the first separation membrane side and a main surface on the second separation membrane side.

**39.** The gas permeation module according to claim 38,
wherein the porous layer includes the gas permeation layer or the diffusion prevention layer on the main surface of the porous layer on the first separation membrane side.

**40.** A gas permeation module, comprising:

one or more units including a first separation membrane in which groove portions for conveying mixed gas are provided on at least one main surface and a second separation membrane in which groove portions for conveying sweep gas are provided on at least one main surface,
wherein at least one of the first separation membrane and the second separation membrane includes a support including the porous membrane according to any one of claims 15 to 27, and a gas permeation layer provided on the support, and
the groove portions for conveying the mixed gas are separated from the groove portions for conveying the sweep gas by the gas permeation layer or a diffusion prevention layer.

**41.** The gas permeation module according to claim 40,

wherein the groove portions provided on the main surface of the second separation membrane are arranged to face the groove portions provided on the main surface of the first separation membrane,
a porous layer is provided between the first separation membrane and the second separation membrane, and the porous layer includes a gas permeation layer or a diffusion prevention layer on at least one main surface of a main surface on the first separation membrane side and a main surface on the second separation membrane side.

**42.** The gas permeation module according to claim 41,
wherein the porous layer includes the gas permeation layer or the diffusion prevention layer on the main surface of the porous layer on the first separation membrane side.

*Fig.1*

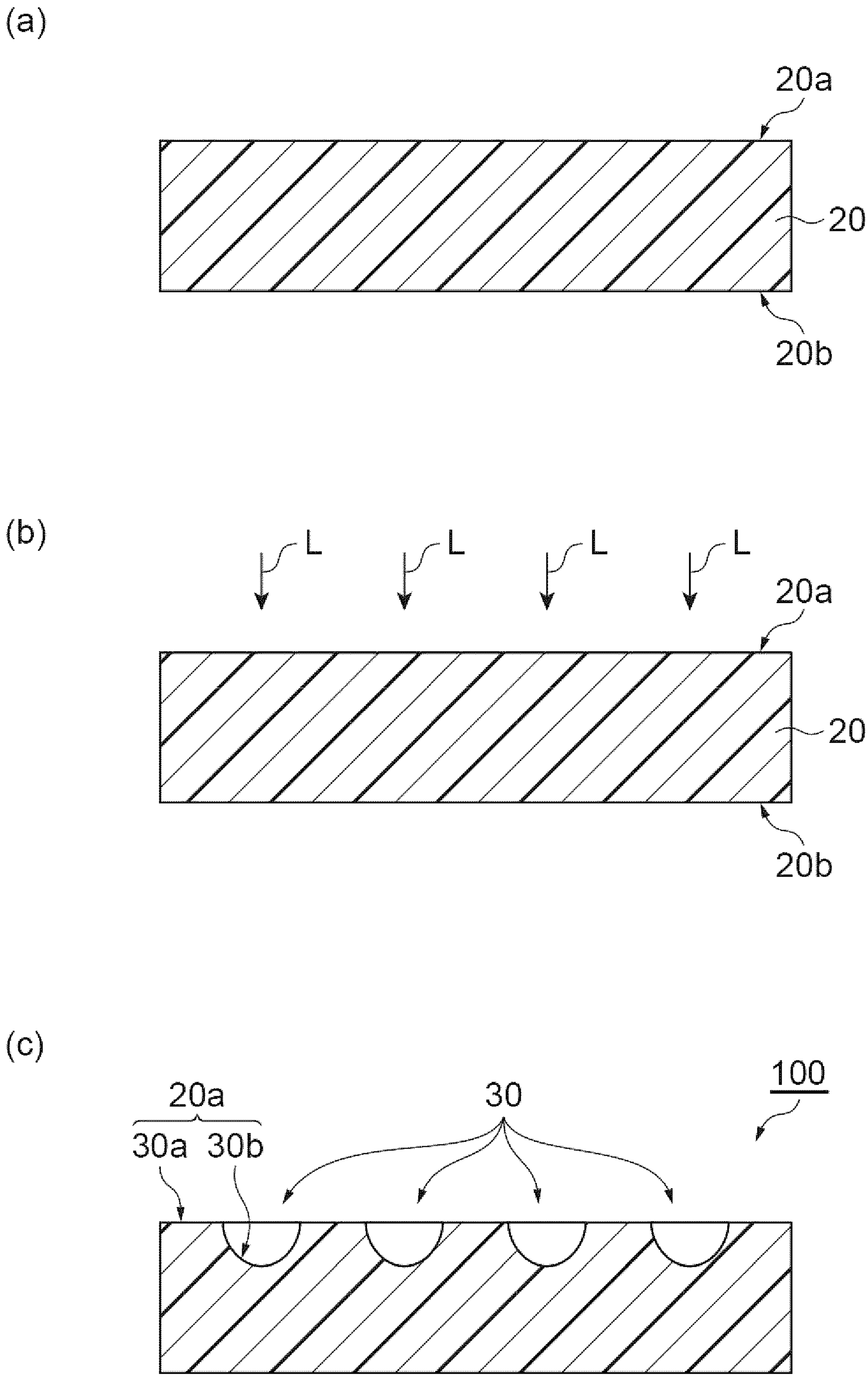

# Fig.2

(a)

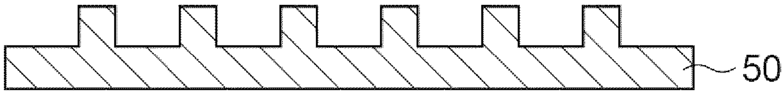


(b)

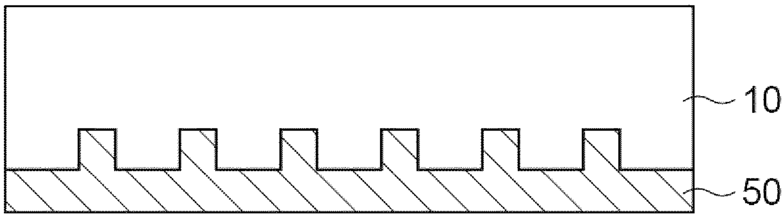


(c)

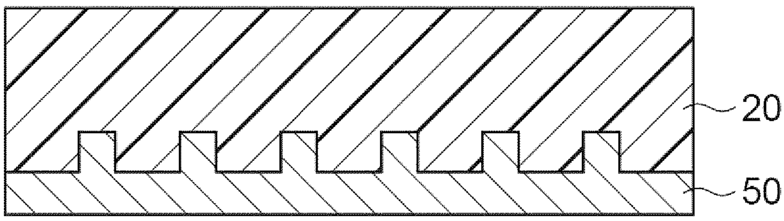


(d)

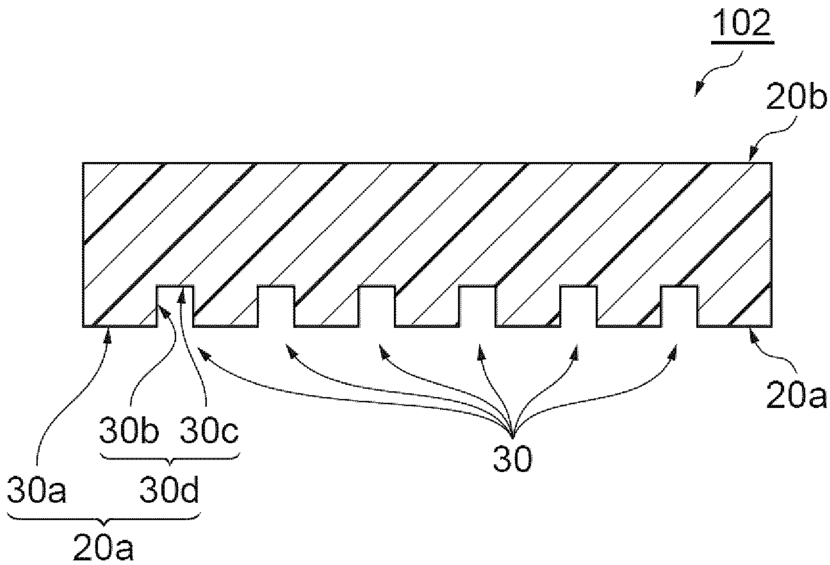

*Fig.3*

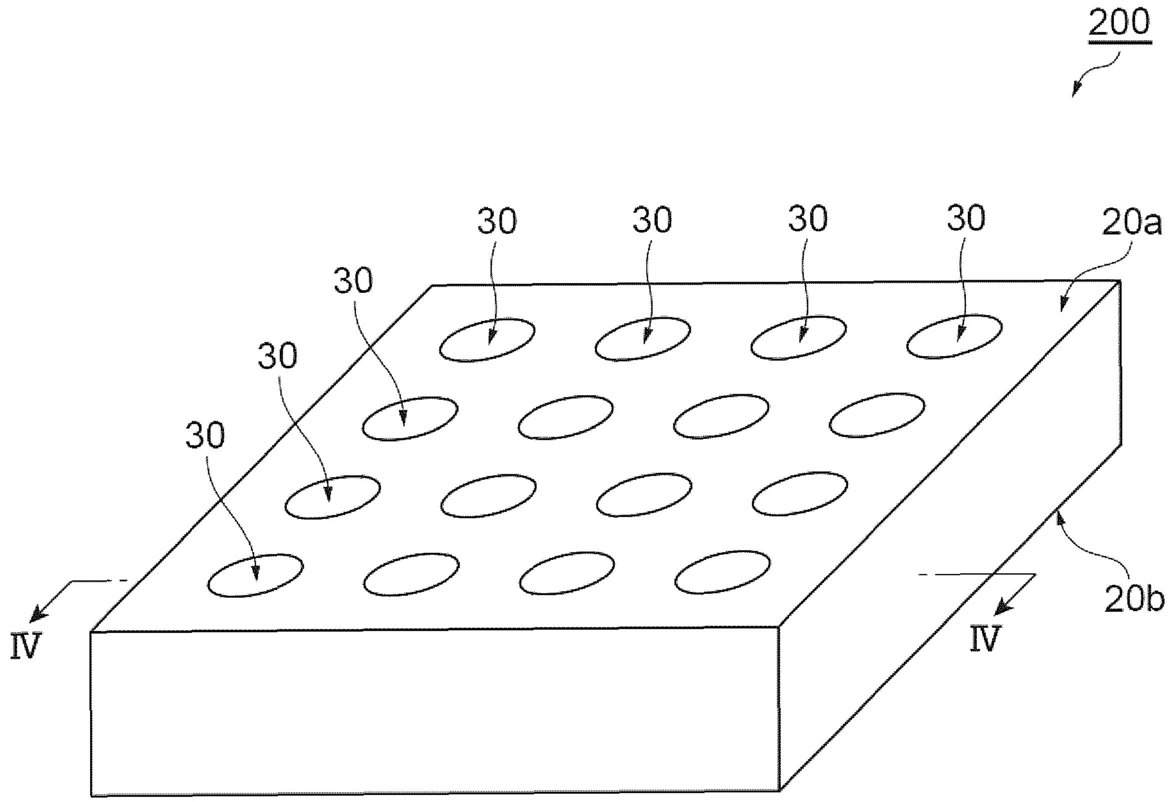

*Fig.4*

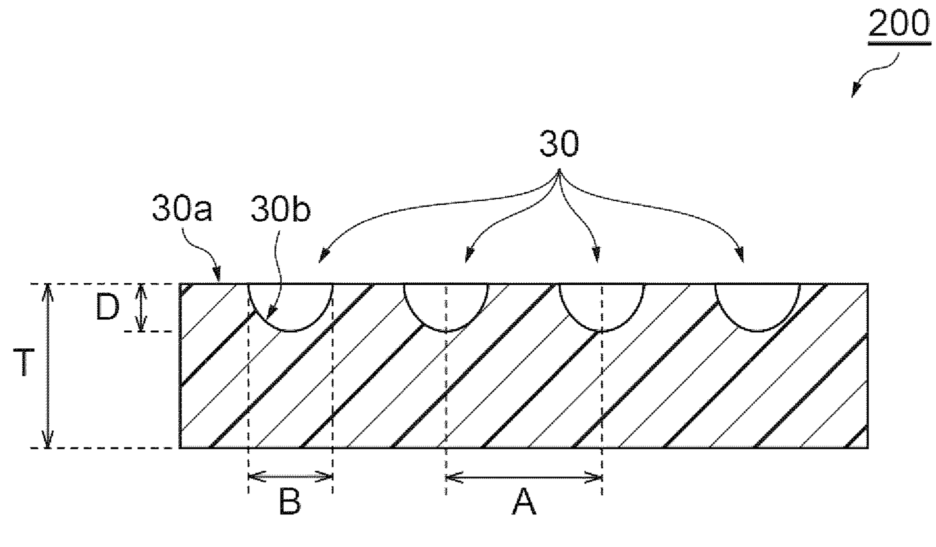

Fig.5

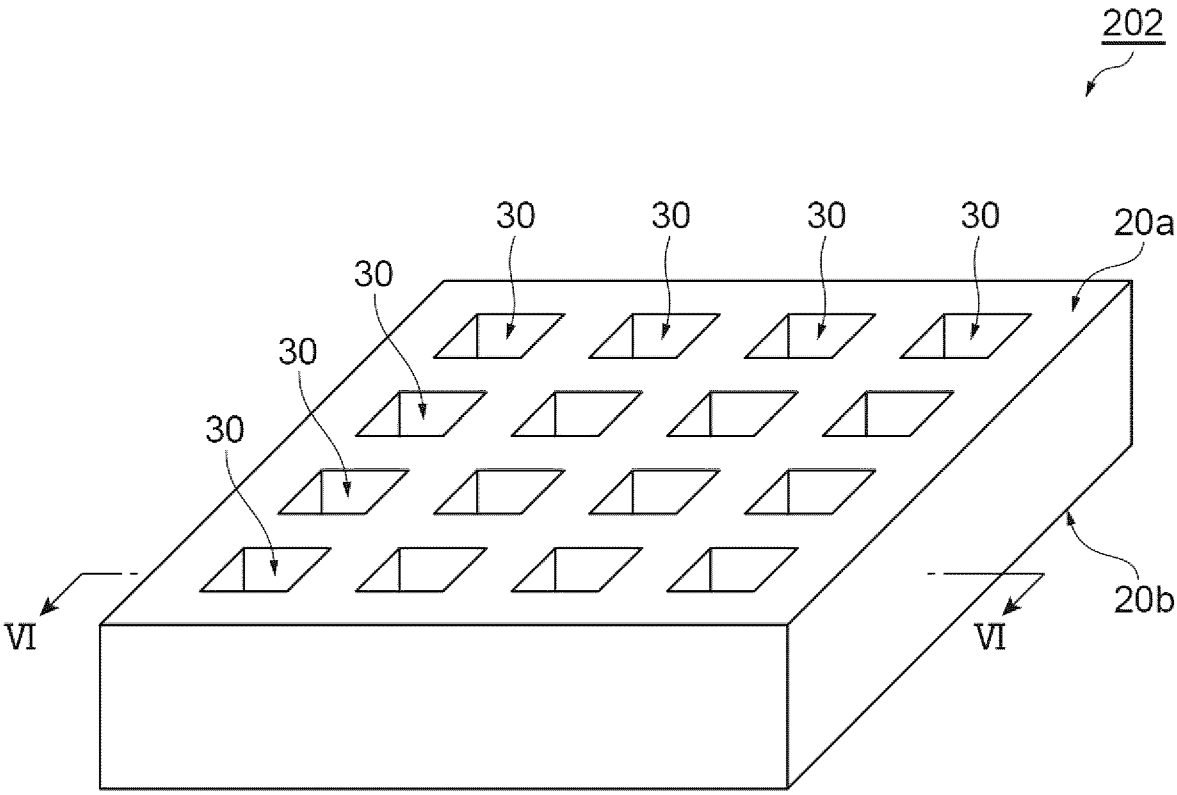

*Fig.6*

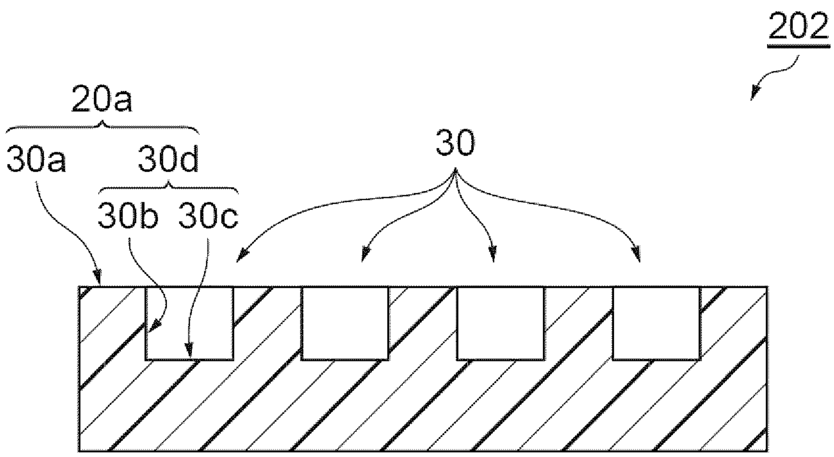

# Fig.7

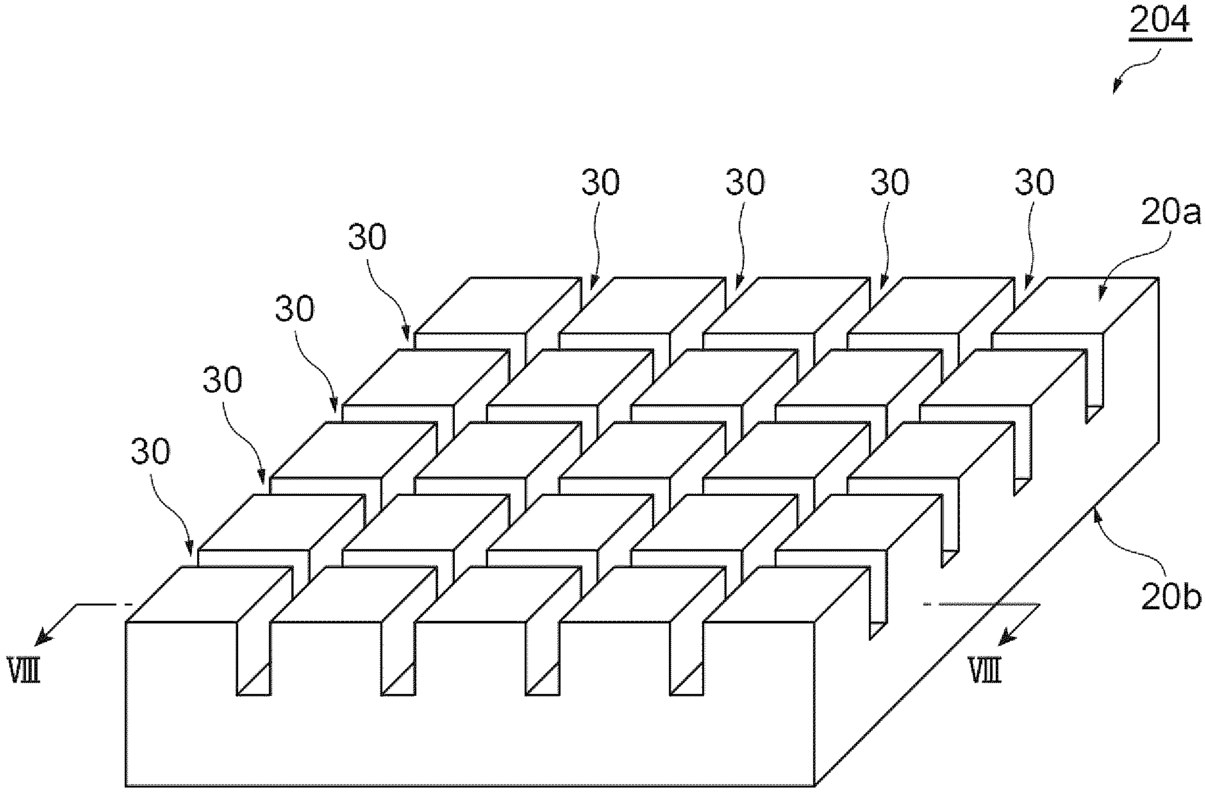

***Fig.8***

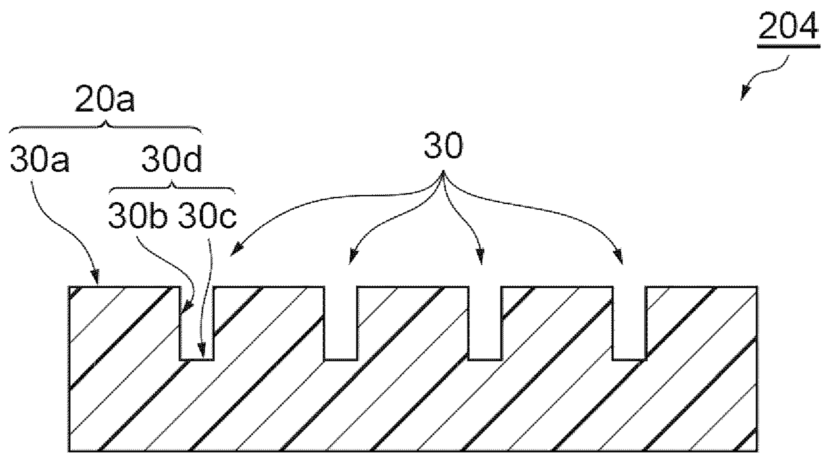

Fig.9

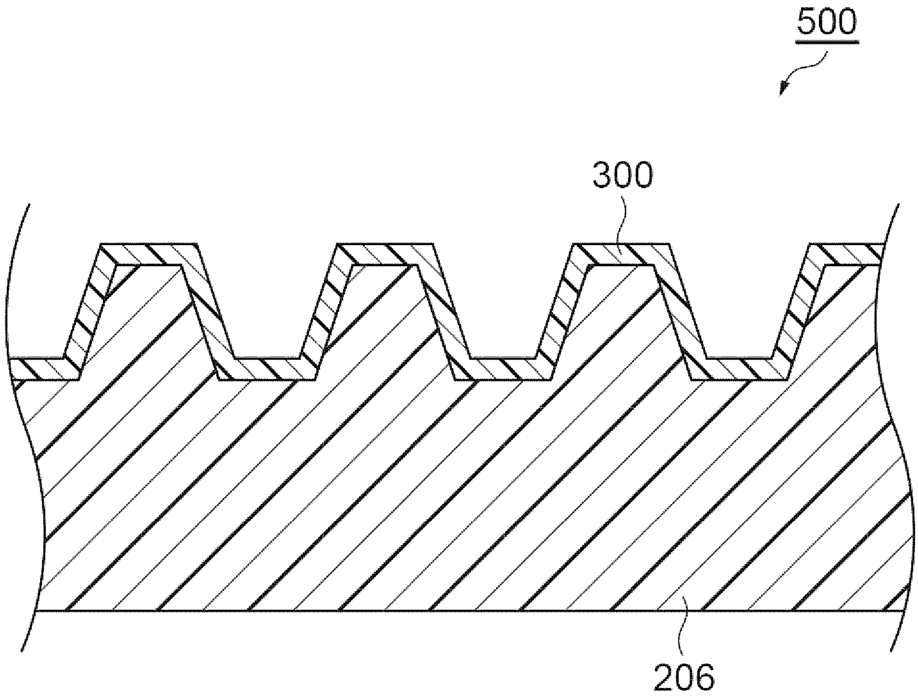

Fig.10

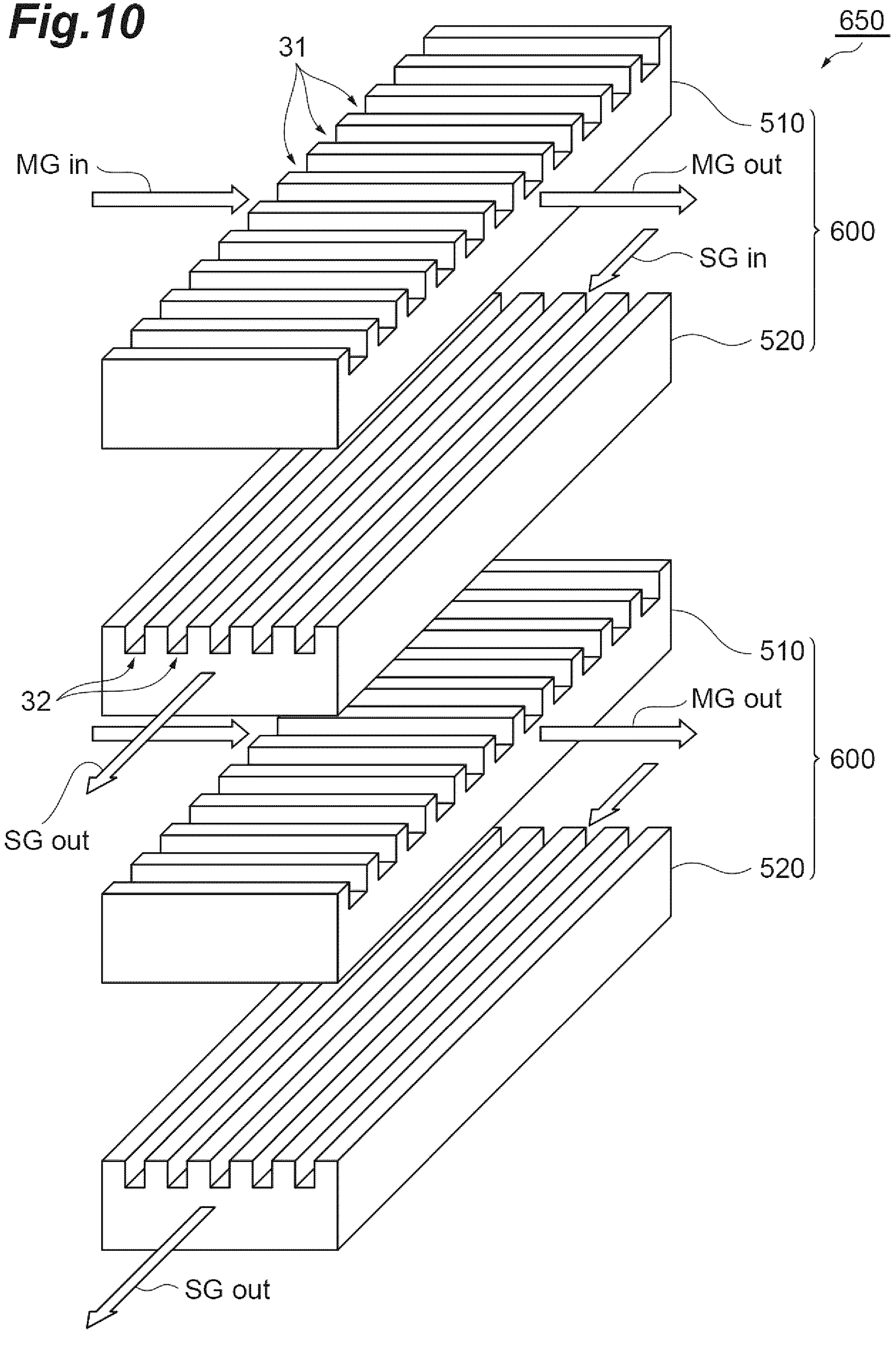
650
31
MG in
510
MG out
600
SG in
520
510
32
MG out
600
SG out
520
SG out

Fig.11

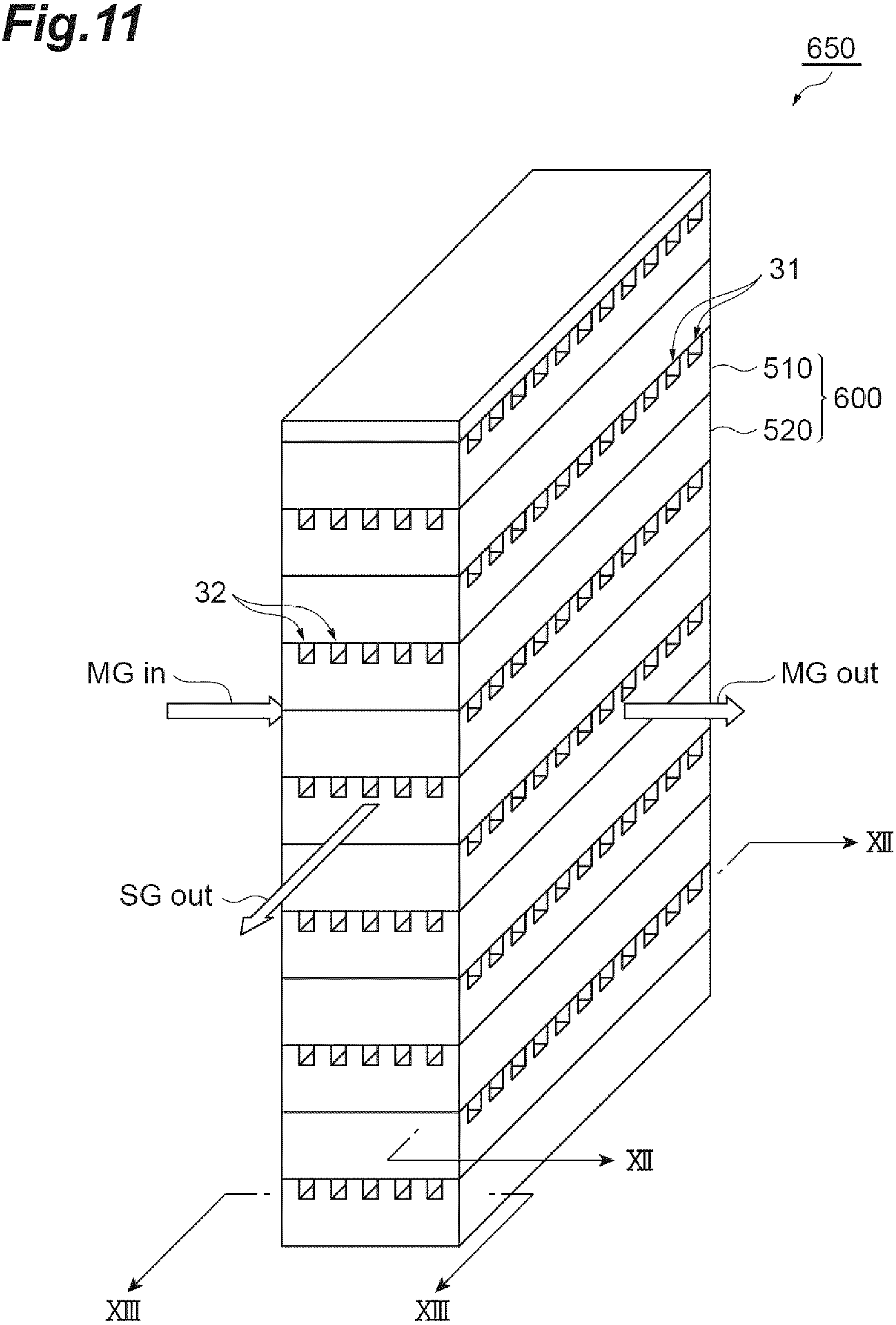

*Fig.12*

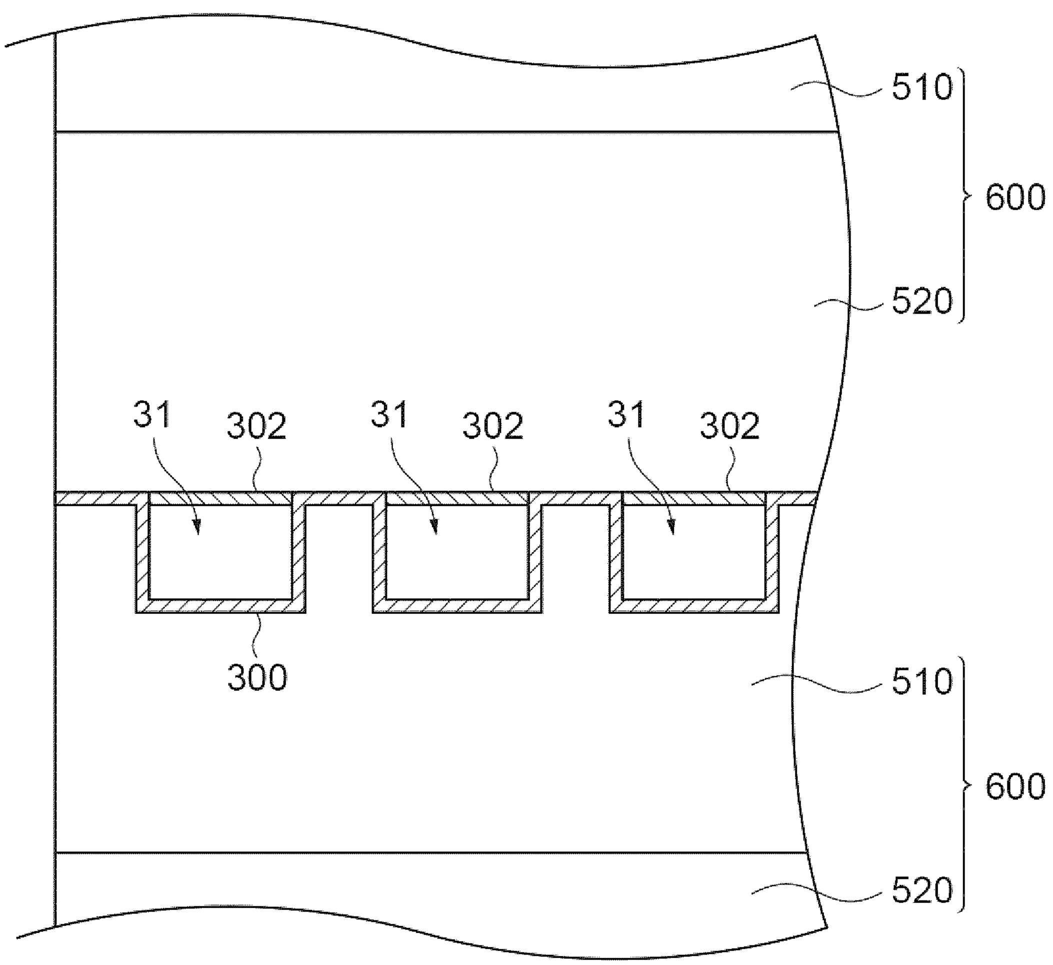

*Fig.13*

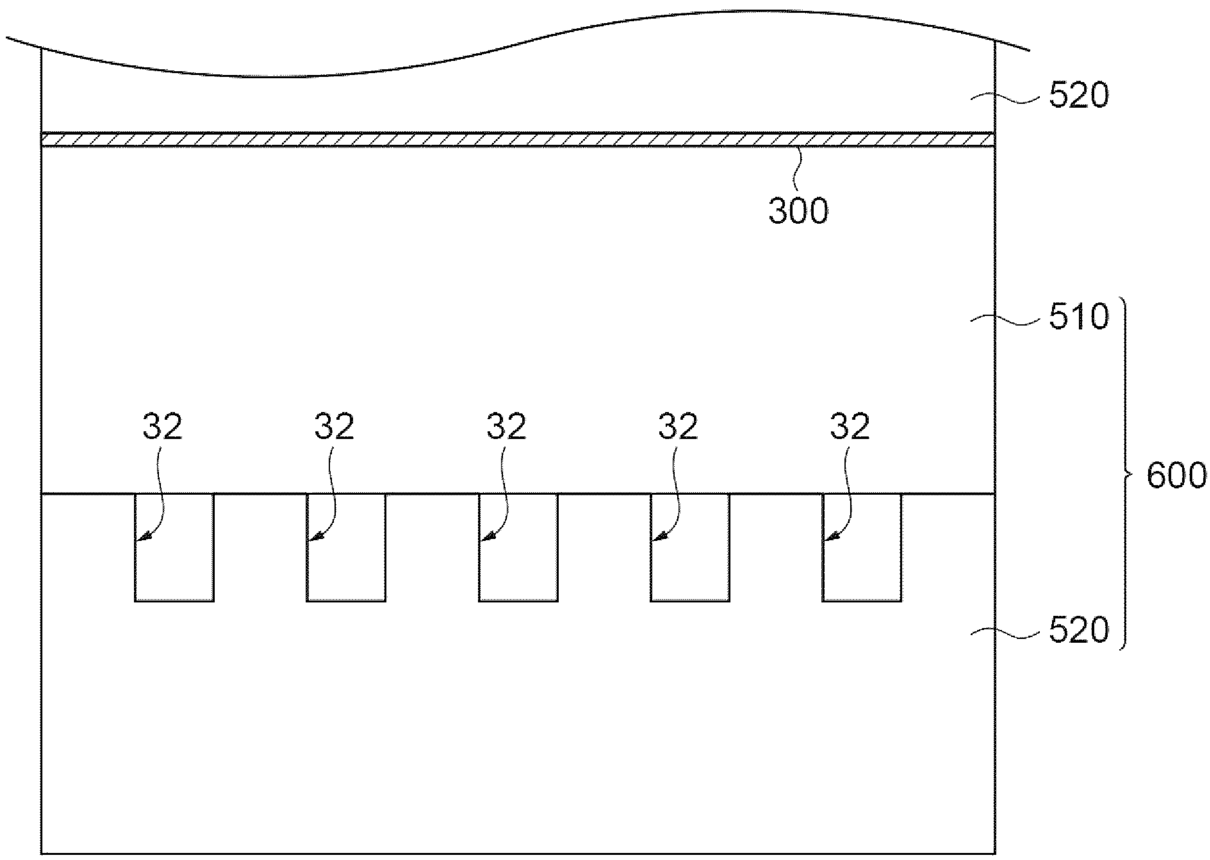

*Fig.14*

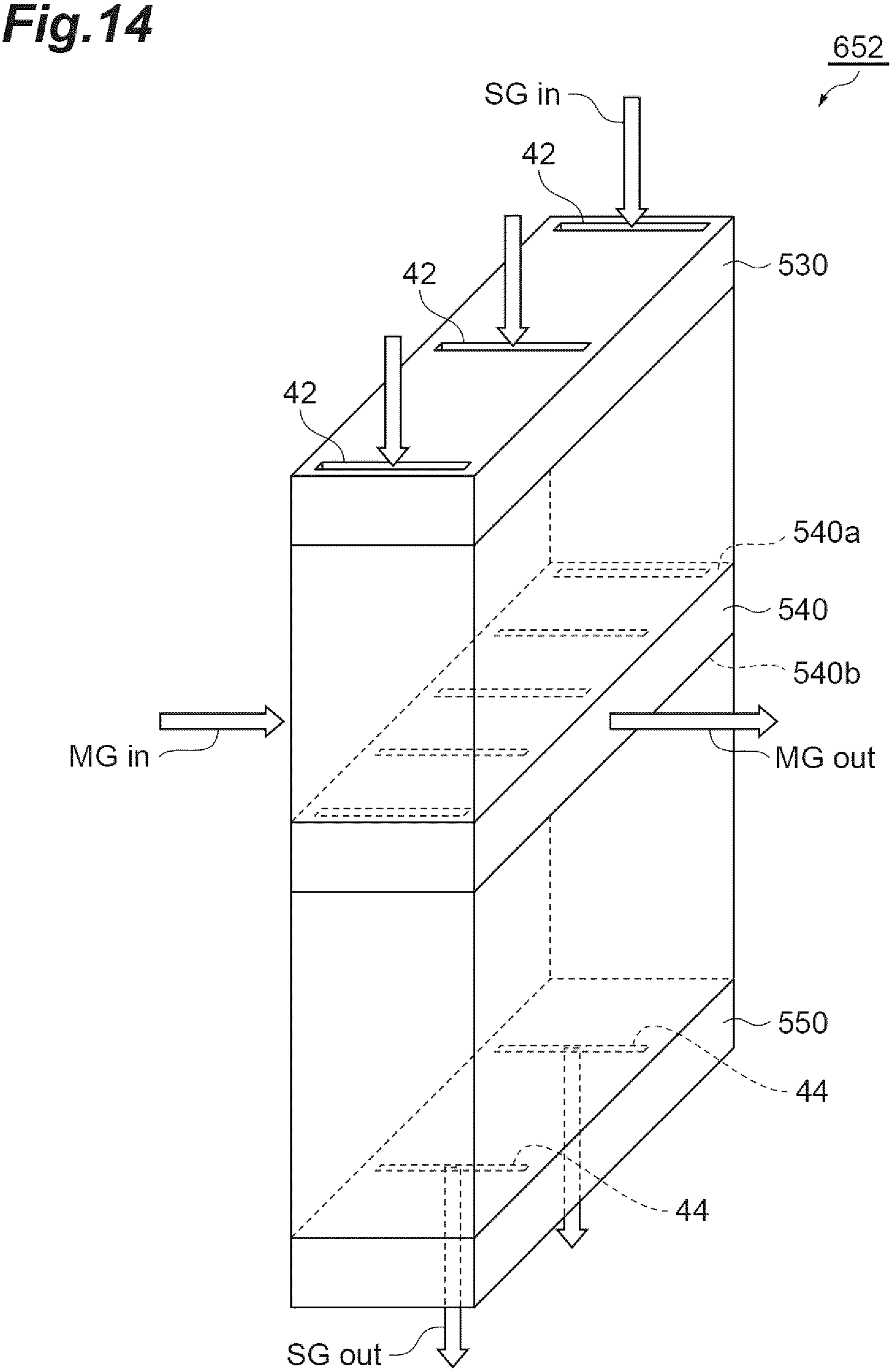

Fig.15

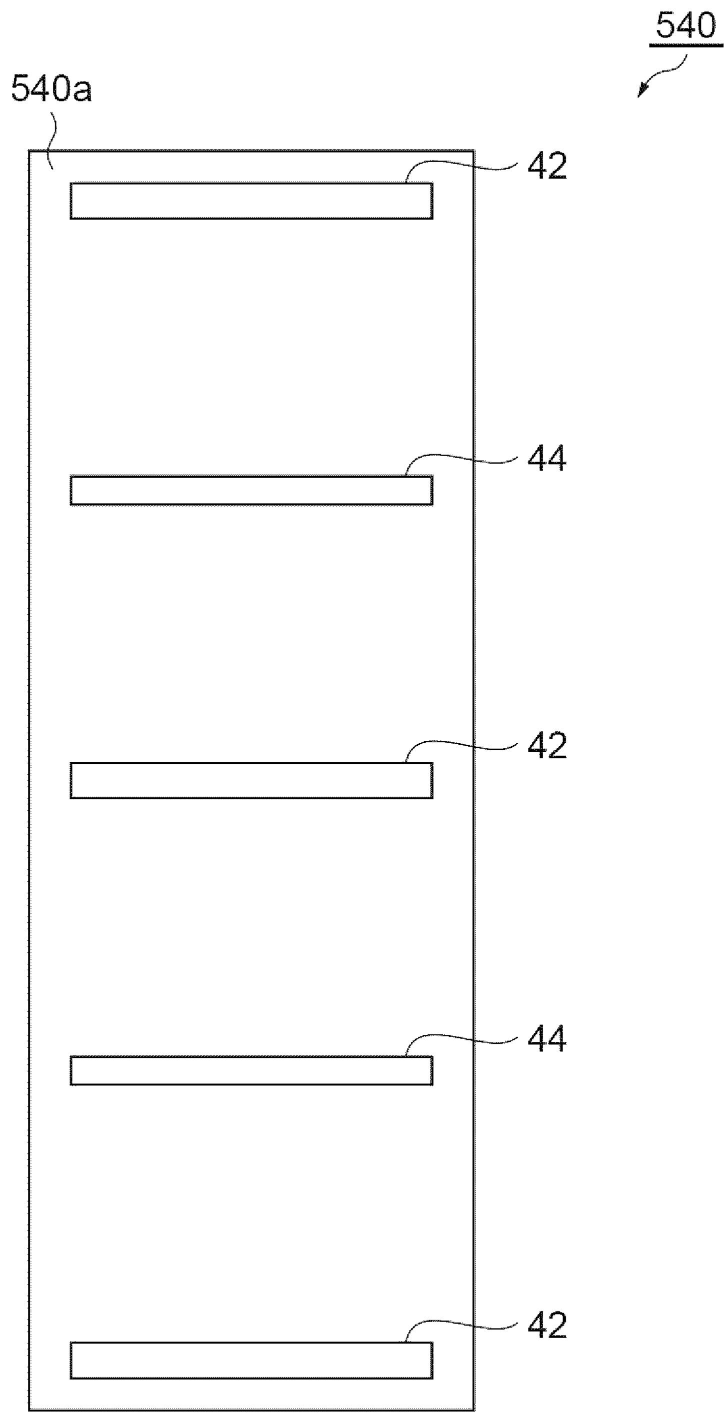

Fig.16

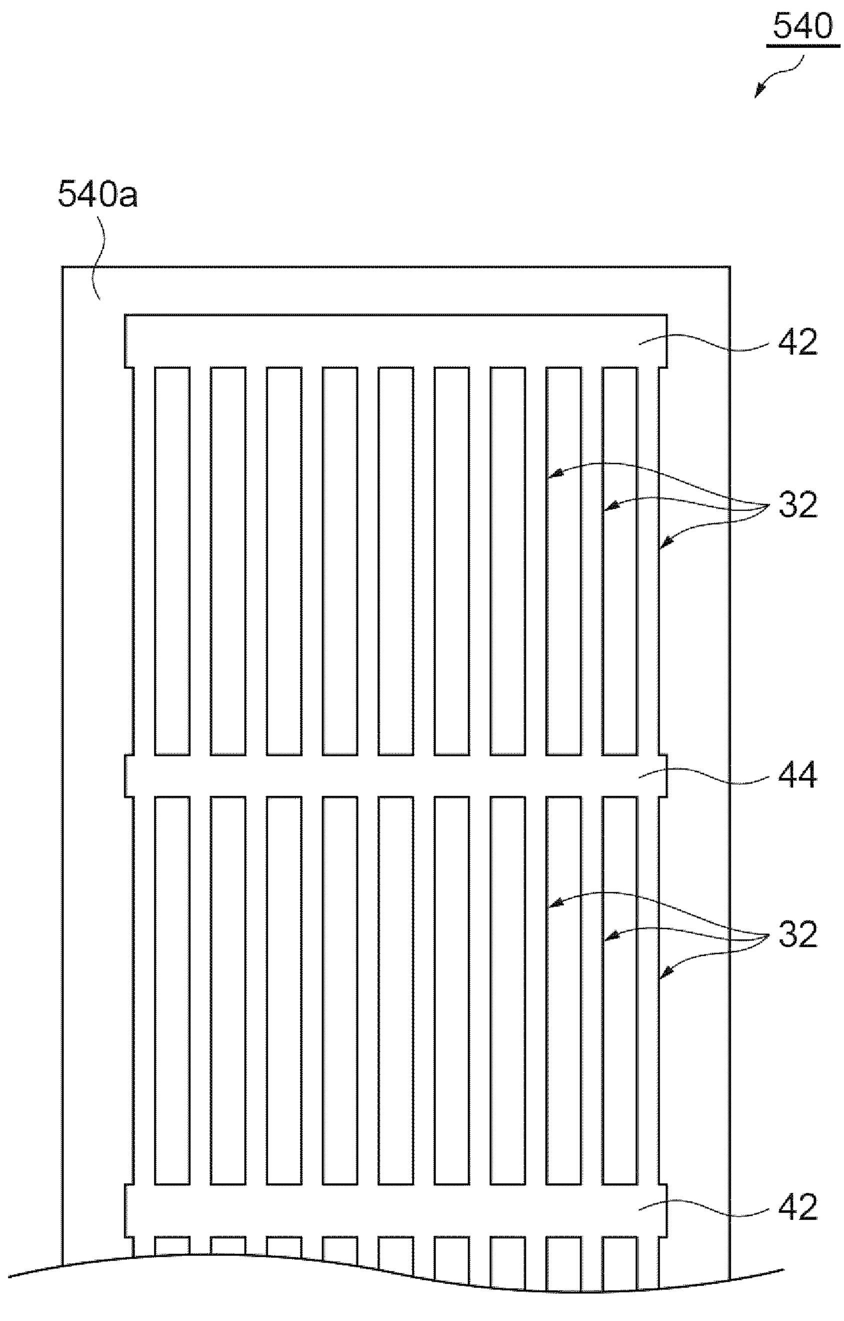

# Fig.17

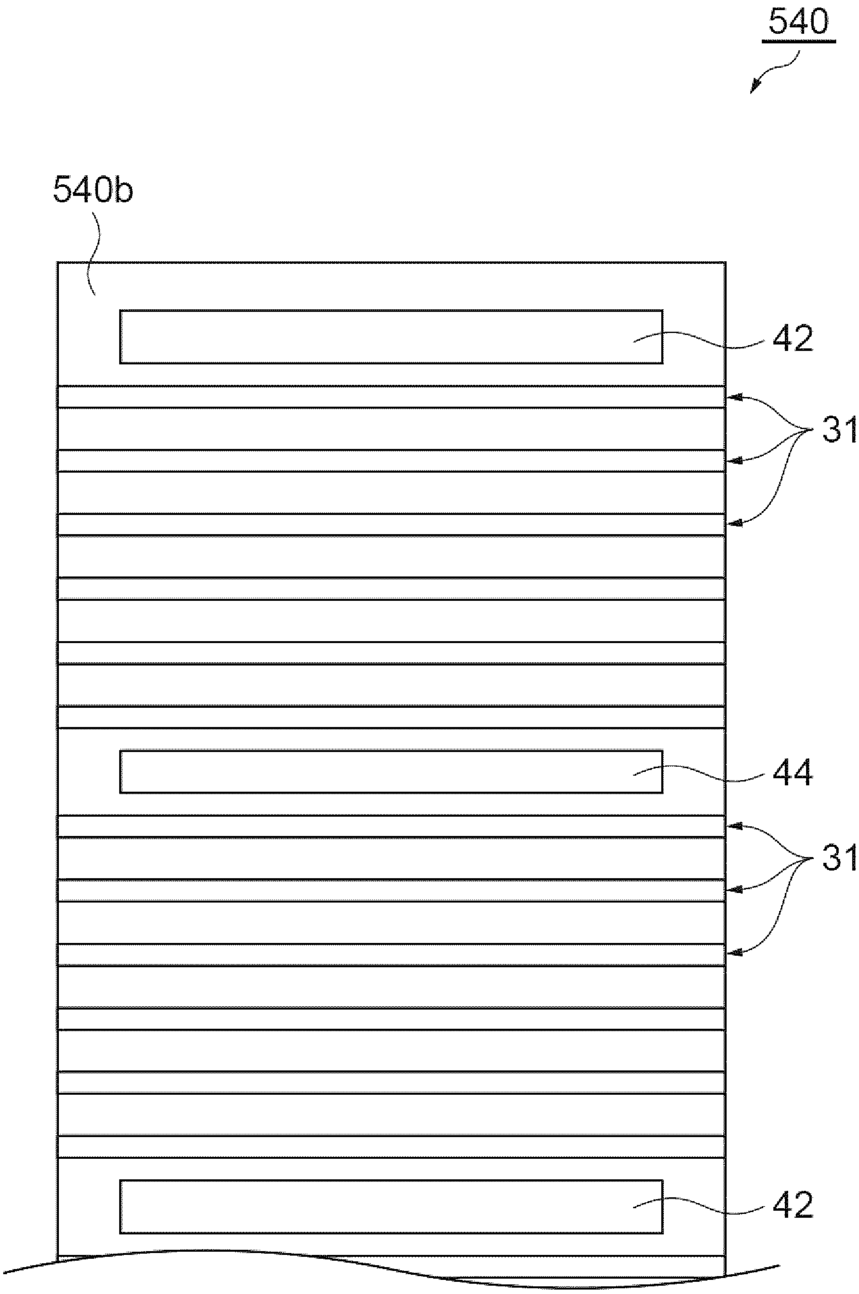

*Fig.18*

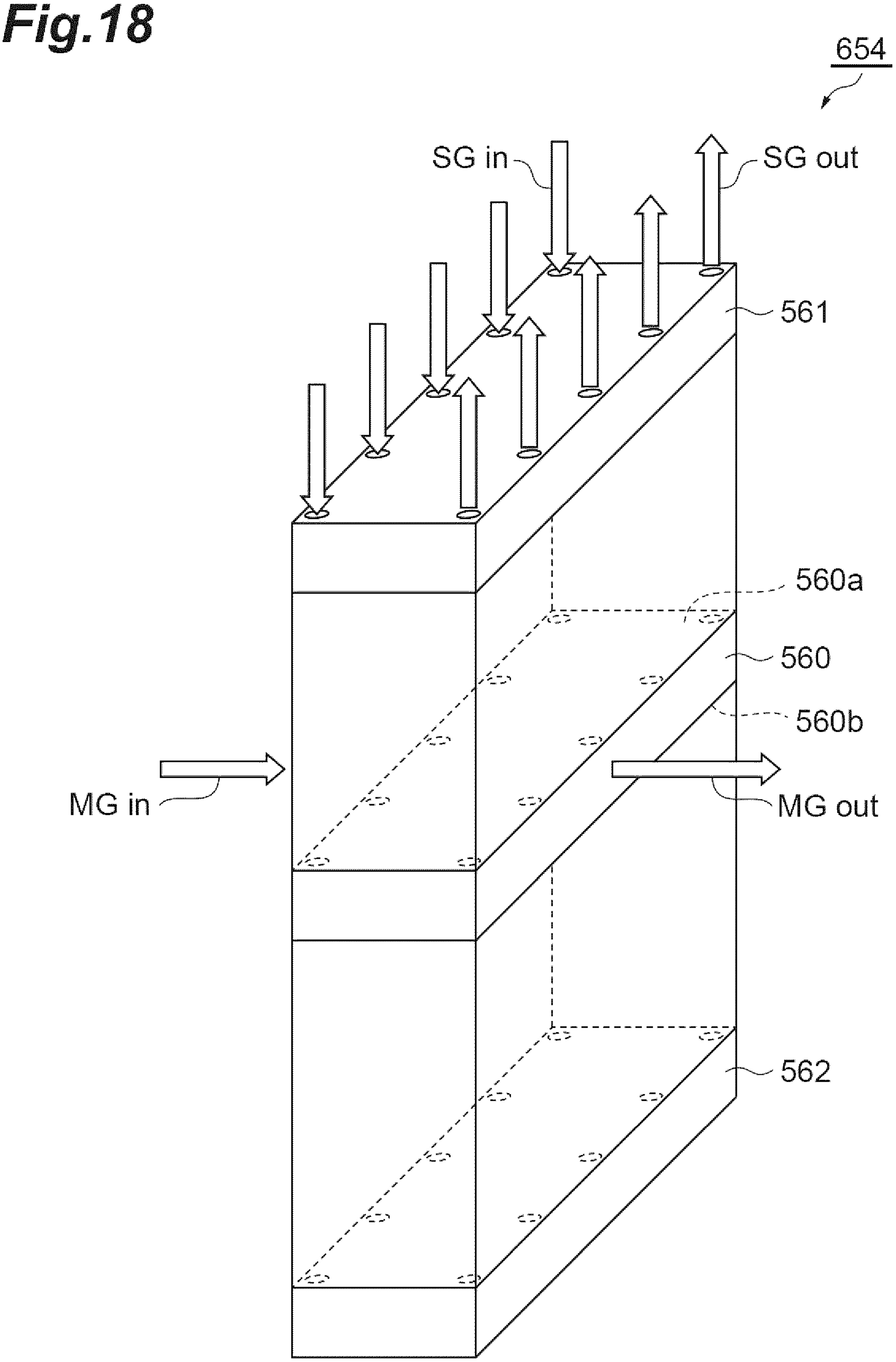

Fig.19

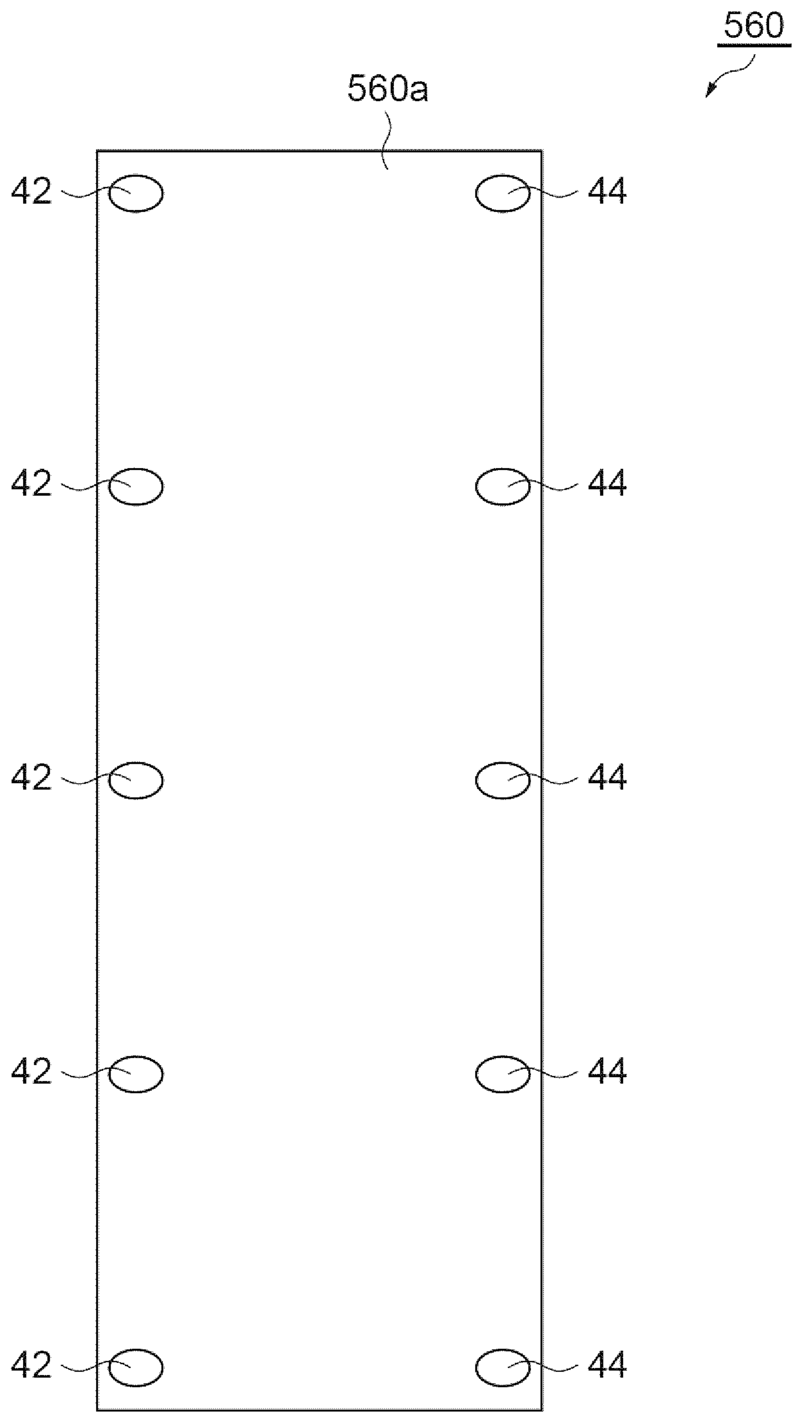

Fig.20

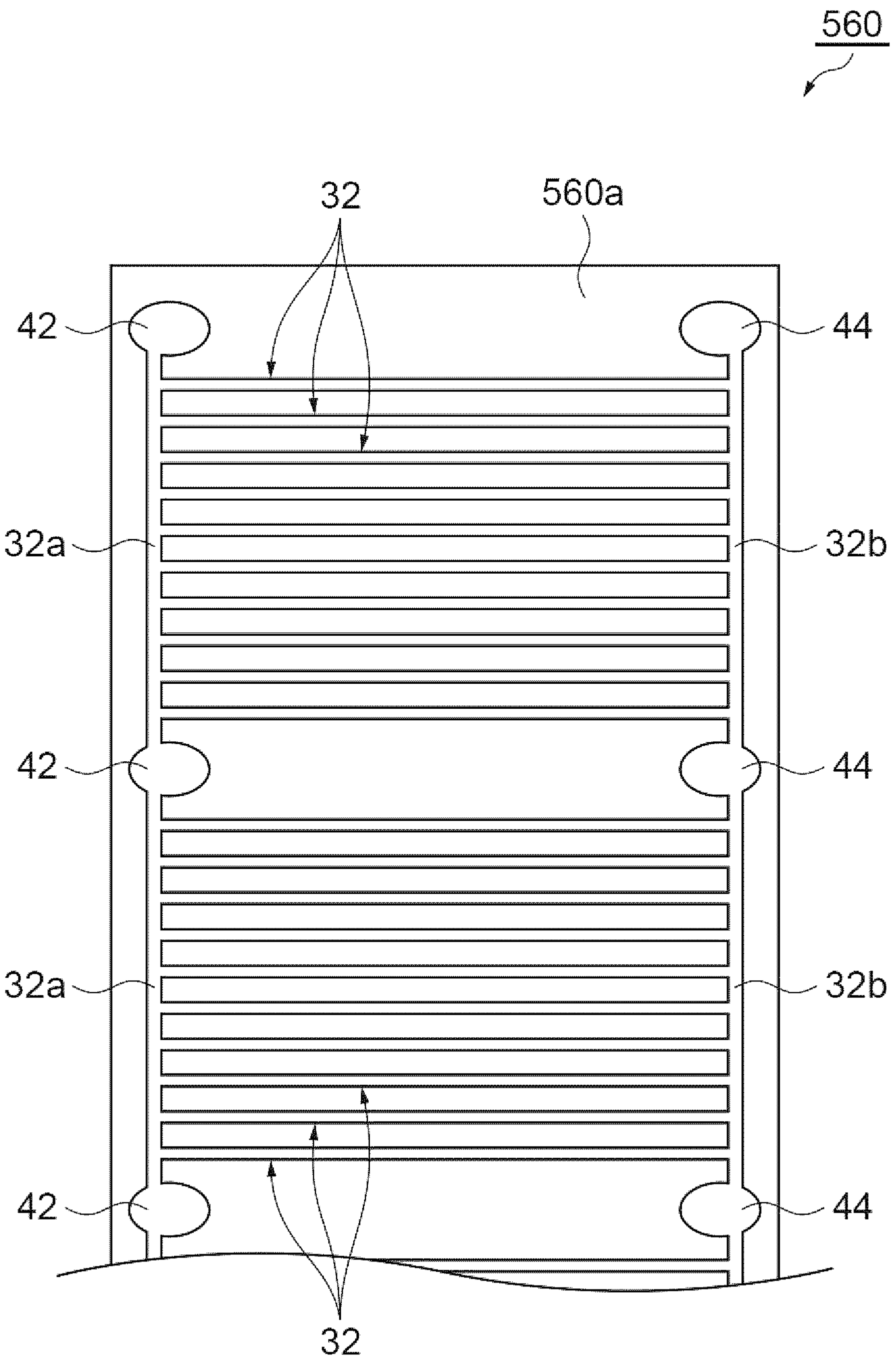

# Fig.21

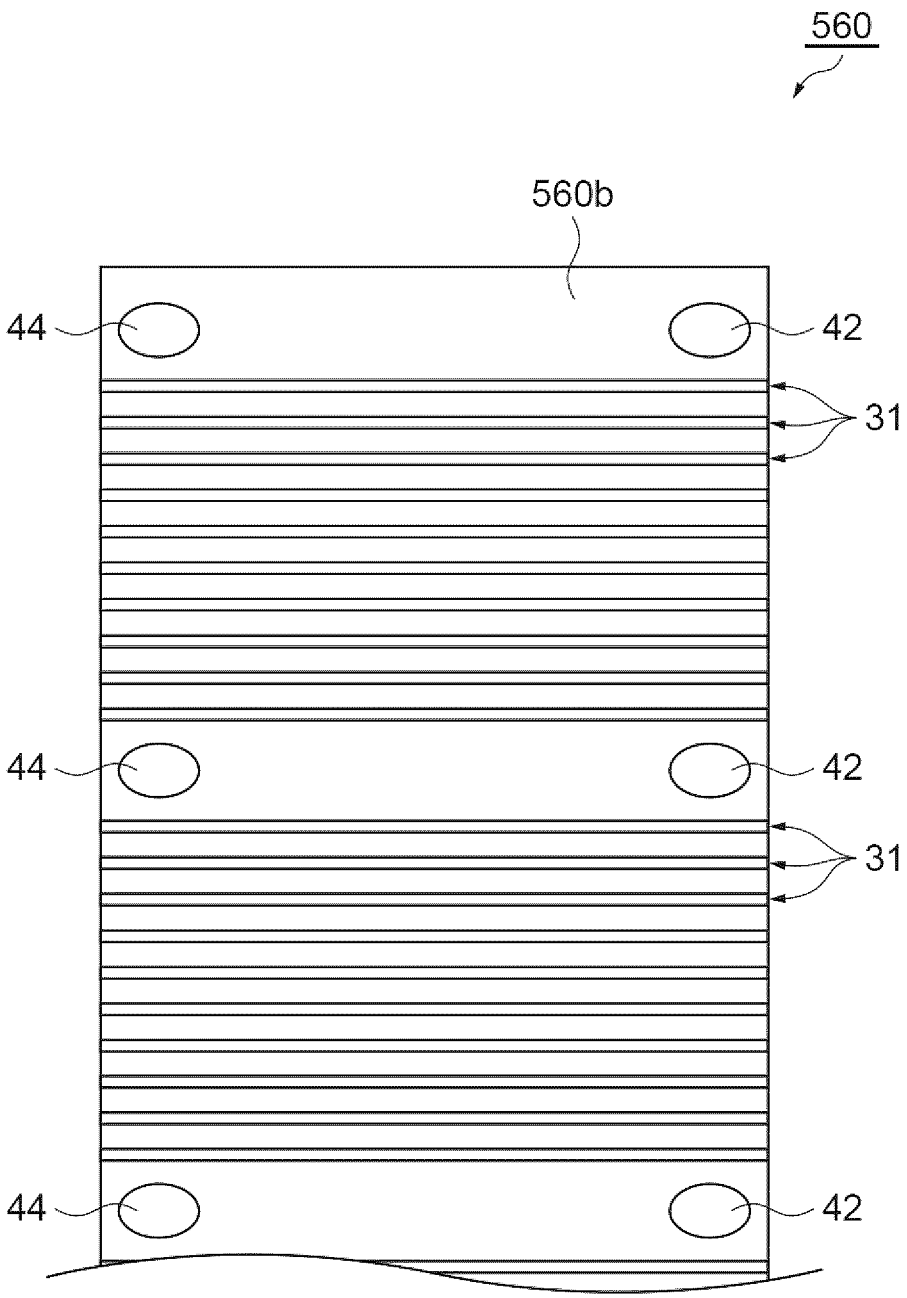

*Fig.22*

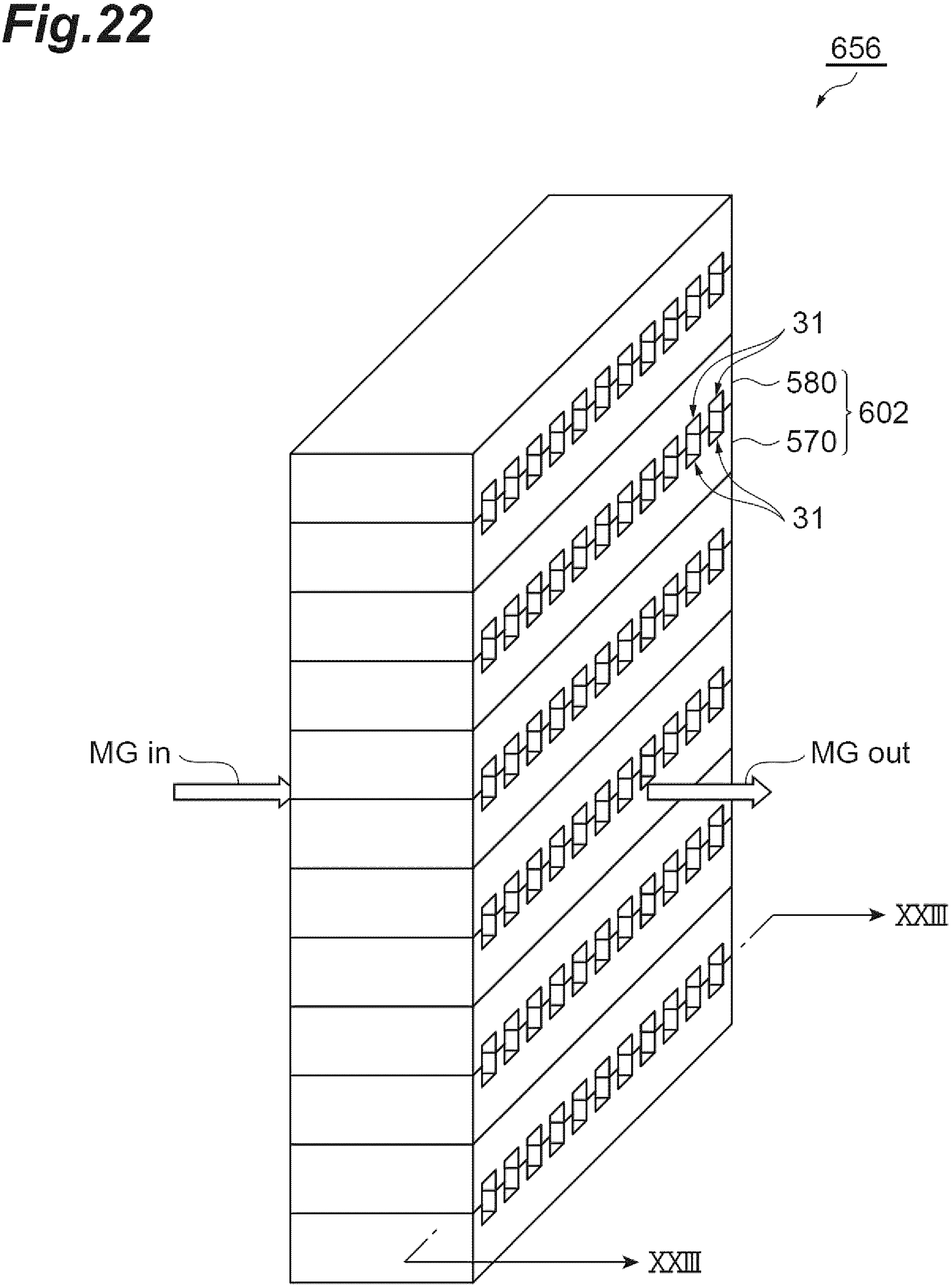

*Fig.23*

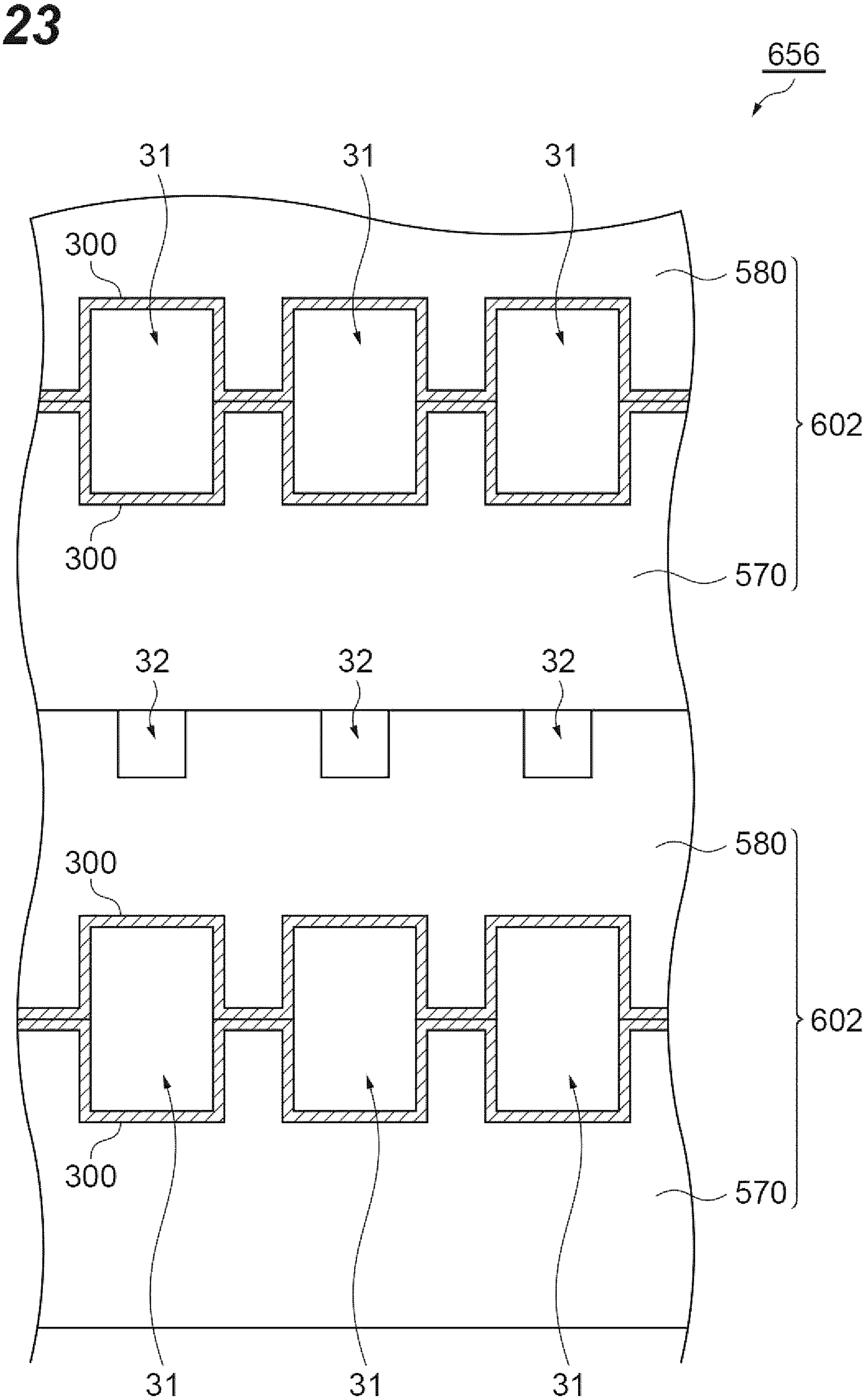
656
31
31
31
300
580
602
300
570
32
32
32
300
580
602
300
570
31
31
31

Fig.24

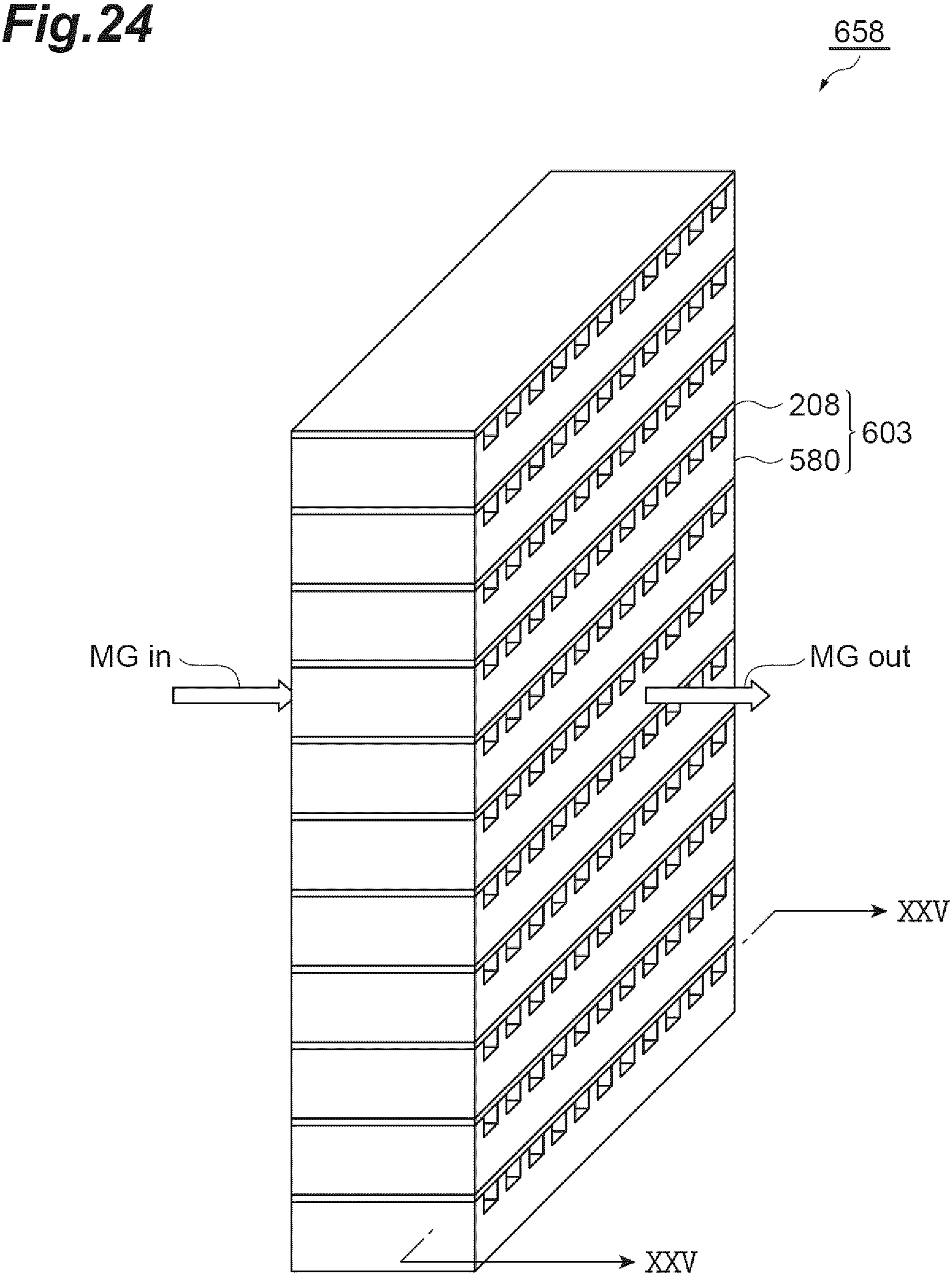

*Fig.25*

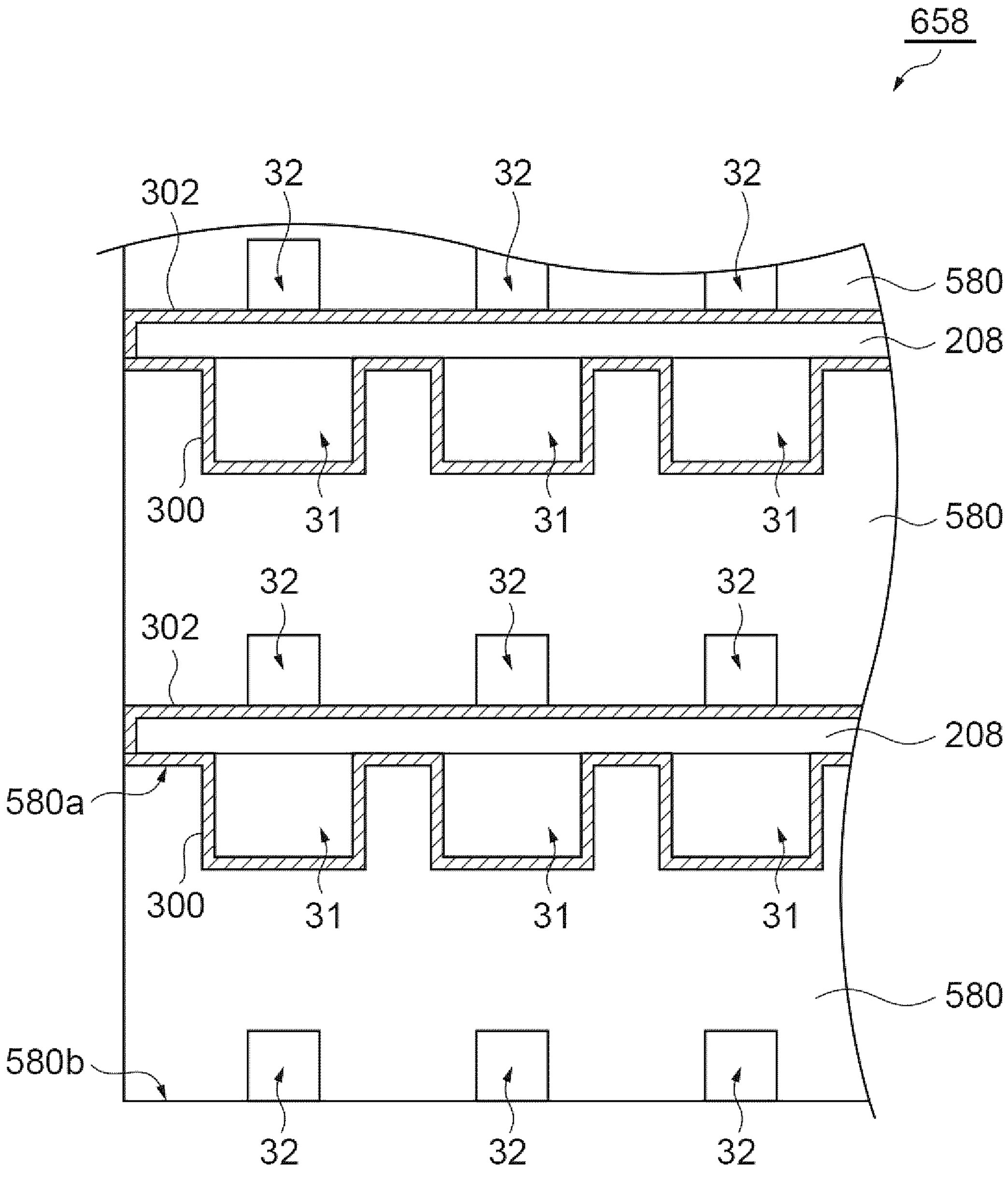
658
302
32
32
32
580
208
300
31
31
31
580
32
32
32
302
208
580a
300
31
31
31
580
580b
32
32
32

*Fig.26*

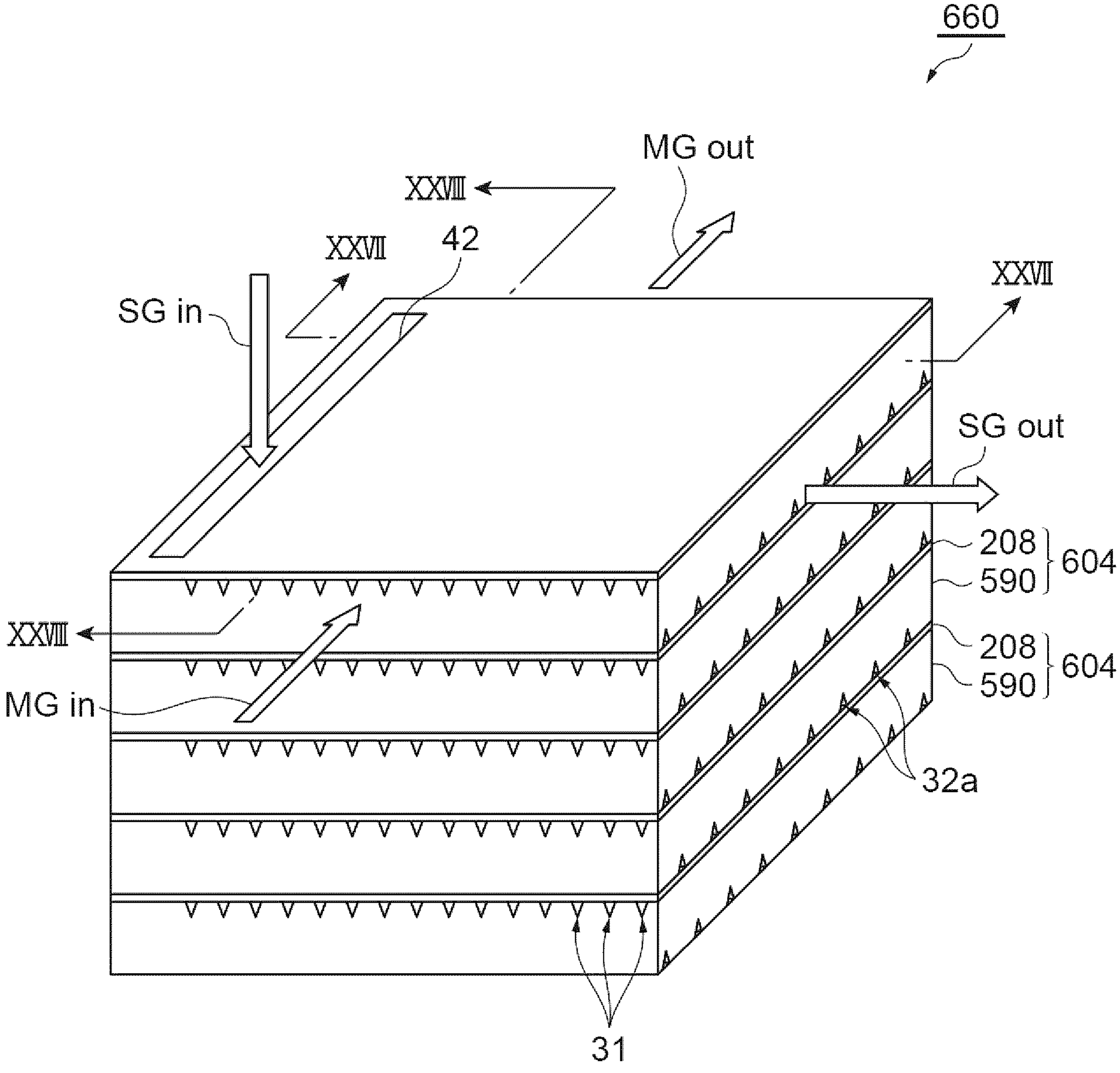
660
MG out
XXVIII
XXVII
42
SG in
XXVII
SG out
208
590
604
208
590
604
XXVIII
MG in
32a
31

*Fig.27*

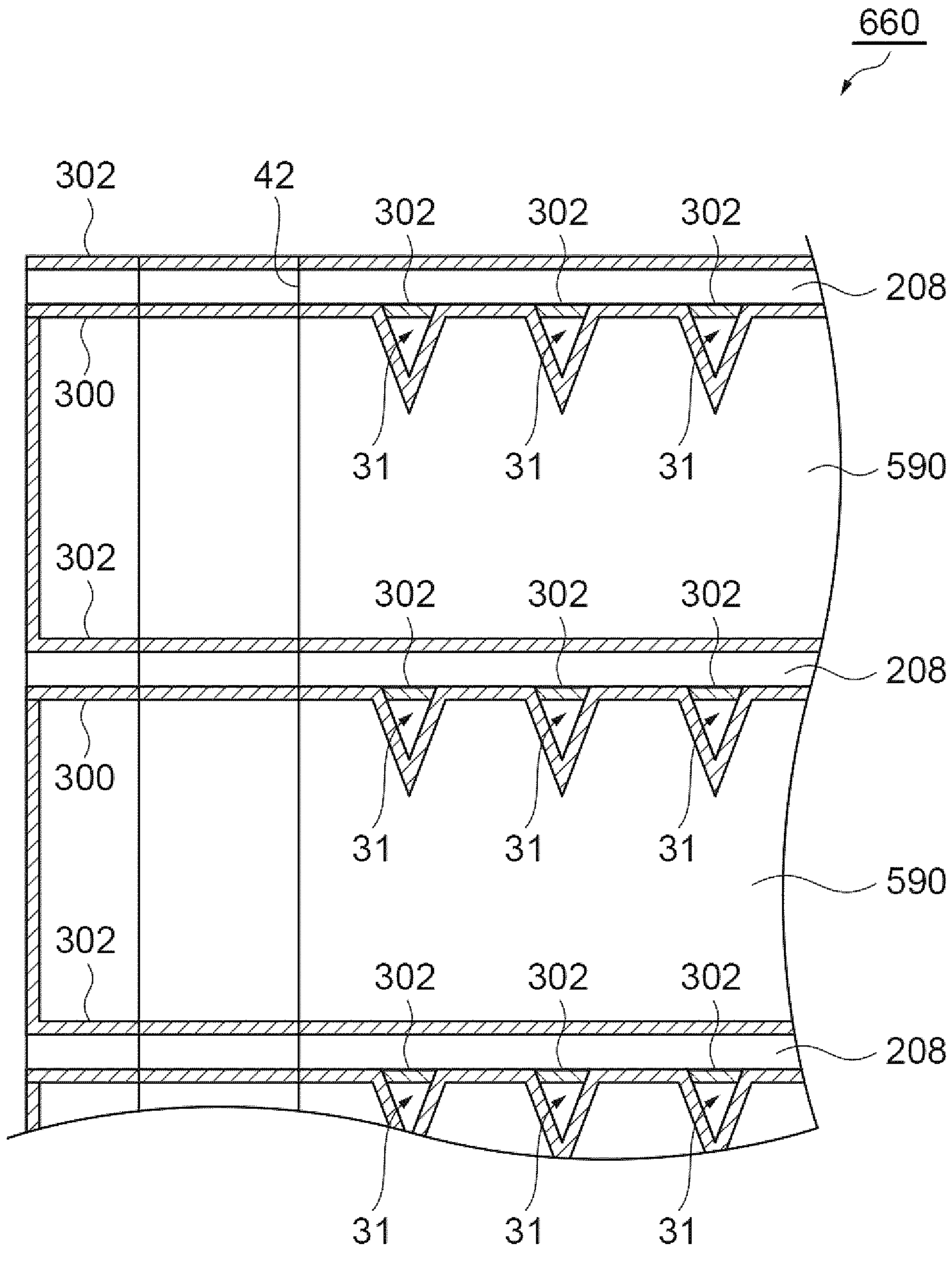
660
302
42
302
302
302
208
300
31
31
31
590
302
302
302
302
208
300
31
31
31
590
302
302
302
302
208
31
31
31

*Fig.28*

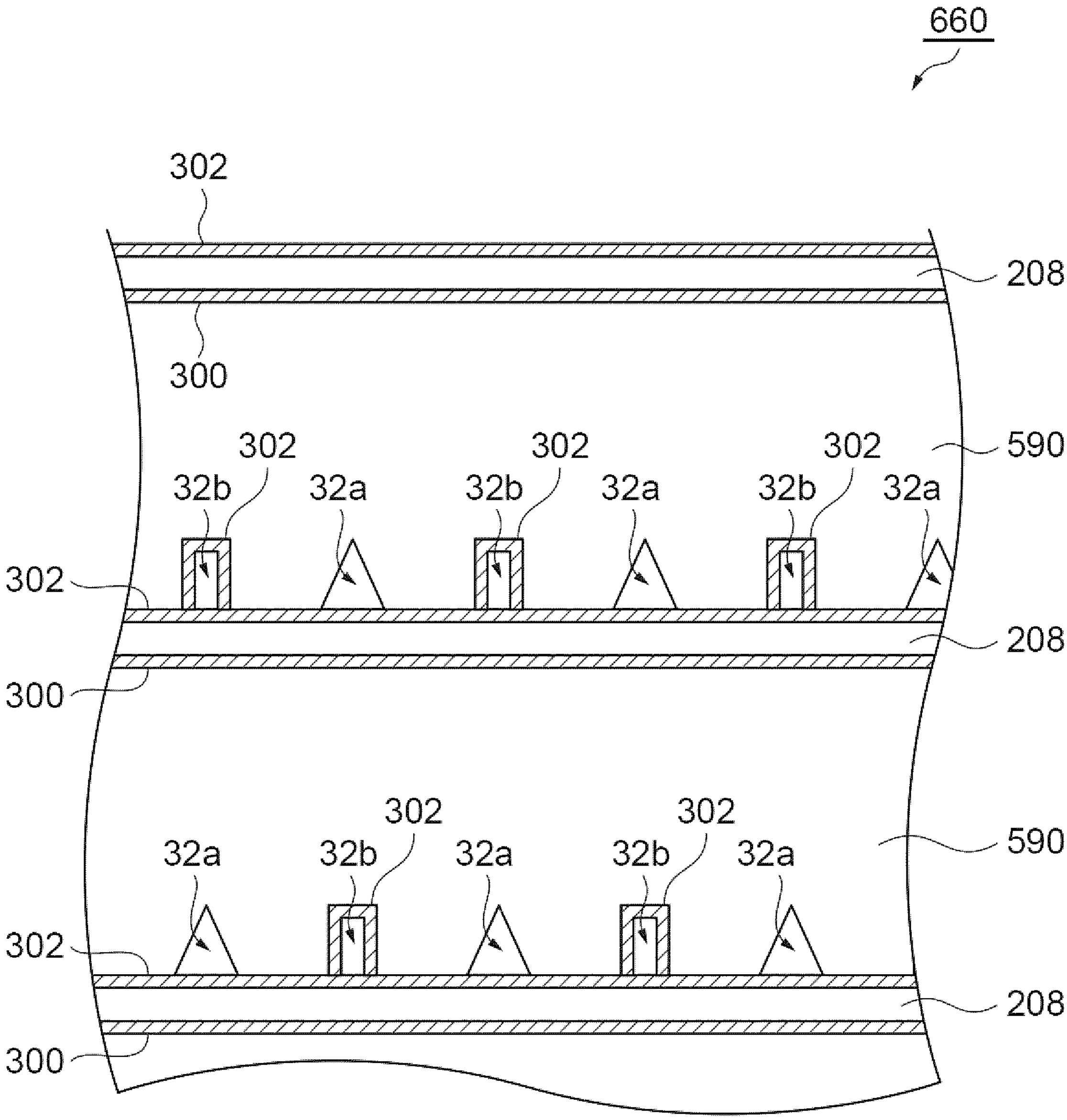
660
302
208
300
302
32b
302
32a
32b
302
32a
32b
302
32a
590
302
208
300
302
32a
32b
302
32a
32b
302
32a
590
302
208
300

Fig.29

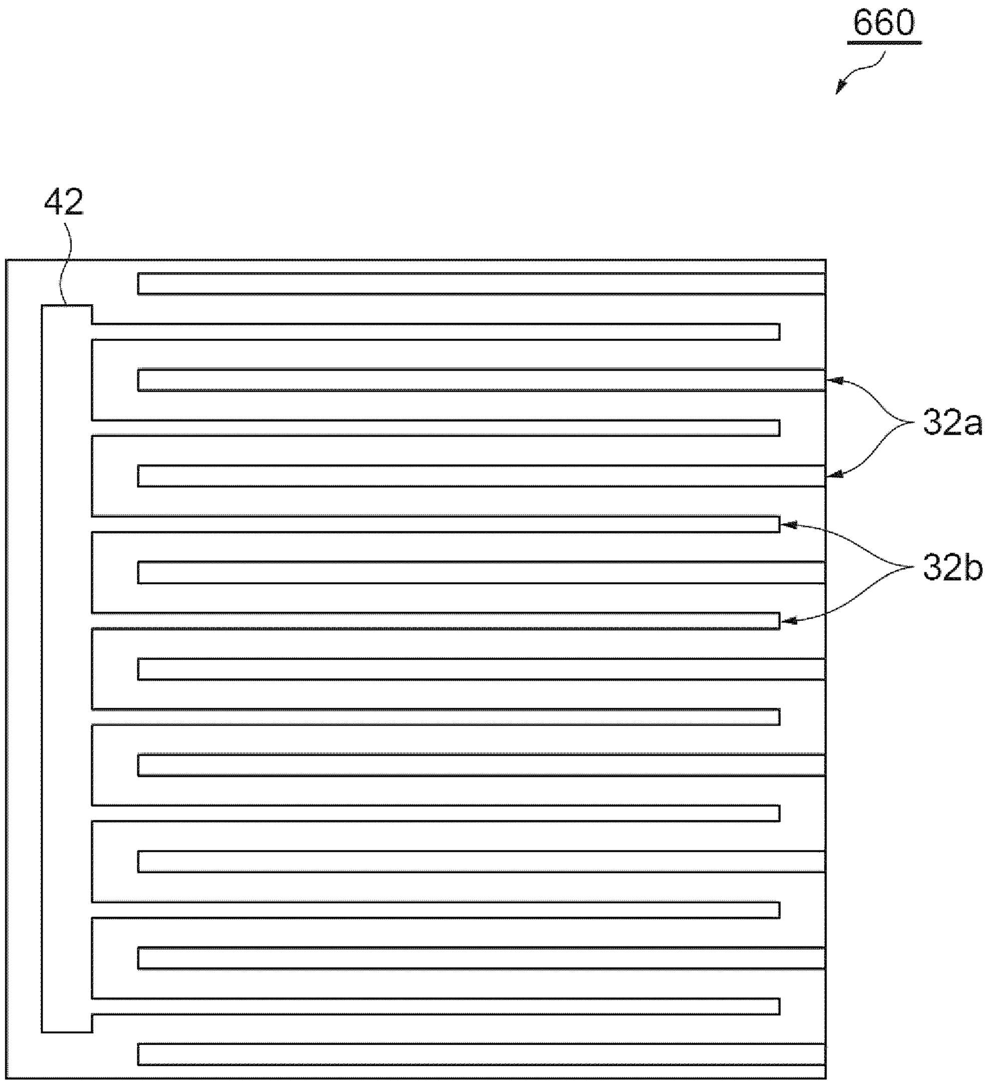

*Fig.30*

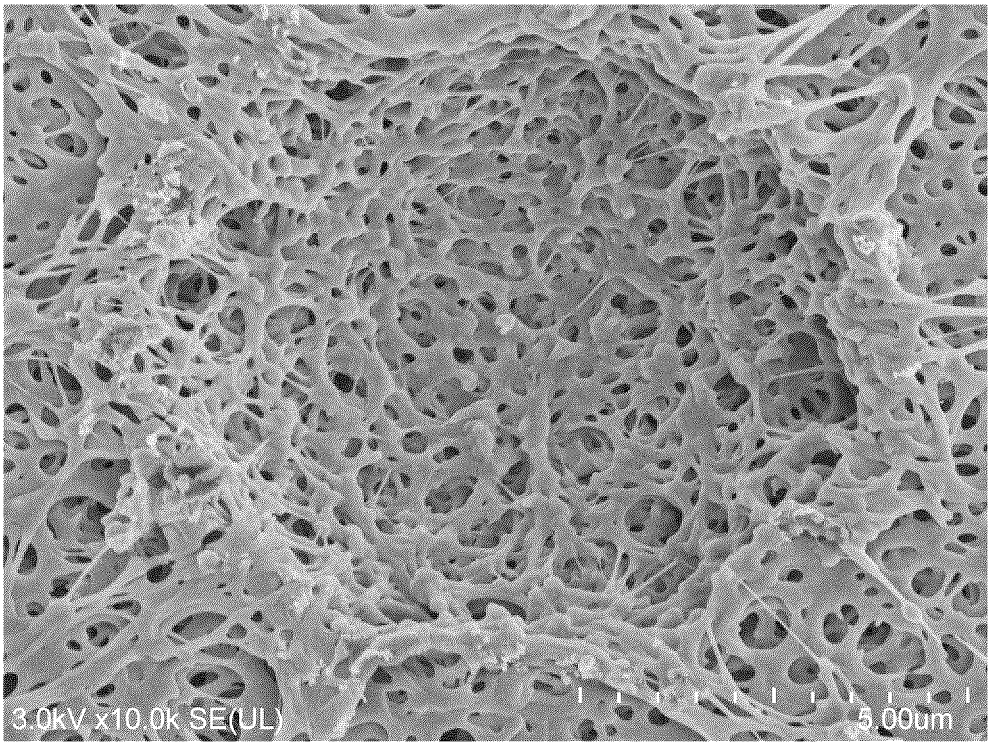

Fig.31

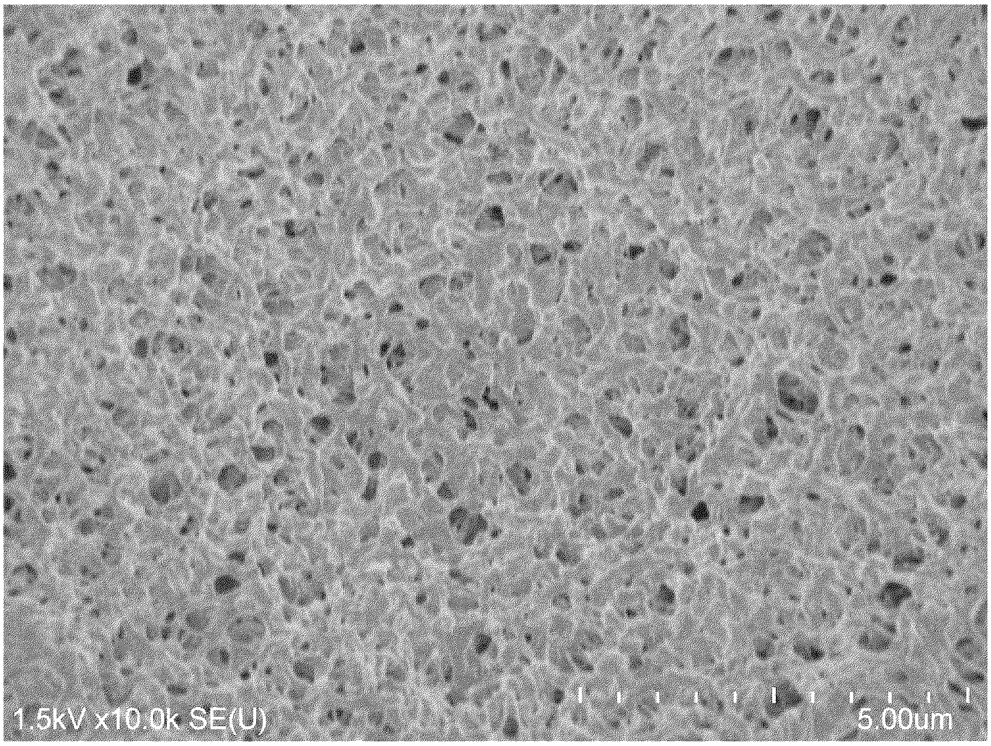

*Fig.32*

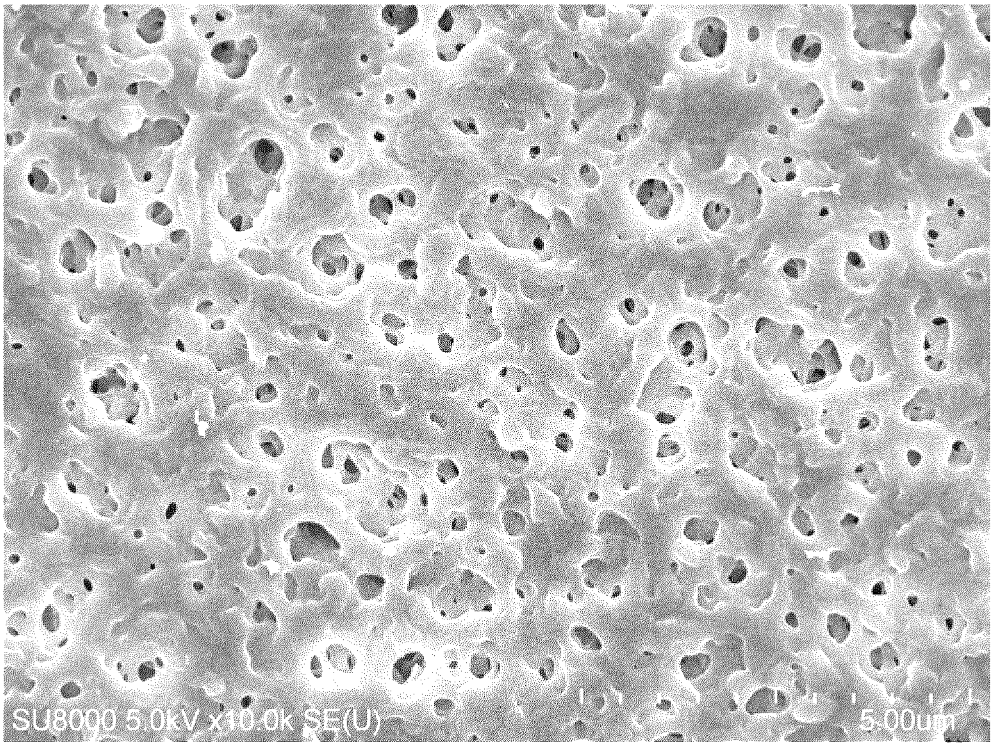

*Fig.33*

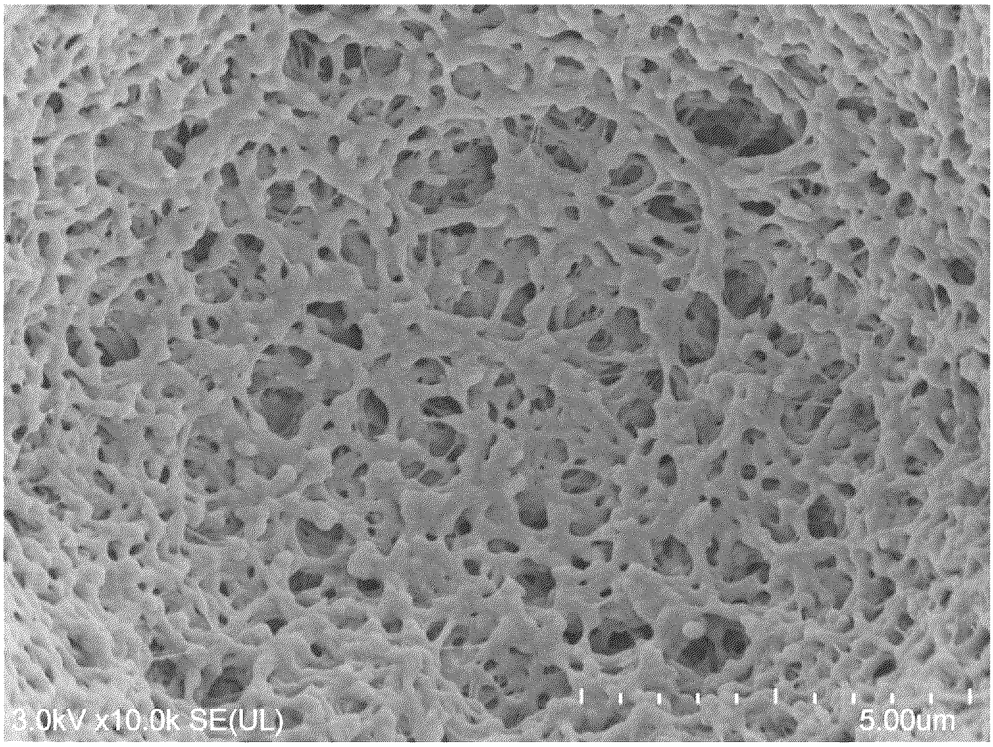

Fig.34

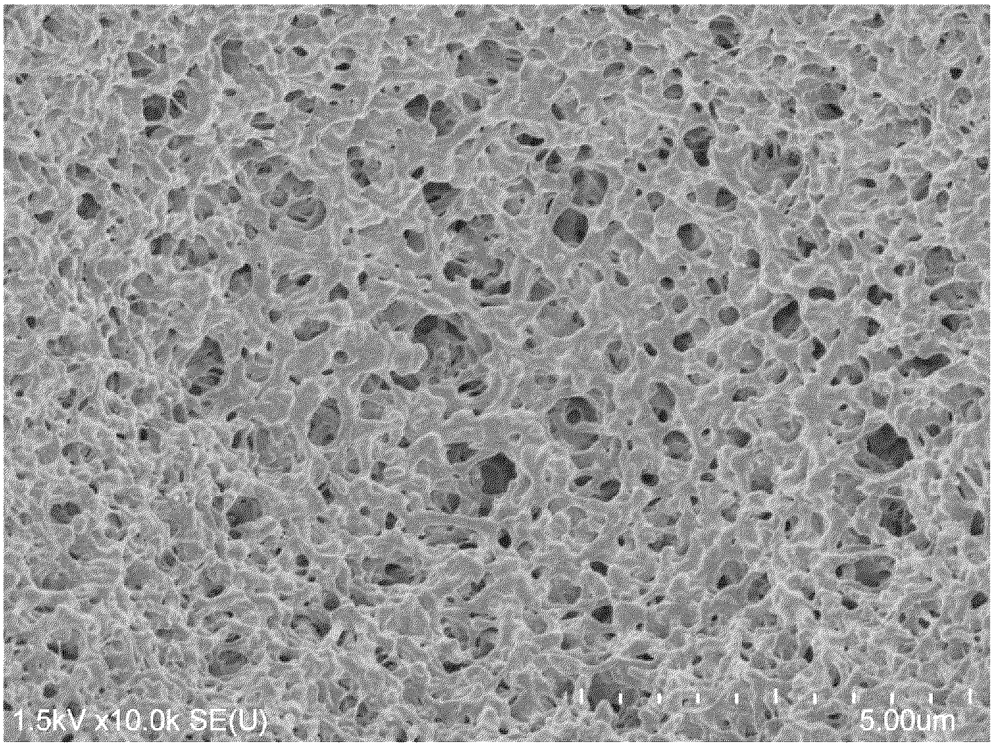

Fig.35

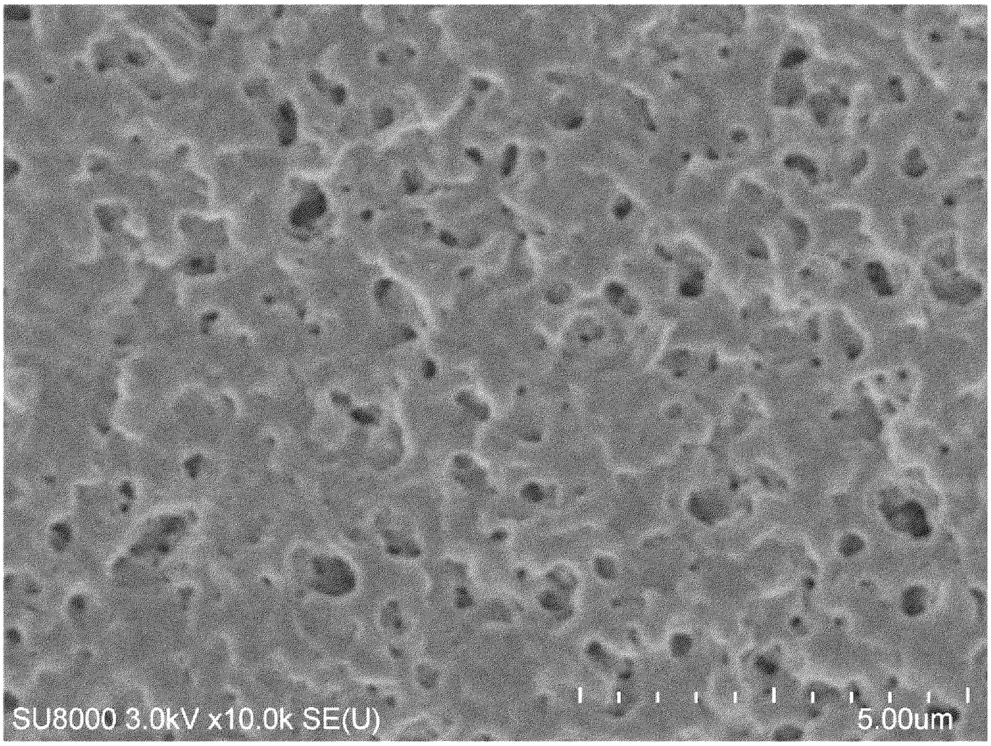

*Fig.36*

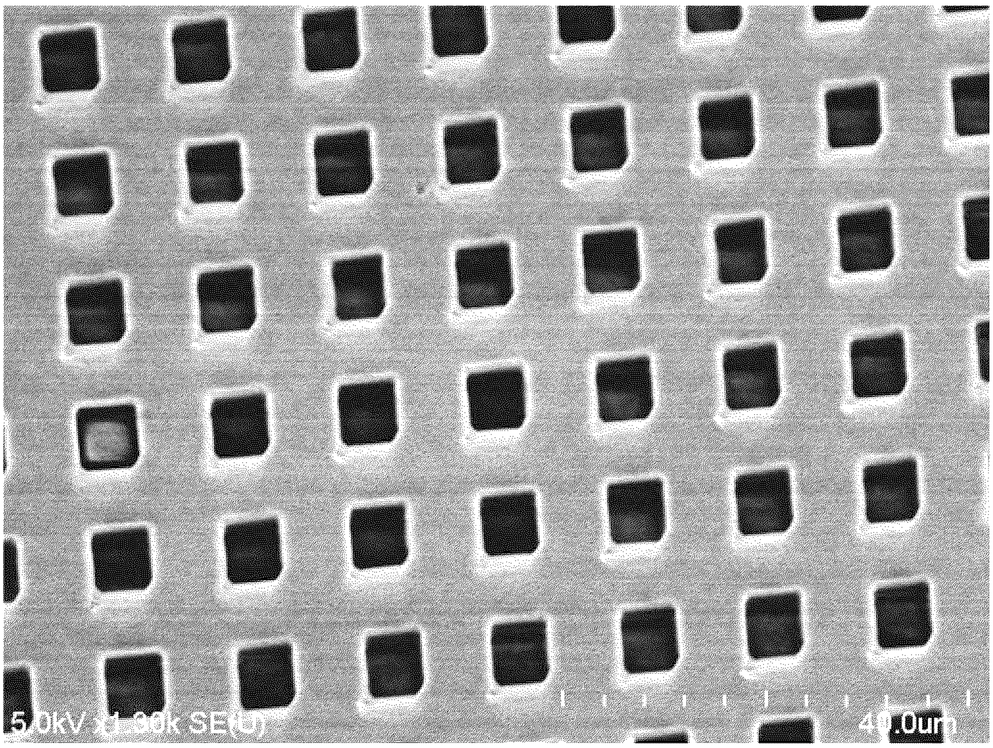

*Fig.37*

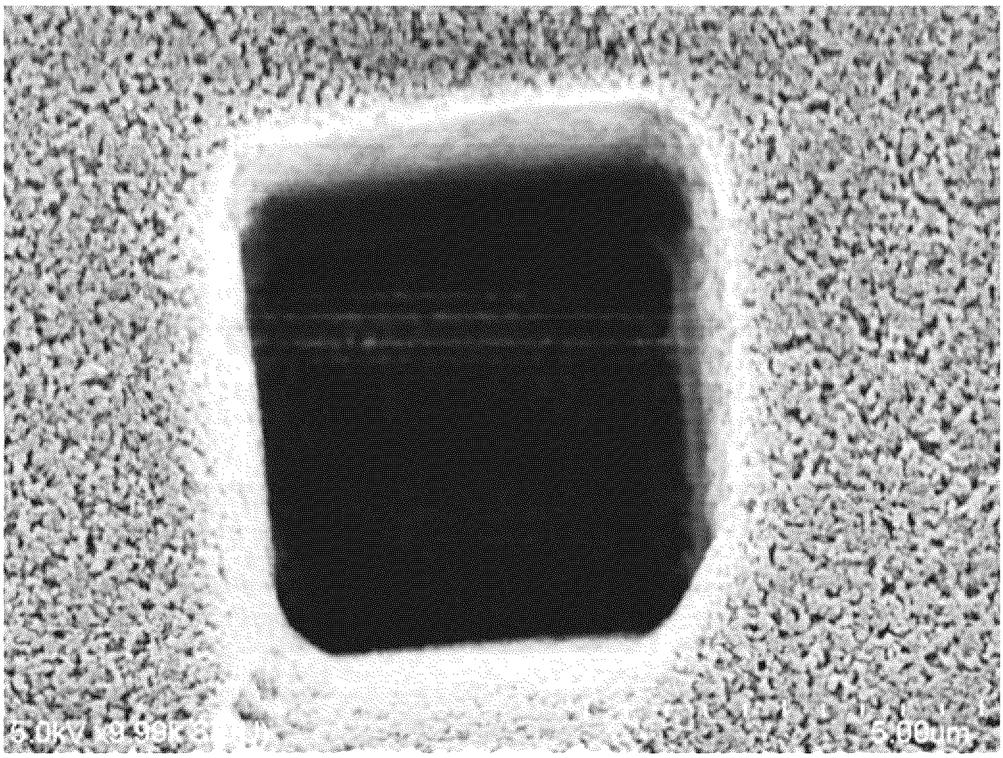

*Fig.38*

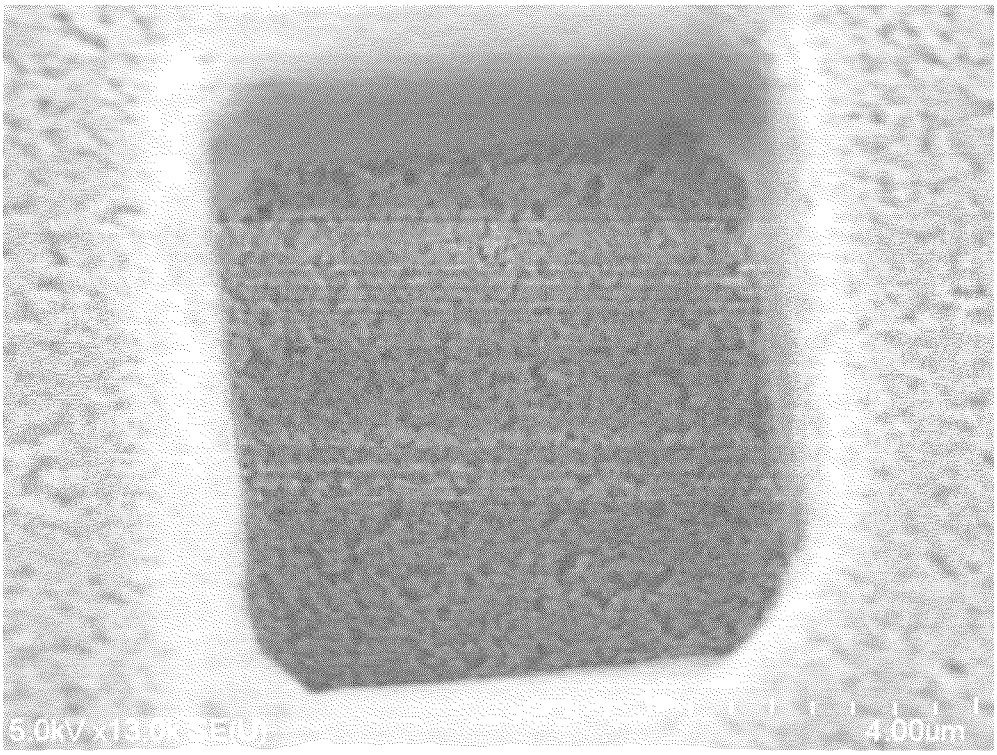

*Fig.39*

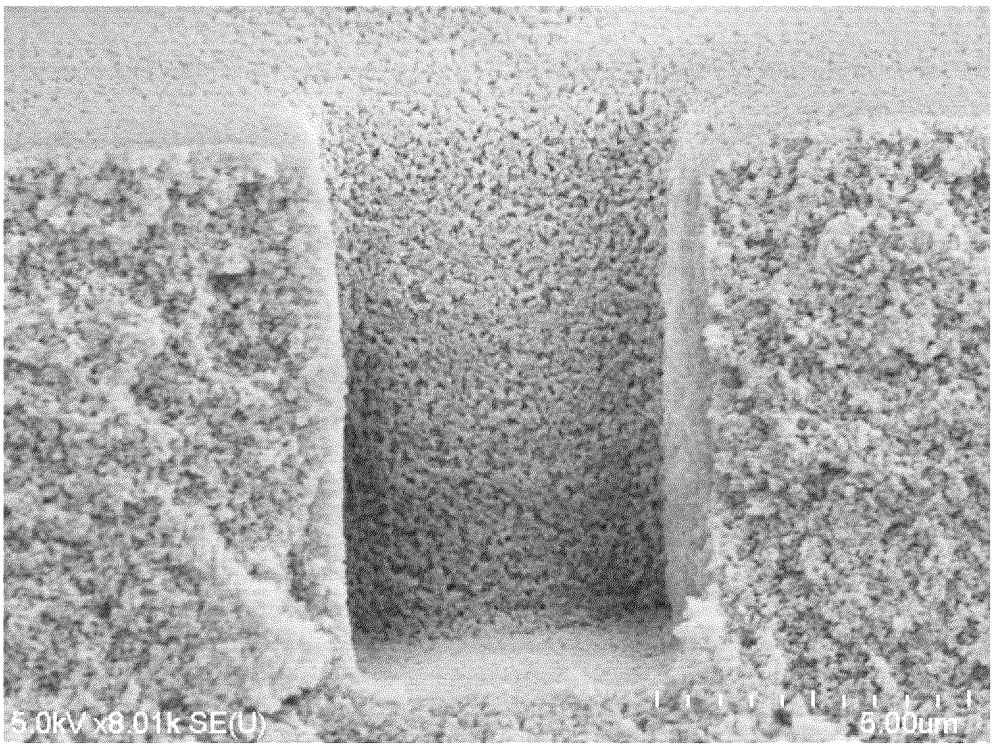

## Fig.40

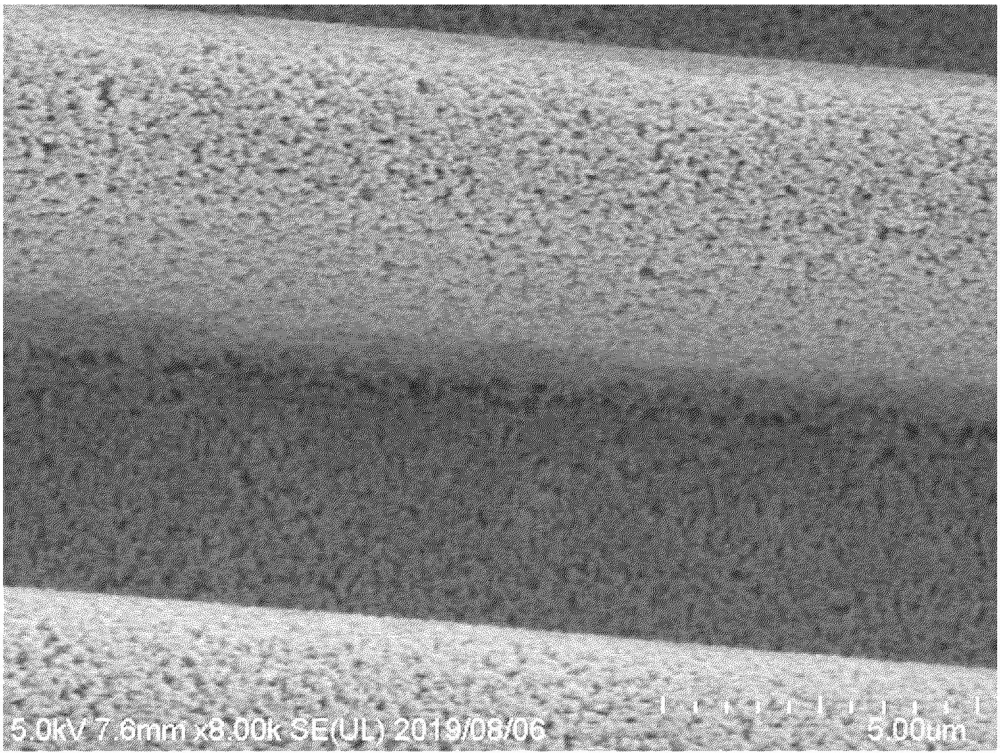

*Fig.41*

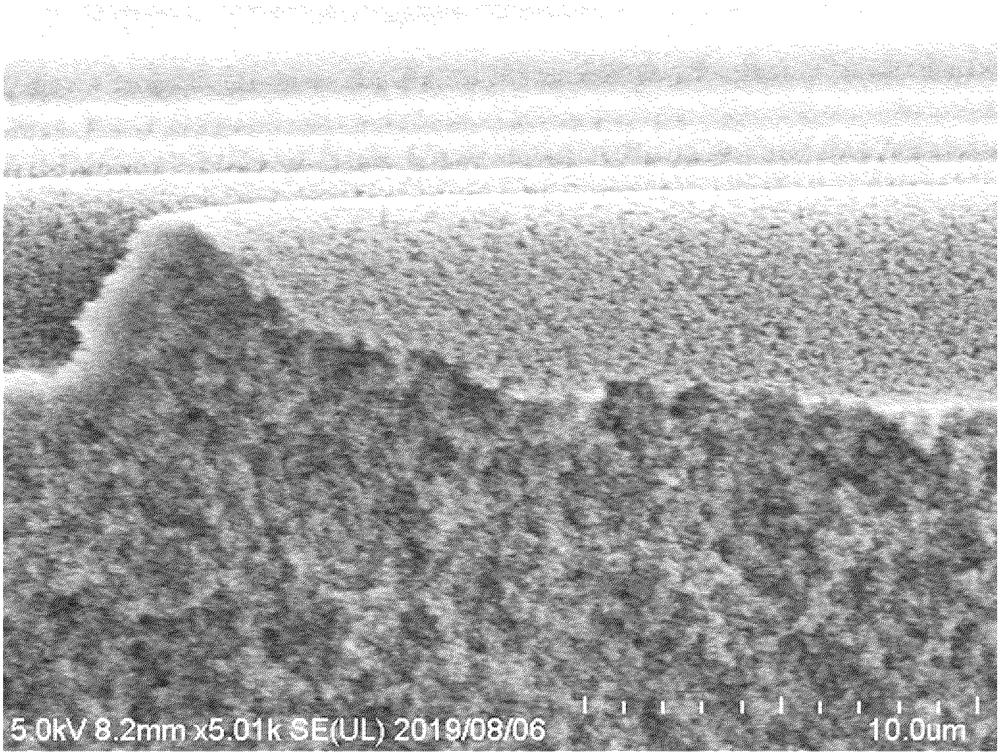

# Fig.42

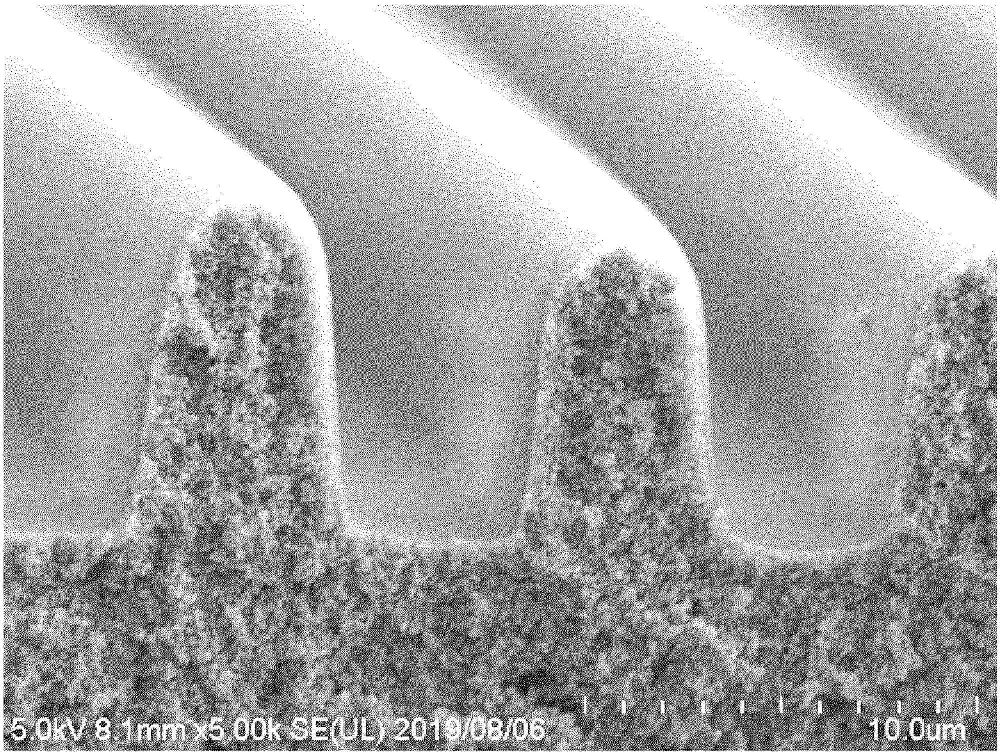

*Fig.43*

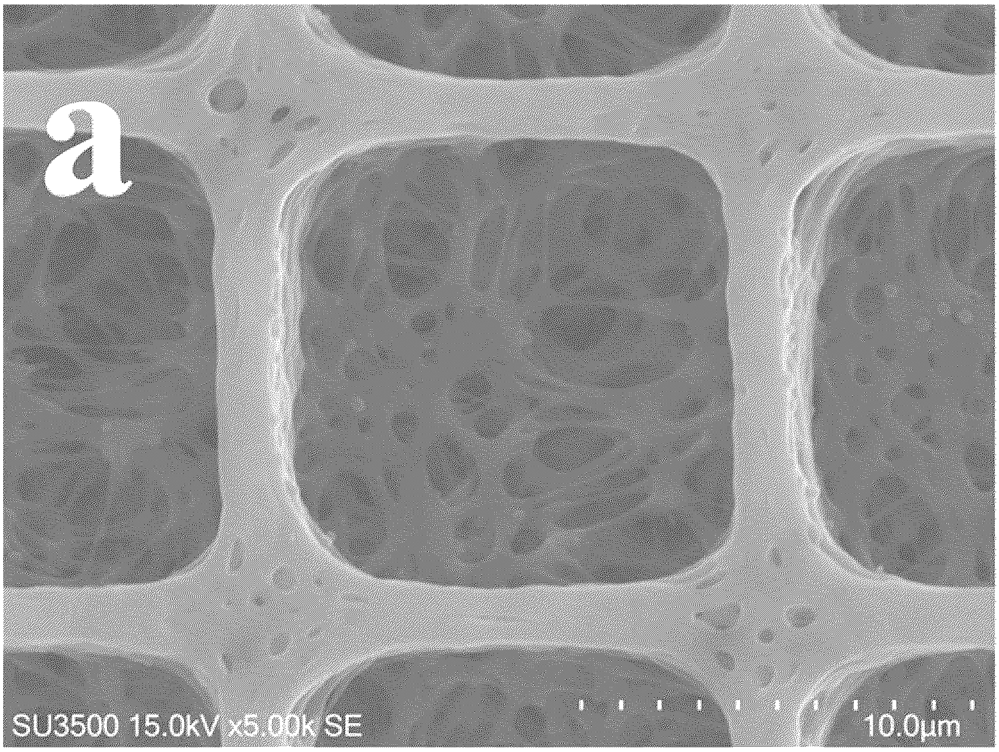

*Fig.44*

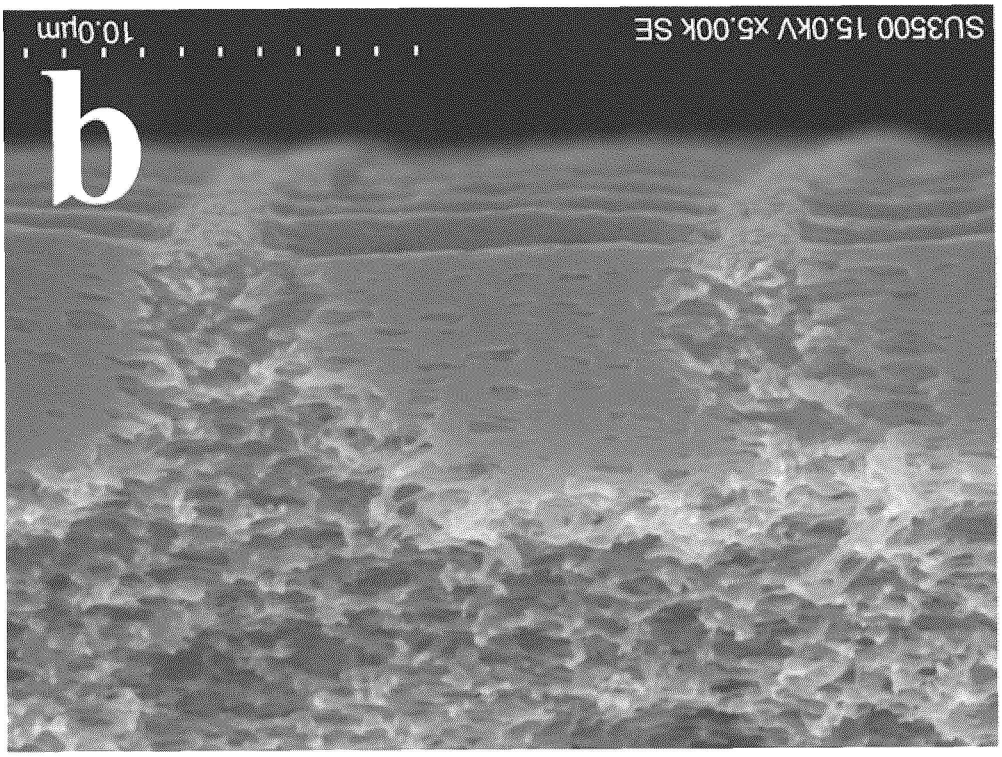

Fig.45

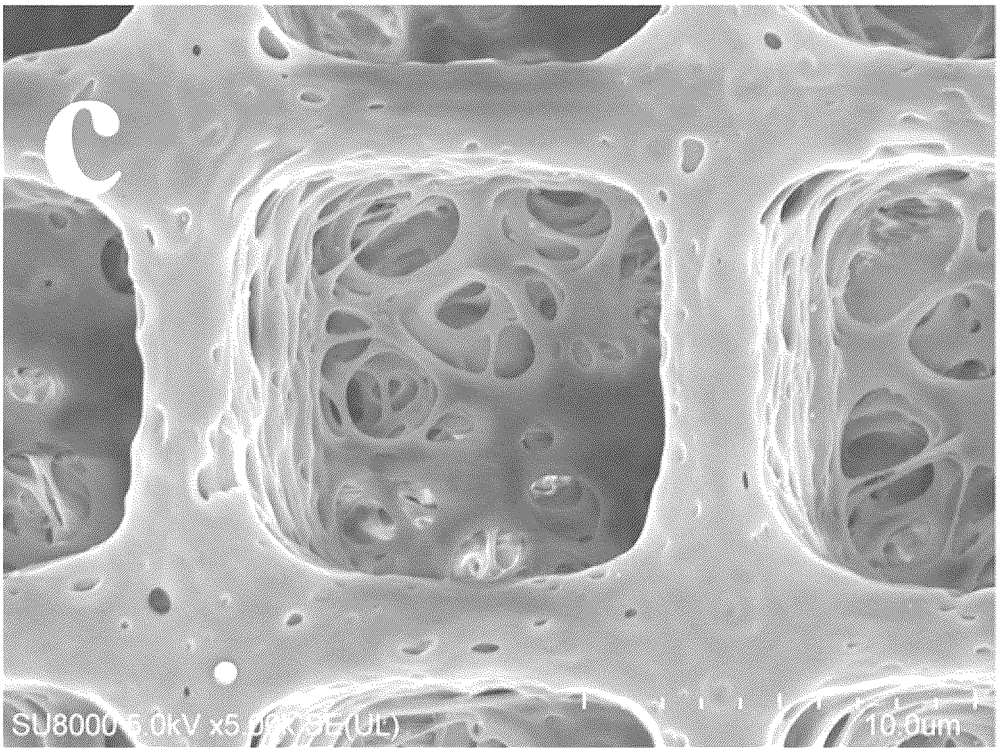

*Fig.46*

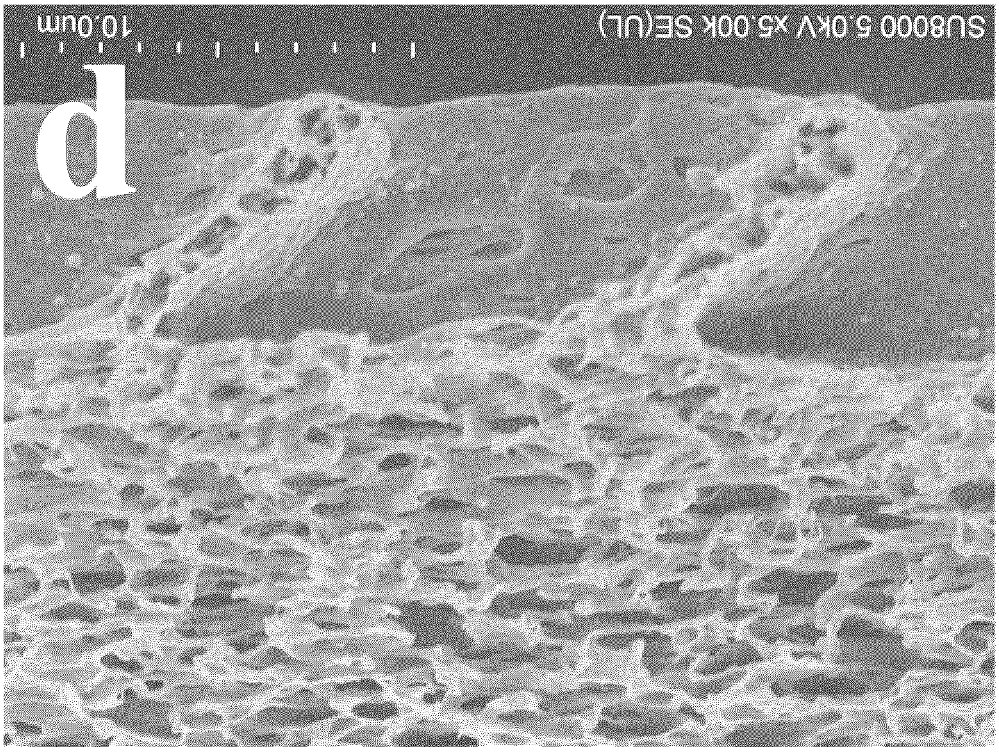

*Fig.47*

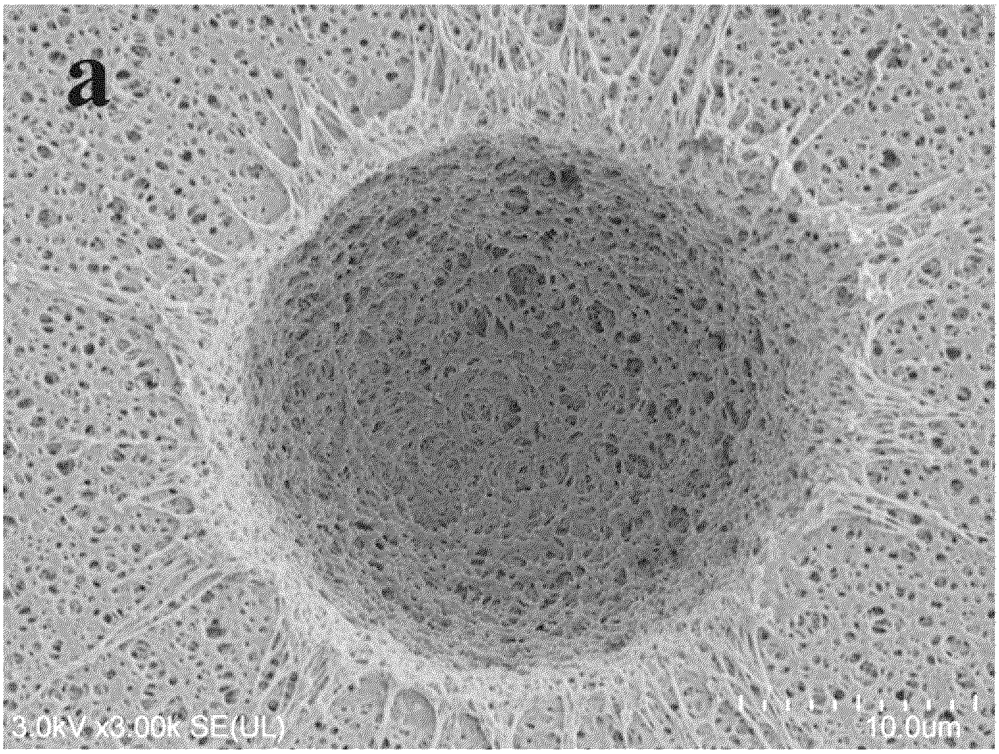

*Fig.48*

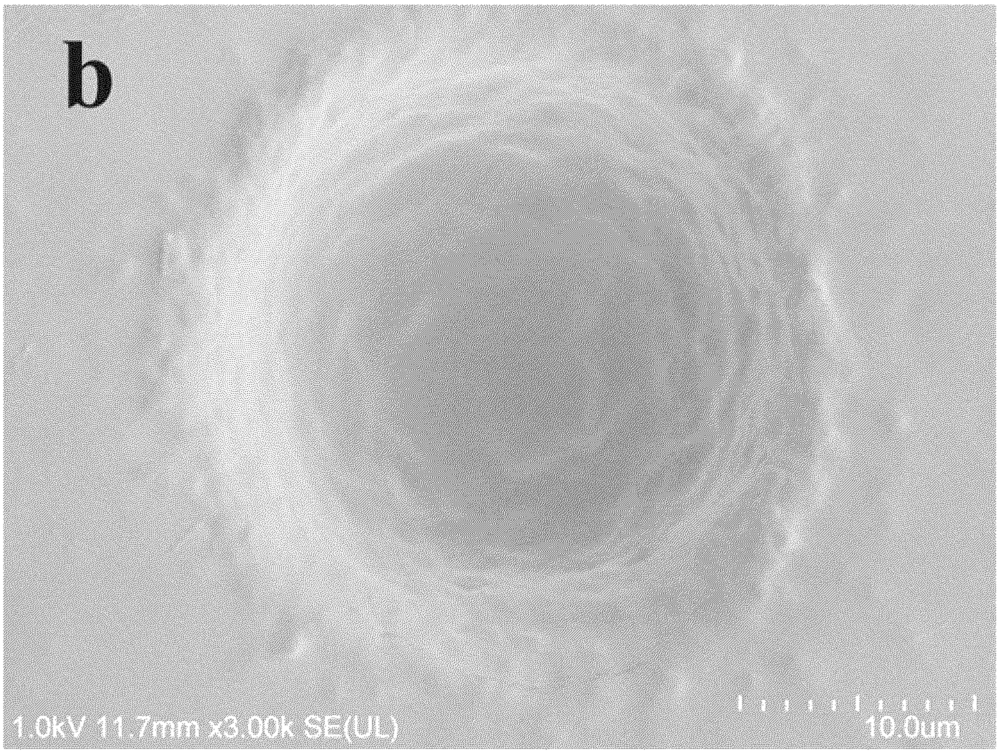

Fig.49

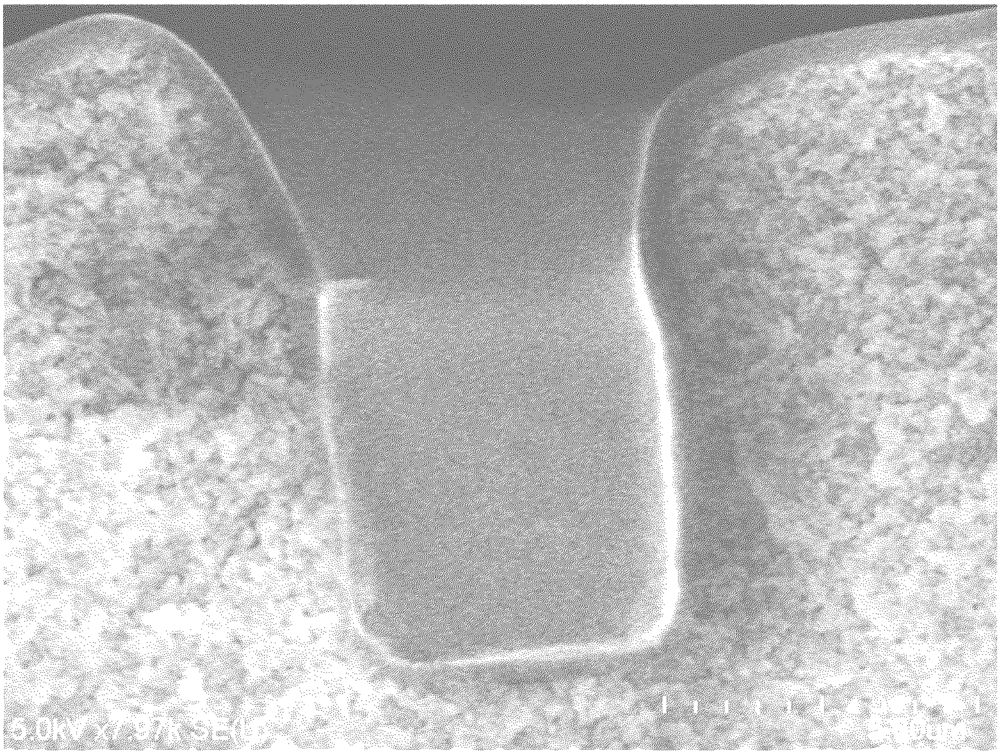

Fig.50

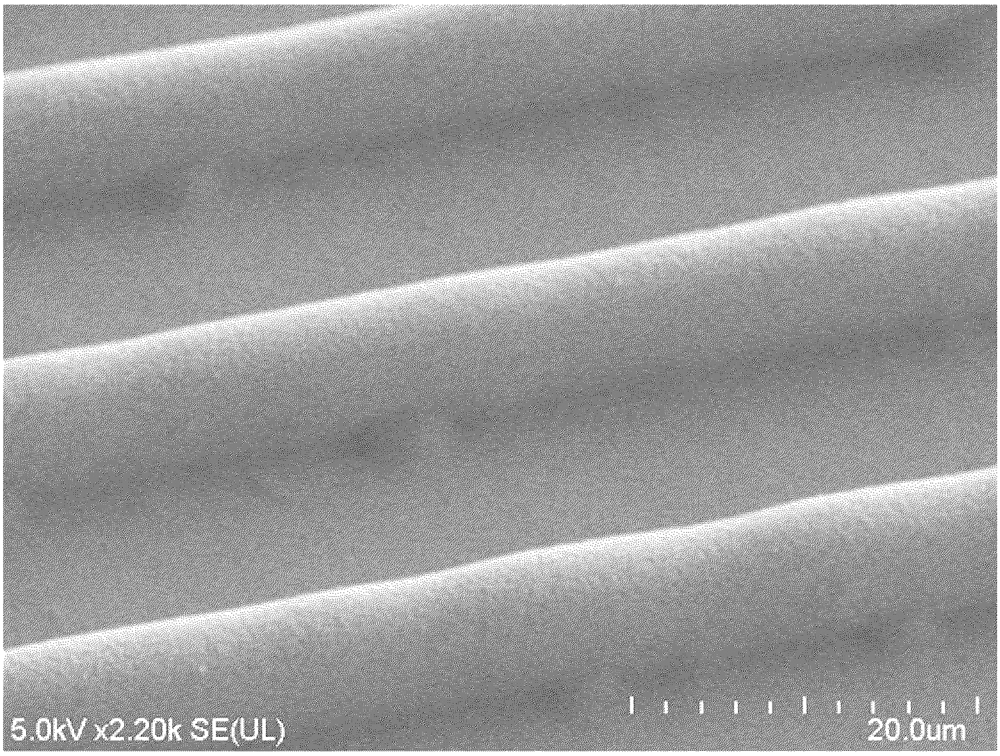

Fig.51

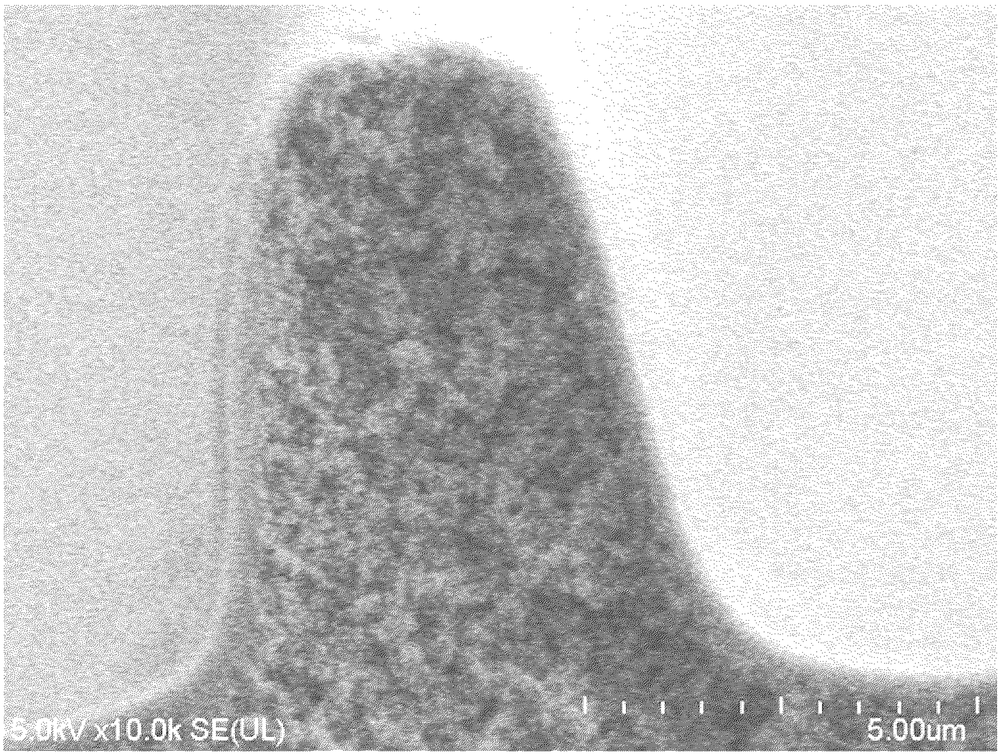

*Fig.52*

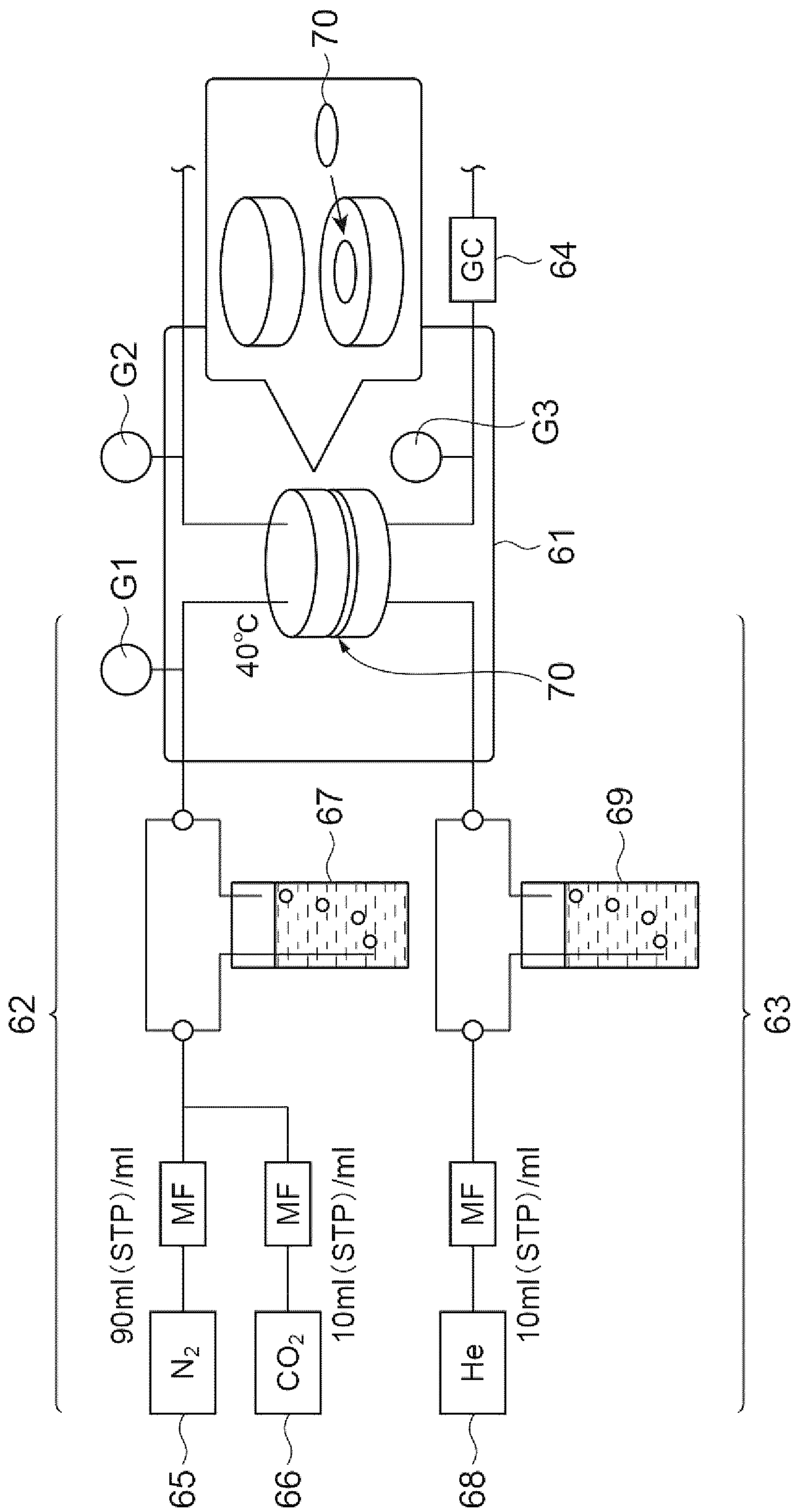
70
G1
G2
G3
GC
64
61
40°C
70
67
69
62
63
MF
MF
MF
$N_2$
$CO_2$
He
90ml(STP)/ml
10ml(STP)/ml
10ml(STP)/ml
65
66
68

*Fig.53*

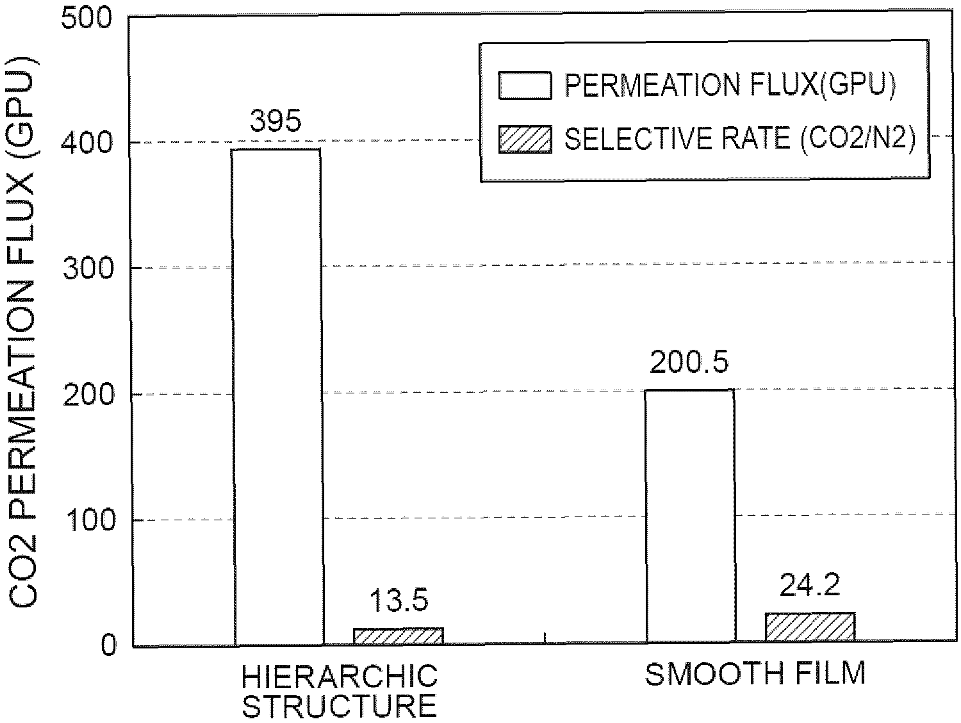
500
400
300
200
100
0
CO2 PERMEATION FLUX (GPU)
PERMEATION FLUX(GPU)
SELECTIVE RATE (CO2/N2)
395
13.5
200.5
24.2
HIERARCHIC STRUCTURE
SMOOTH FILM

Fig.54

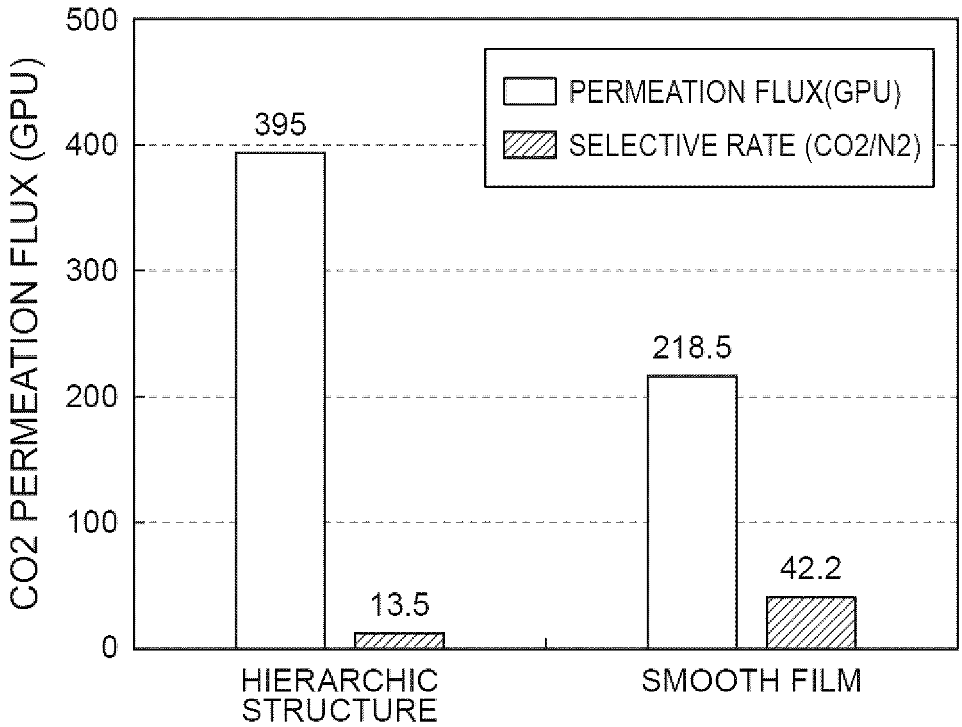
CO2 PERMEATION FLUX (GPU)
500
400
300
200
100
0
PERMEATION FLUX(GPU)
SELECTIVE RATE (CO2/N2)
395
13.5
218.5
42.2
HIERARCHIC STRUCTURE
SMOOTH FILM

# Fig.55

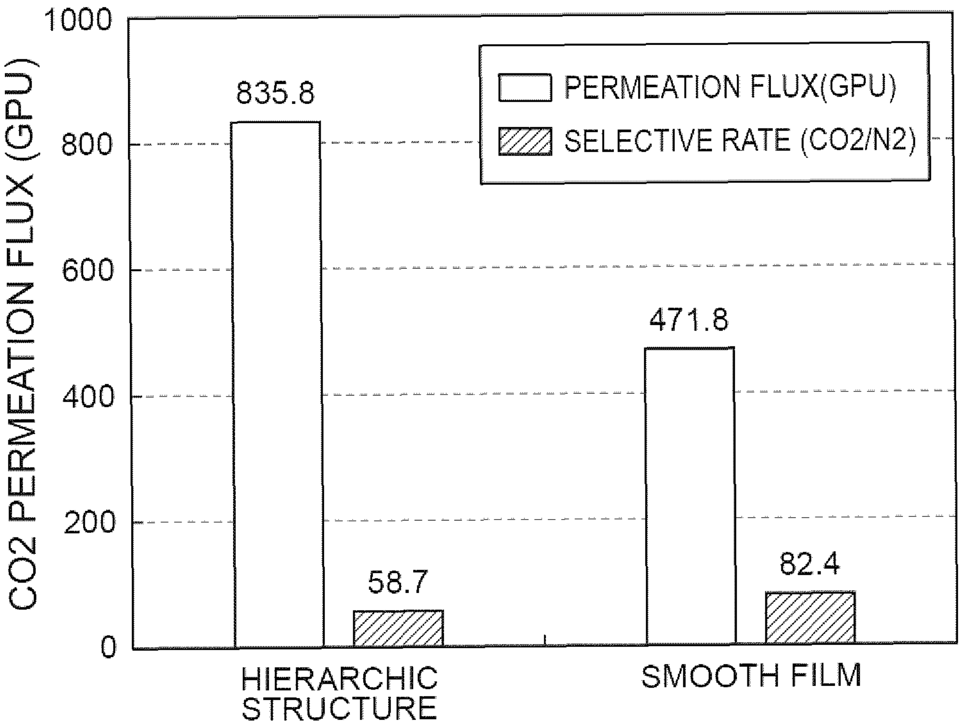
1000
800
600
400
200
0
CO2 PERMEATION FLUX (GPU)
835.8
58.7
471.8
82.4
PERMEATION FLUX(GPU)
SELECTIVE RATE (CO2/N2)
HIERARCHIC STRUCTURE
SMOOTH FILM

*Fig.56*

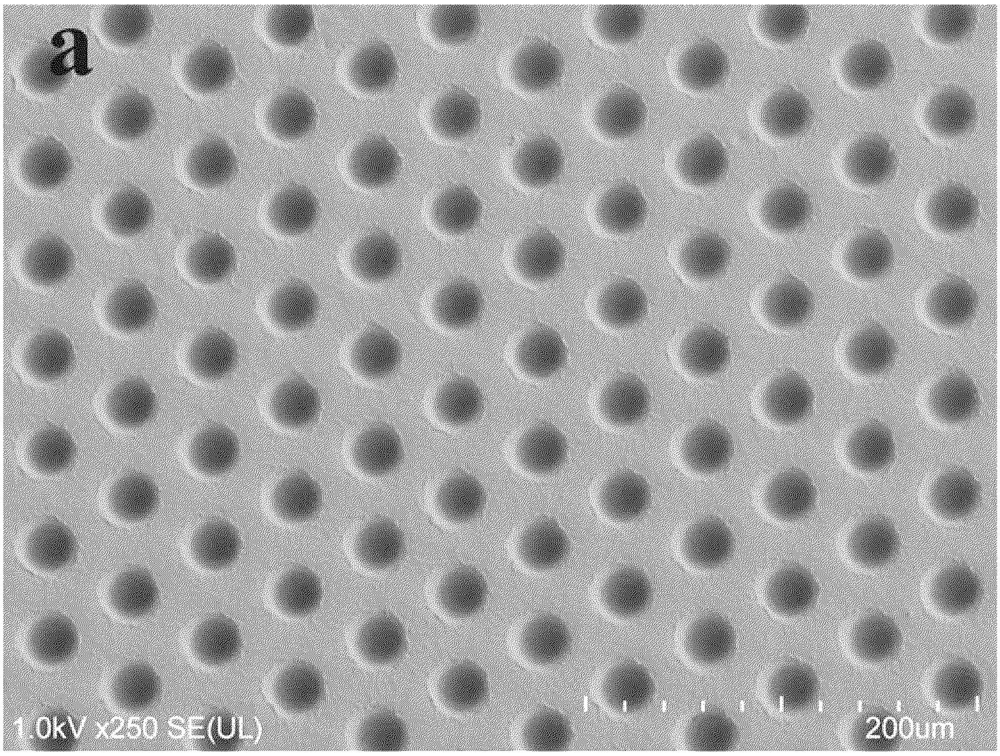

*Fig.57*

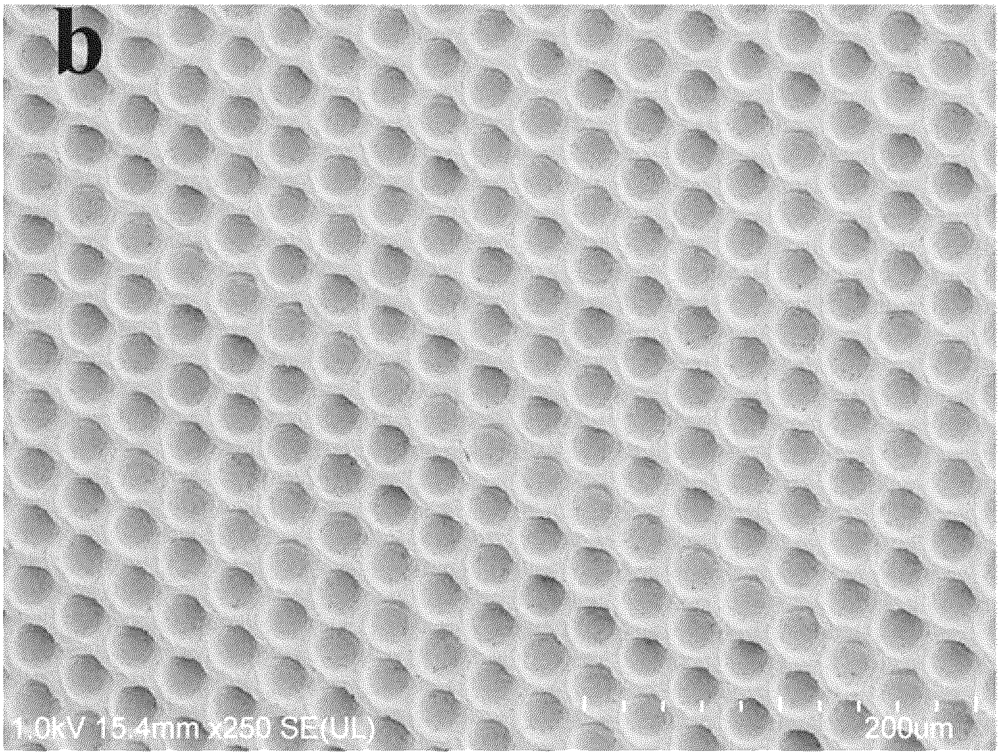

*Fig.58*

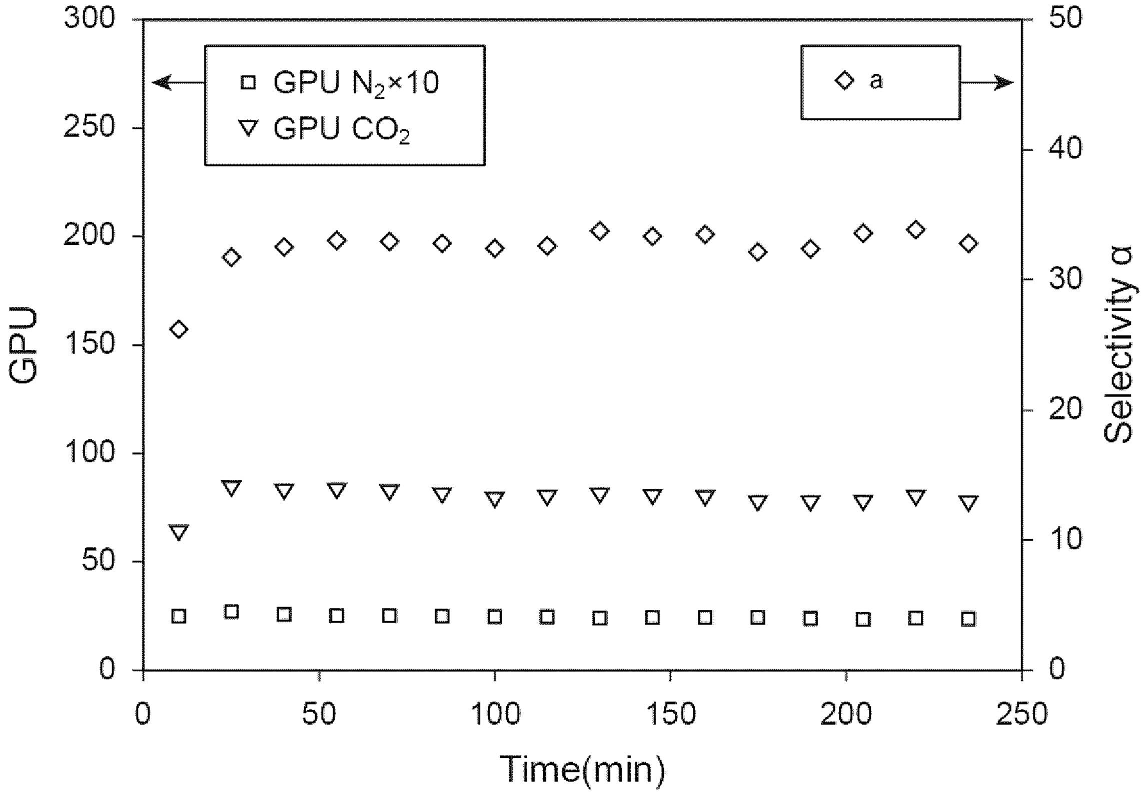
300
250
200
150
100
50
0
GPU
0
50
100
150
200
250
Time(min)
50
40
30
20
10
0
Selectivity α
GPU $N_2$×10
GPU $CO_2$
a

*Fig.59*

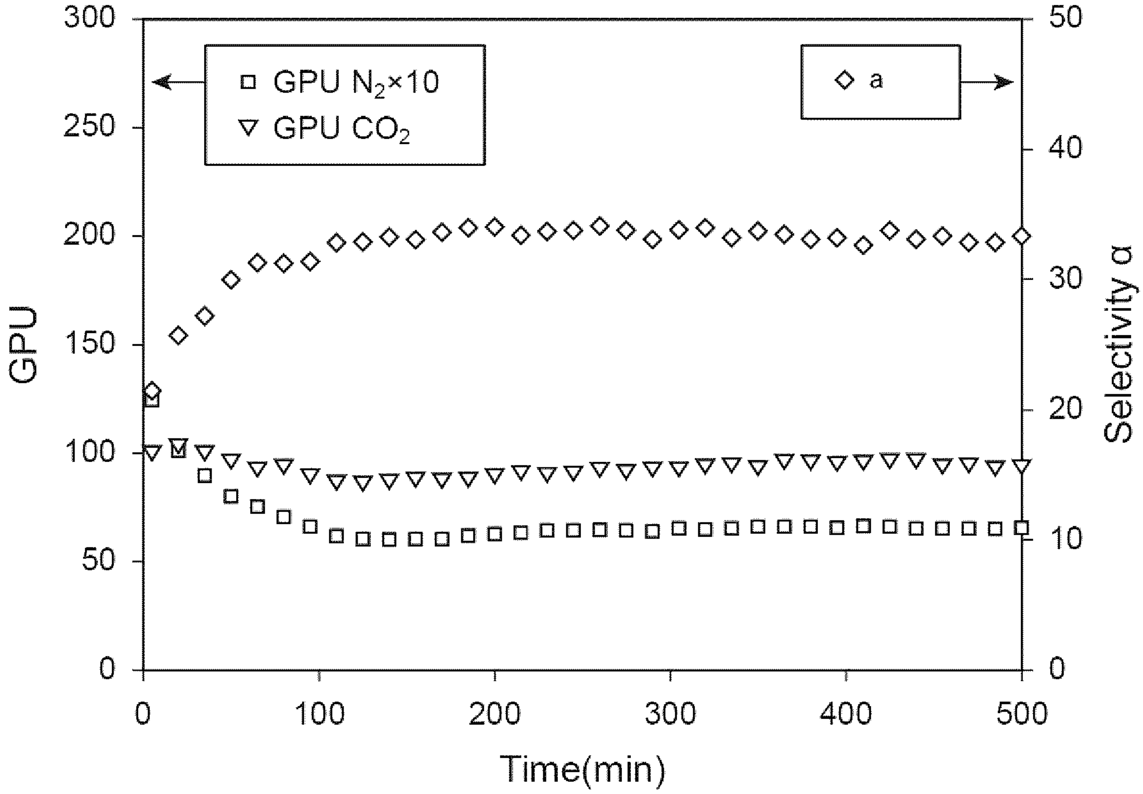
GPU N2×10
GPU CO2
a
GPU
Selectivity α
Time(min)
300
250
200
150
100
50
0
50
40
30
20
10
0
0
100
200
300
400
500

**Fig.60** (a)

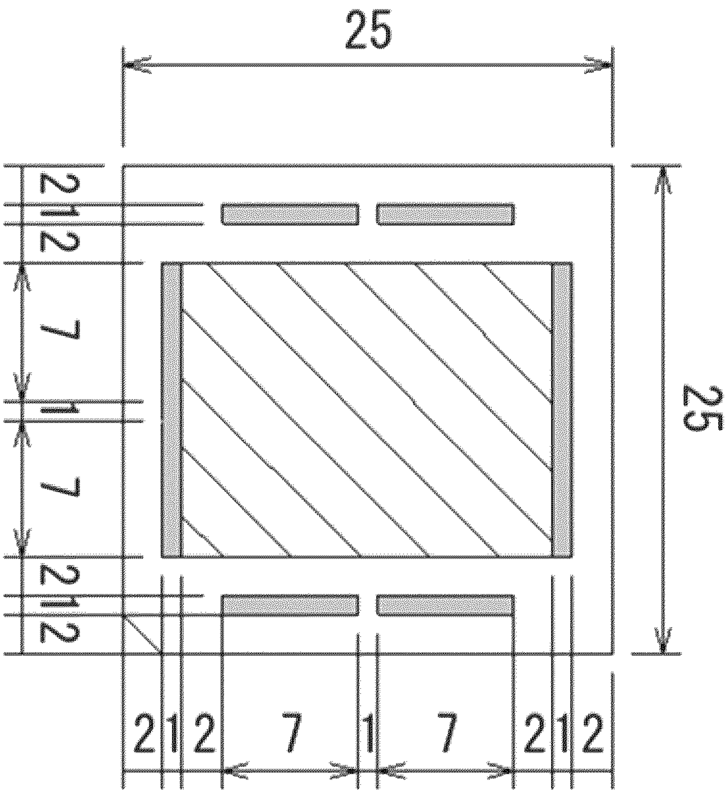


(b)

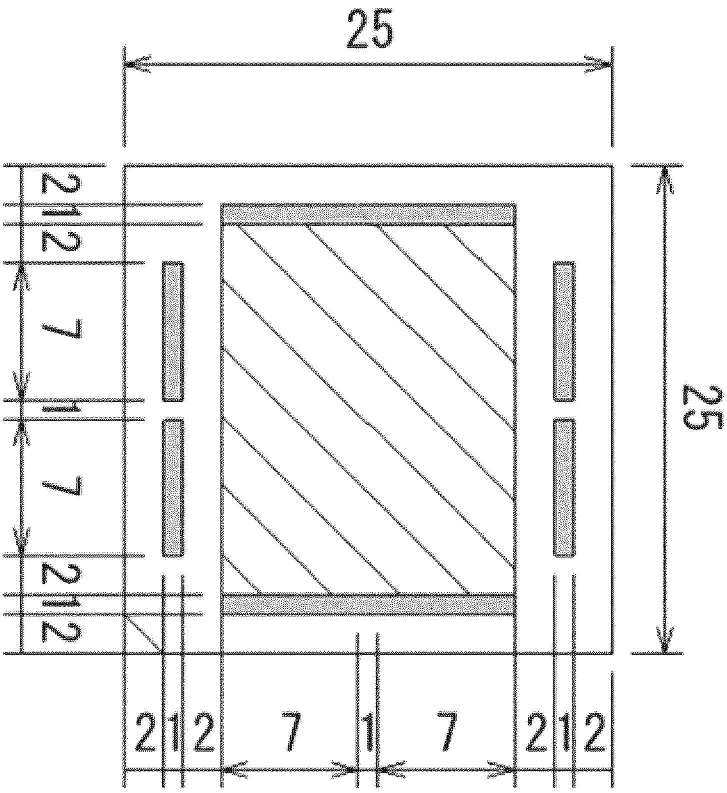

*Fig.61*

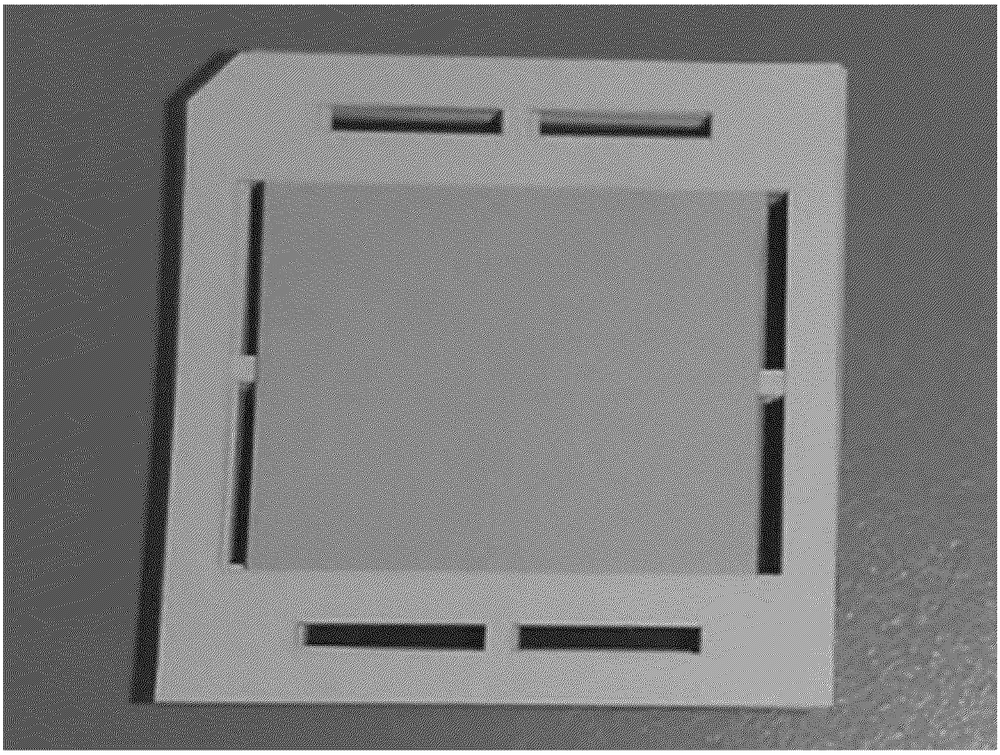

Fig.62

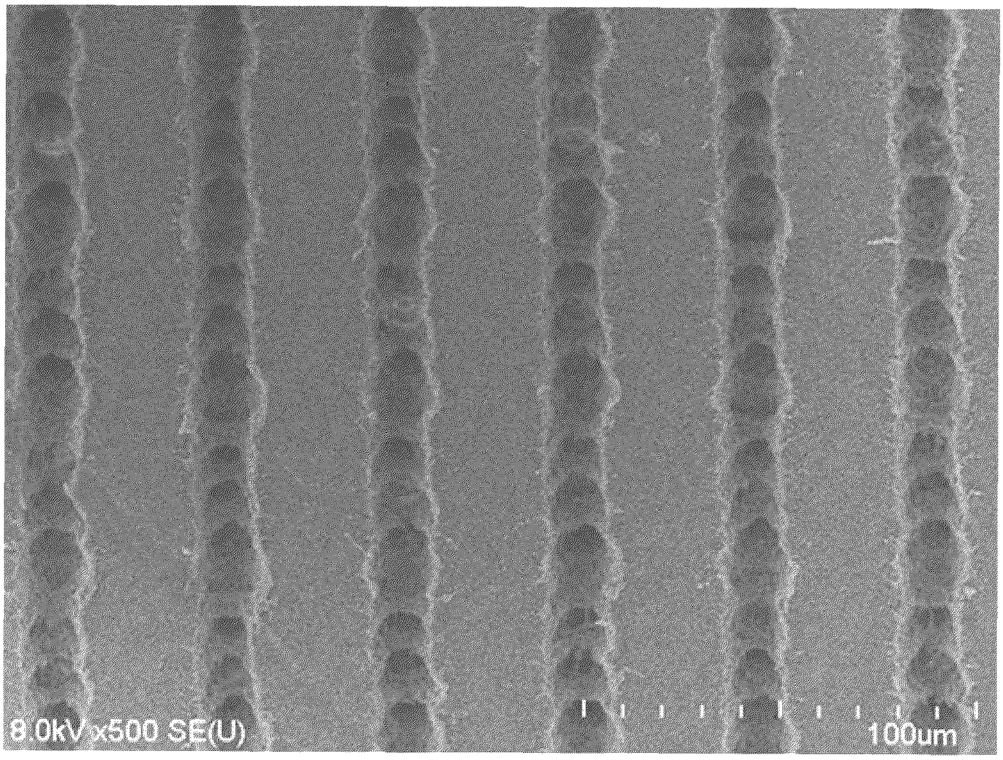

*Fig.63*

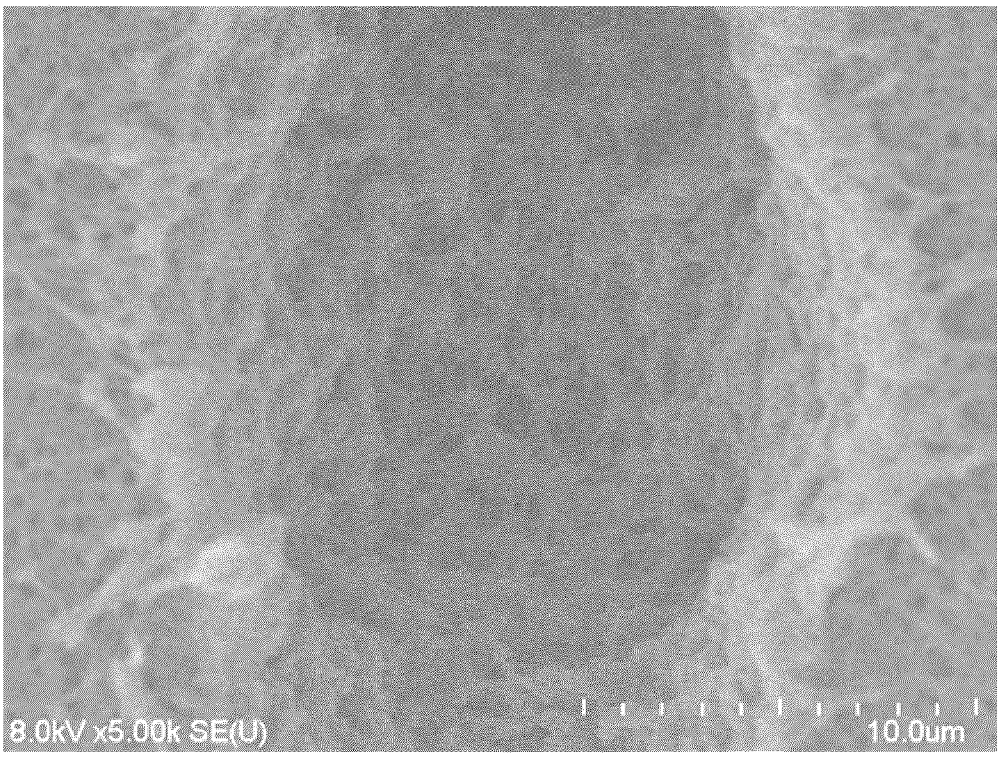

Fig.64

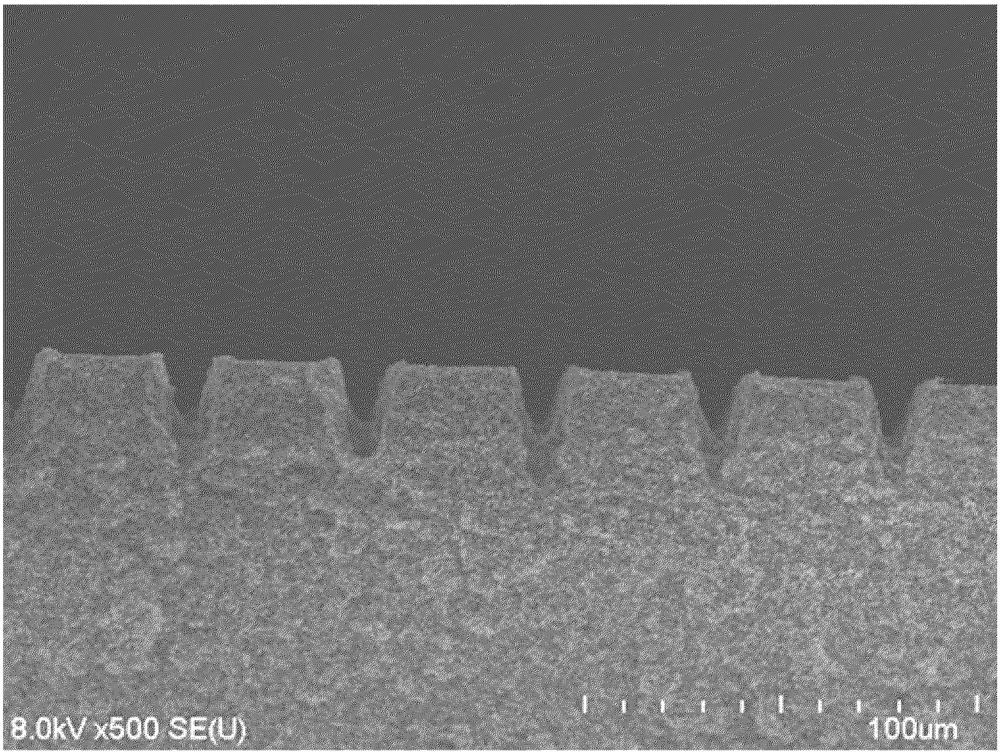

*Fig.65*

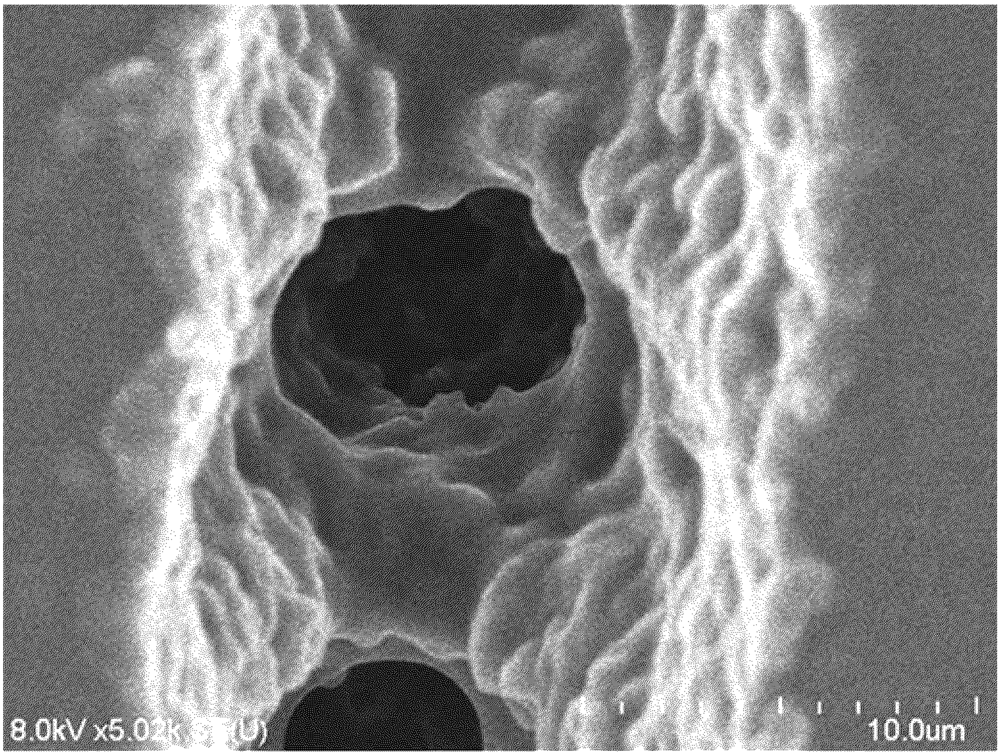

*Fig.66*

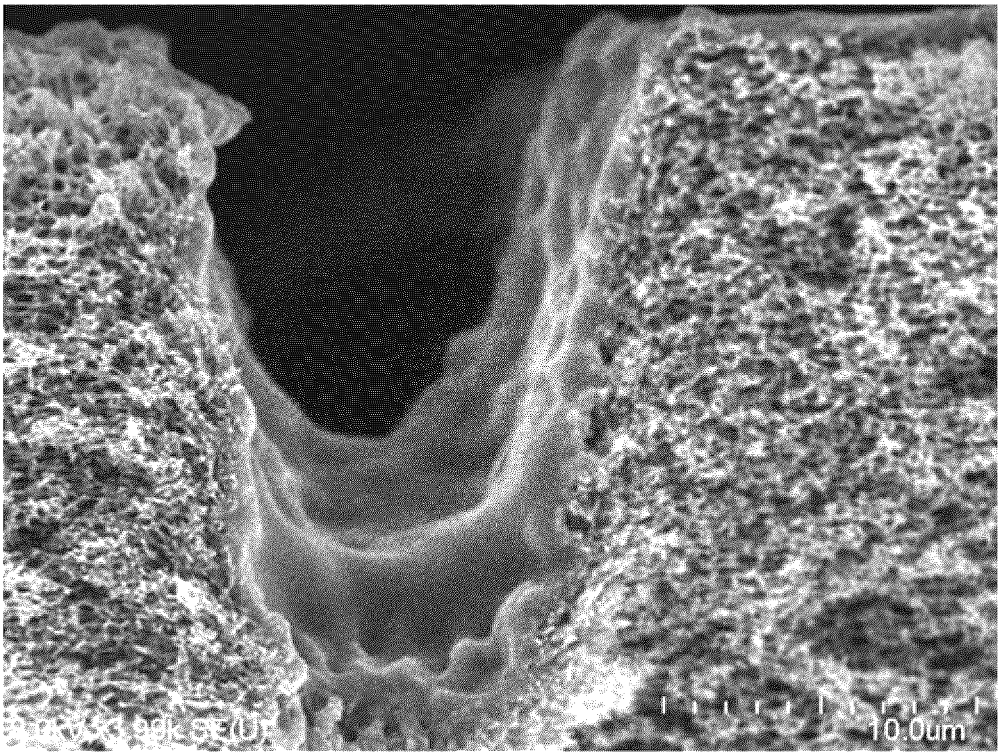

# Fig.67

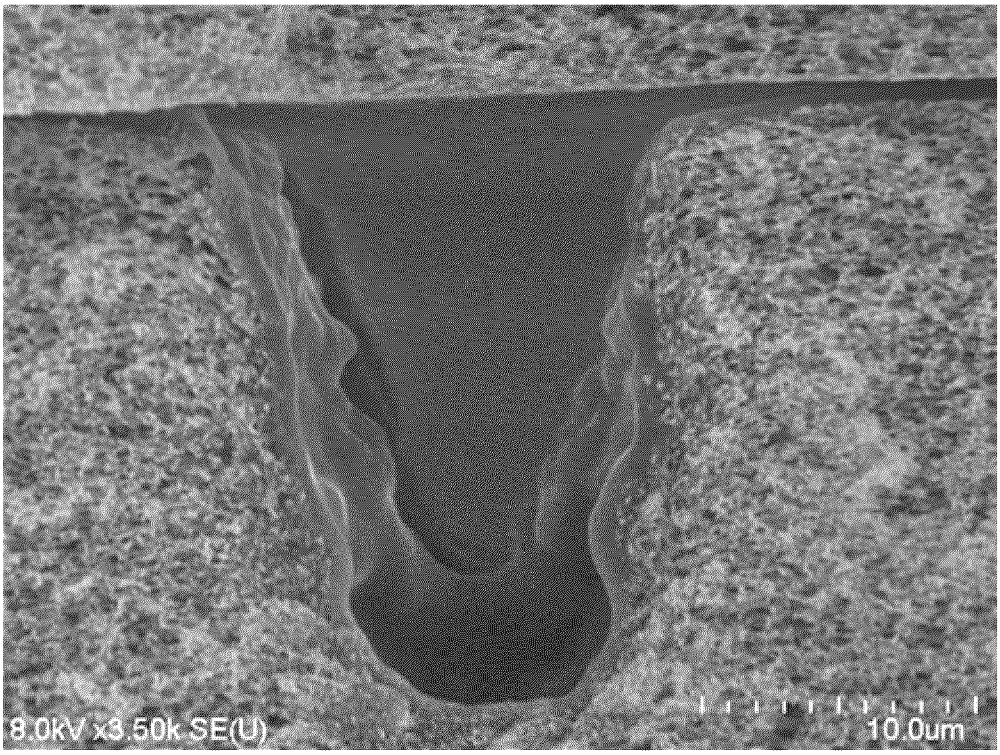

Fig.68

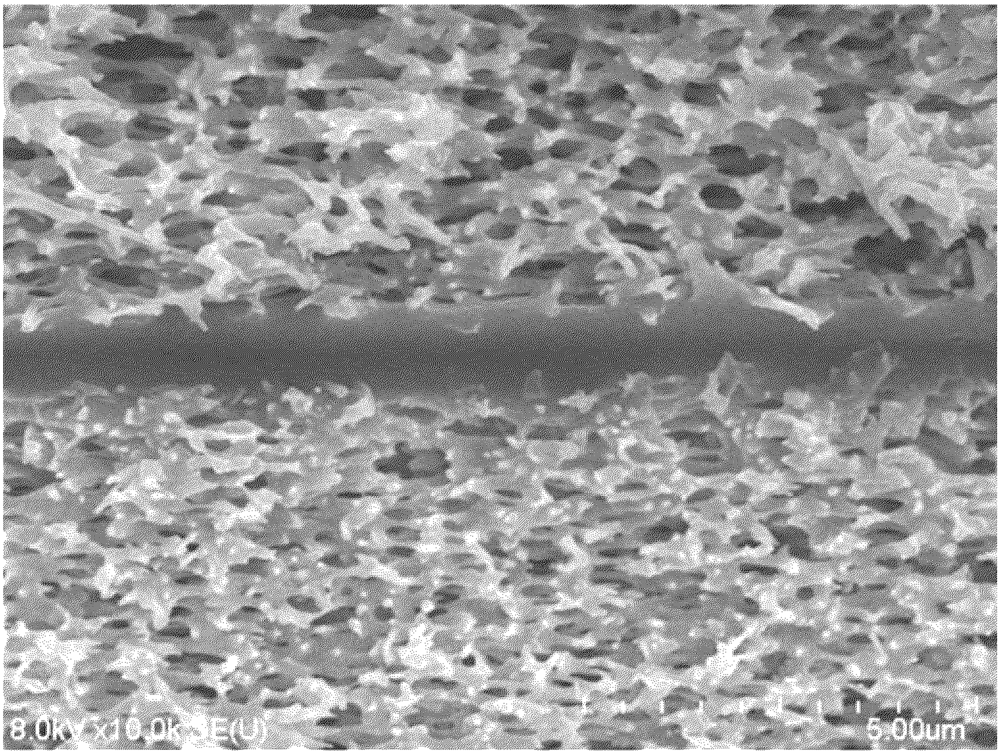

Fig.69

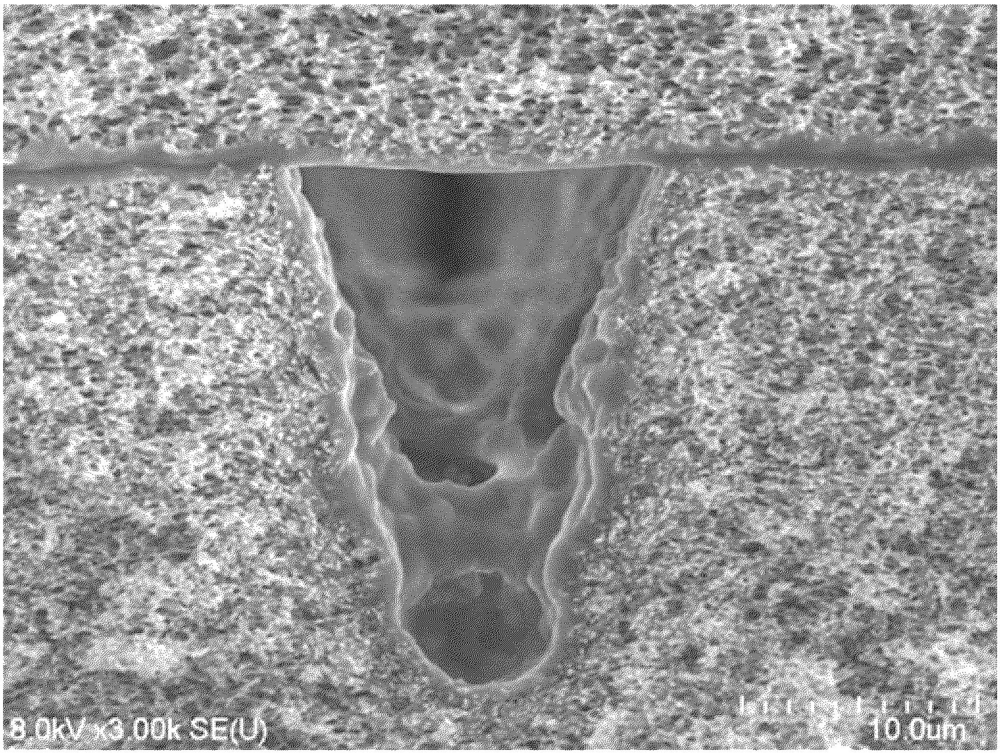

Fig.70

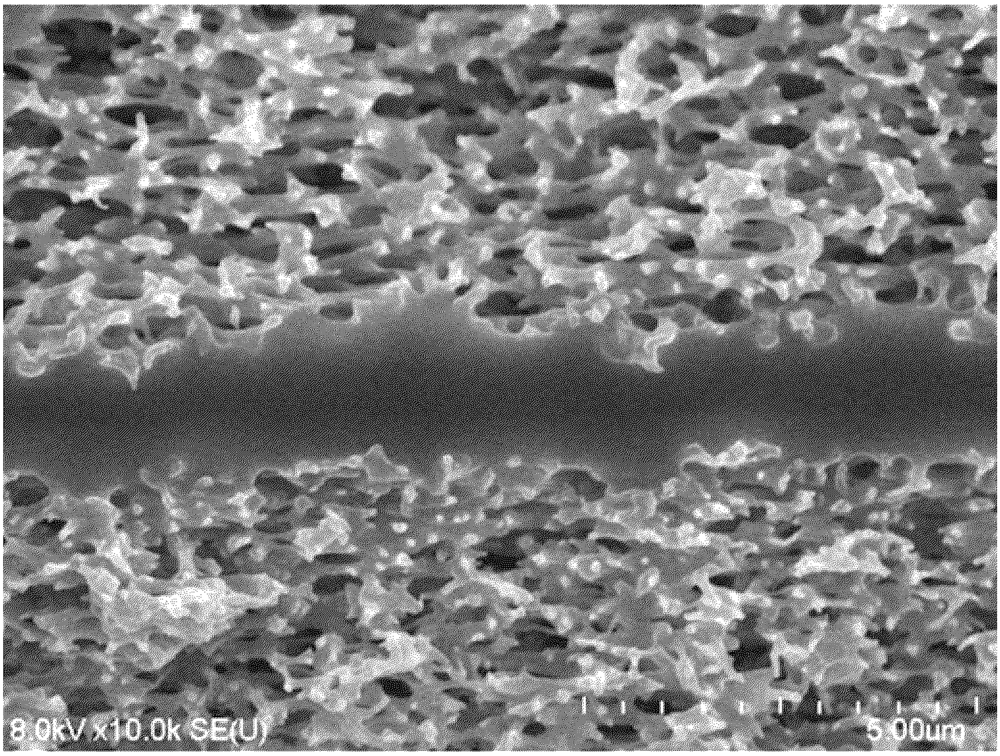

**INTERNATIONAL SEARCH REPORT**

International application No. PCT/JP2020/033455

A. CLASSIFICATION OF SUBJECT MATTER

B01D 69/00(2006.01)i; B01D 69/04(2006.01)i; B01D 69/06(2006.01)i; B01D 69/08(2006.01)i; B01D 69/10(2006.01)i; B01D 69/12(2006.01)i; B01D 71/02(2006.01)i; B01D 71/04(2006.01)i; B01D 71/18(2006.01)i; B01D 71/20(2006.01)i; B01D 71/26(2006.01)i; B01D 71/34(2006.01)i; B01D 71/36(2006.01)i; B01D 71/38(2006.01)i; B01D 71/40(2006.01)i; B01D 71/50(2006.01)i; B01D 71/56(2006.01)i; B01D 71/60(2006.01)i; B01D 71/64(2006.01)i; B01D 71/68(2006.01)i; B32B 5/24(2006.01)i; C08F 220/18(2006.01)i

FI: B01D69/00; B01D71/68; B01D71/50; B01D71/20; B01D71/26; B01D71/36; B01D71/34; B01D71/18; B01D71/64; B01D71/04; B01D71/02; B01D71/40; B01D69/10; B01D69/12; B01D69/08; B01D69/04; B01D69/06; B01D71/38; B01D71/56; B01D71/60; B32B5/24 101; C08F220/18

According to International Patent Classification (IPC) or to both national classification and IPC

B. FIELDS SEARCHED

Minimum documentation searched (classification system followed by classification symbols)

B01D69/00; B01D69/04; B01D69/06; B01D69/08; B01D69/10; B01D69/12; B01D71/02; B01D71/04; B01D71/18; B01D71/20; B01D71/26; B01D71/34; B01D71/36; B01D71/38; B01D71/40; B01D71/50; B01D71/56; B01D71/60; B01D71/64; B01D71/68; B32B5/24; C08F220/18

Documentation searched other than minimum documentation to the extent that such documents are included in the fields searched

| | |
|---|---|
| Published examined utility model applications of Japan | 1922-1996 |
| Published unexamined utility model applications of Japan | 1971-2020 |
| Registered utility model specifications of Japan | 1996-2020 |
| Published registered utility model applications of Japan | 1994-2020 |

Electronic data base consulted during the international search (name of data base and, where practicable, search terms used)

JSTPlus/JMEDPlus/JST7580 (JDreamIII); Japio-GPG/FX

C. DOCUMENTS CONSIDERED TO BE RELEVANT

| Category* | Citation of document, with indication, where appropriate, of the relevant passages | Relevant to claim No. |
|---|---|---|
| X<br>Y | JP 2004-283871 A (NITTO DENKO CORP.) 14 October 2004 (2004-10-14) paragraphs [0001]-[0066], fig. 1-6 | 1-9, 15-29, 32-35<br>2-9, 30-31 |

☒ Further documents are listed in the continuation of Box C. ☒ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| 21 October 2020 (21.10.2020) | 01 December 2020 (01.12.2020) |

| Name and mailing address of the ISA/ | Authorized officer |
|---|---|
| Japan Patent Office<br>3-4-3, Kasumigaseki, Chiyoda-ku,<br>Tokyo 100-8915, Japan | Telephone No. |

Form PCT/ISA/210 (second sheet) (January 2015)

**INTERNATIONAL SEARCH REPORT**

International application No.
PCT/JP2020/033455

C (Continuation). DOCUMENTS CONSIDERED TO BE RELEVANT

| Category* | Citation of document, with indication, where appropriate, of the relevant passages | Relevant to claim No. |
|---|---|---|
| X<br>Y | WO 2017/017948 A1 (NITTO DENKO CORP.) 02 February 2017 (2017-02-02) paragraphs [0013]-[0042] | 1-9, 15-29, 32-35<br>2-9, 30-31 |
| X<br>Y | US 2004/0256769 A1 (WALTER, James Todd) 23 December 2004 (2004-12-23) paragraphs [0032]-[0065], fig. 1-10 | 1-9, 15-29, 32-35<br>2-9, 30-31 |
| X<br>Y | JP 2004-305911 A (SEIKO EPSON CORP.) 04 November 2004 (2004-11-04) paragraphs [0005]-[0023], fig. 1-7 | 1-9, 15-29, 32-35<br>2-9, 30-31 |
| X<br>Y | JP 2008-062298 A (UKON LLC) 21 March 2008 (2008-03-21) Detailed description of the invention, fig. 1-5 | 1-9, 15-29, 32-35<br>2-9, 30-31 |
| X<br>Y | WO 2016/136048 A1 (MITSUBISHI HEAVY INDUSTRIES, LTD.) 01 September 2016 (2016-09-01) paragraphs [0014]-[0050], fig. 1-12 | 1, 15-29, 32-35<br>2-9, 30-31, 36-42 |
| X<br>Y | JP 53-049893 A (YOSHIDA, Fumitake) 06 May 1978 (1978-05-06) Detailed description of the invention, fig. 1-6 | 1, 15-29, 32-35<br>2-9, 30-31 |
| X<br>Y | WO 2015/022832 A1 (FUJIFILM CORPORATION) 19 February 2015 (2015-02-19) paragraphs [0019]-[0169], fig. 1-8 | 1, 15-29, 32-35<br>2-9, 30-31, 36-42 |
| Y<br>A | WO 2017/146231 A1 (KYUSHU UNIVERSITY) 31 August 2017 (2017-08-31) paragraphs [0060]-[0065], fig. 1, 3 | 30-31<br>1-29 |

Form PCT/ISA/210 (continuation of second sheet) (January 2015)

**INTERNATIONAL SEARCH REPORT**
Information on patent family members

International application No.
PCT/JP2020/033455

| Patent Documents referred in the Report | Publication Date | Patent Family | Publication Date |
|---|---|---|---|
| JP 2004-283871 A | 14 Oct. 2004 | (Family: none) | |
| WO 2017/017948 A1 | 02 Feb. 2017 | US 2018/0193787 A1 paragraphs [0017]-[0049] CN 107847838 A TW 201718072 A | |
| US 2004/0256769 A1 | 23 Dec. 2004 | US 6780497 B1 columns 3-10, fig. 1-10 US 2009/0258960 A1 | |
| JP 2004-305911 A | 04 Nov. 2004 | (Family: none) | |
| JP 2008-062298 A | 21 Mar. 2008 | (Family: none) | |
| WO 2016/136048 A1 | 01 Sep. 2016 | (Family: none) | |
| JP 53-049893 A | 06 May 1978 | (Family: none) | |
| WO 2015/022832 A1 | 19 Feb. 2015 | US 2016/0136581 A1 paragraphs [0040]-[0369], fig. 1-8 CN 105451864 A TW 201505702 A | |
| WO 2017/146231 A1 | 31 Aug. 2017 | US 2019/0083943 A1 paragraphs [0235]-[0238], fig. 1, 3 EP 3421118 A1 | |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Non-patent literature cited in the description


- **ITO KEIKO.** Ablation Characteristic of Macromolecular Material by Short-Pulse Laser Having Different Wavelengths. *Japanese Journal of Polymer Science and Technology,* November 1991, vol. 48 (11), 725-735
- **LAURA VOGELAAR et al.** Phase Separation Micromolding: A New Generic Approach for Microstructuring Various Materials. *small,* 2005, vol. 1 (6), 645-655
- **Y. HOSHINO ; M. MORIBE ; N. GONDO ; T. JIBIKI ; M. NAKAMOTO ; B. GUO ; R. ADACHI ; Y. MIURA.** *ACS Applied Polymer Materials,* 2020, vol. 2, 505